# EUROPÄISCHE PATENTSCHRIFT

(11) **EP 3 105 239 B1**
(45) Veröffentlichungstag und Bekanntmachung des Hinweises auf die Patenterteilung: **14.03.2018**
(21) Anmeldenummer: 15700650.3
(22) Anmeldetag: 12.01.2015
(51) Int. Cl.: C07F 9/6574

(54) **VERFAHREN ZUR REDUZIERUNG DES CHLORGEHALTS VON ORGANOBISPHOSPHITEN**
METHOD FOR REDUCING THE CHLORINE CONTENT OF ORGANOBISPHOSPHITES
PROCÉDÉ DE RÉDUCTION DE LA TENEUR EN CHLORE DANS DES ORGANOBISPHOSPHITES

(30) Priorität: 12.02.2014 DE 102014202500
(43) Veröffentlichungstag der Anmeldung: 21.12.2016
(73) Patentinhaber: Evonik Degussa GmbH, 45128 Essen (DE)
(72) Erfinder: DYBALLA, Katrin Marie, 45657 Recklinghausen (DE); FRANKE, Robert, 45772 Marl (DE)
(86) Internationale Anmeldenummer: PCT/EP2015/050385
(87) Internationale Veröffentlichungsnummer: WO 2015/121007

(56) Entgegenhaltungen:
- WO-A1-2013/098368

## Beschreibung

Die Erfindung betrifft ein universell einsetzbares Verfahren zur Reduzierung des Chlorgehalts von Organobisphosphiten.

Organophosphorverbindungen haben wegen ihres breiten Anwendungsbereiches eine erhebliche industrielle Bedeutung erlangt. Sie werden unmittelbar als Weichmacher, Flammschutzmittel, UV-Stabilisatoren oder als Antioxidantien eingesetzt. Darüber hinaus stellen sie wichtige Zwischenprodukte bei der Herstellung von Fungiziden, Herbiziden, Insektiziden und Pharmazeutika dar.

Ein spezielles Anwendungsgebiet der Organophosphorverbindungen ist die Katalyse:
So werden insbesondere Phosphine, Phosphite und Phosphoramidite als Liganden in Katalysatorkomplexen verwendet, die wiederum zur homogenen Katalyse von großindustriell betriebenen Prozessen verwendet werden. Dabei ist insbesondere die Hydroformylierung von ungesättigten Verbindungen mit Kohlenmonoxid und Wasserstoff zu nennen, die in der Regel in Gegenwart eines homogenen Katalysatorsystems erfolgt, welches ein Metall sowie mindestens eine Organophosphorverbindung als Ligand aufweist.

Eine Einführung in die homogen katalysierte Hydroformylierung bieten: B. CORNILS, W. A. HERRMANN: Applied Homogeneous Catalysis with Organometallic Compounds. Vol. 1 & 2, VCH, Weinheim, New York, 1996; R. Franke, D. Selent, A. Börner: Applied Hydroformylation. Chem. Rev., 2012, DOI:10.1021/cr3001803

Die Synthese phosphorhaltiger Liganden ist in der Literatur mehrfach beschrieben. Einen guten Überblick findet man in: "Phosphorous(III) Ligands in Homogeneous Catalysis - Design and Synthesis" von Paul C.J. Kamer und Piet W.N.M. van Leeuwen; John Wiley and Sons, 2012.

Bei der Synthese dieser Liganden werden häufig chlorhaltige Reagenzien verwendet. So wird bei der Synthese von Phosphitliganden meist Phosphortrichlorid (PCl₃) eingesetzt.
Die bei der Herstellung von Organophosphorverbindungen eingesetzten Chlorverbindungen bereiten bei der bestimmungsgemäßen Verwendung bzw. Weiterverarbeitung der Organophosphorverbindung vielerlei Schwierigkeiten:
So wird die gewünschte Organophosphorverbindung niemals sofort rein, sondern stets verunreinigt als ein Organophosphorprodukt erhalten, welches neben der gewünschten Organophosphorverbindung auch Verunreinigungen enthält. Bei den Verunreinigungen handelt es sich um nicht oder unvollständig umgesetzten Reagenzien, um Hilfsstoffe oder um Produkte aus Nebenreaktionen. Dabei bereiten insbesondere Verunreinigungen in Form von Chlorverbindungen Schwierigkeiten:
   Gelangen die chlorhaltigen Verunreinigungen zusammen mit der als Ligand verwendeten Organophosphorverbindung in einen stählernen Druckreaktor, so ist dieser durch das Chlorid erhöhter Korrosion ausgesetzt. Dies gilt ganz besonders für kontinuierlich betriebene Prozesse, bei denen die Organophosphorverbindungen im Laufe der Reaktion nachdosiert wird. Dies ist beispielsweise bei der Verwendung der Organophosphorverbindung als Ligand in der großtechnischen Hydroformylierung der Fall. Durch die Nachdosierung kommt es zwangsläufig auch zu einer Akkumulation der Nebenkomponenten im Reaktor. Dies ist insbesondere dann kritisch, wenn Chlorid eine der Nebenkomponenten darstellt, da Chlorid selbst rostfreie Stähle angreift (vgl. Merkblatt 893 "Edelstahl rostfrei für die Wasserwirtschaft", 1. Auflage 2007, Hrsg. Informationsstelle Edelstahl Rostfrei, Düsseldorf.)

In Anwesenheit von Chloridionen droht insbesondere eine Spannungsrisskorrosion, welche im günstigeren Fall zu einer vorzeitigen Abstellung des Prozesses und zur Überholung des Reaktors führt, im ungünstigsten Fall aber auch ein Bersten des Reaktors zur Folge haben kann. Es ist daher von eminenter Bedeutung, ein Einschleppen von chlorhaltigen Verbindungen über das organophosphorhaltige Katalysatorsystem zu unterbinden.

Eine wichtige Klasse der Organophosphorverbindungen sind die Organobisphosphite oder kurz Bisphospite genannt.
In der Hydroformylierung spielen diese eine herausragende Rolle (siehe R. Franke, D. Selent, A. Börner: Applied Hydroformylation. Chem. Rev., 2012, DOI:10.1021/cr3001803).

Es ist daher wichtig, einen Herstellungs- und Aufreinigungsprozess für Organobisphosphite zu entwickeln, der die entsprechenden Liganden mit geringem Chloridgehalt bereitstellt.
Dieses Verfahren sollte auf möglichst viele Organobisphosphite anwendbar sein, da die Problematik des Chlors bei jedem Liganden eine elementare Rolle spielt, bevor er in einer großtechnischen Anlage eingesetzt werden kann.

Der Chloridgehalt lässt sich analytisch einfach bestimmen; zum Beispiel durch wässrige Titration. Weitreichender ist die Bestimmung des Gesamtchlorgehalts, der neben den Chloriden auch anderweitig gebundenes Chlor umfasst. Ein Abstellen auf den Gesamtchlorgehalt ist auch insoweit sachdienlich, als nicht ausgeschlossen werden kann, dass auch anderweitig gebundenes Chlor den Reaktor zu schädigen vermag. Bei der Bemessung der Grenzwerte für Gesamtchlor bleibt aber der Chloridanteil maßgeblich.

Ein geeignetes Verfahren zur Bestimmung des Gesamtchlorgehalts ist die Verbrennung nach Wickbold mit Probenvorbereitung nach DIN 51408 und Messung per lonenchromatographie nach DIN EN ISO 10304.

In der Patentliteratur sind verschiedene Methoden zur Reduktion des Gesamtchlorgehalts von Organophosphor-Liganden in Anschluss an die eigentliche Synthese bekannt:
In DE 10 2011 002 640 A1 wird ein Verfahren zur Aufreinigung von Biphephos (6,6'-[(3,3'-Di-tert-butyl-5,5'-dimethoxy-1,1'-biphenyl-2,2'diyl)bis(oxy)]bis(dibenzo[d,f][1,3,2]dioxaphosphepin)) beschrieben. Mit dem dort beschriebenen Verfahren soll der Chlorgehalt von Biphephos reduziert werden. Dies erfolgt dadurch, dass das Biphephos mit einem Lösungsmittel ausgewählt aus Ethylacetat, Anisol, ortho-Xylol, Toluol, Aceton, 2-Propanol und C₅-C₁₀-Alkane ausgewaschen oder aus einem solchen Lösungsmittel umkristallisiert wird.

Hierbei ist jedoch die lange Zeit, die zum Ausfallen bzw. Auskristallisieren des Produktes notwendig ist, verbesserungswürdig. Das Ausfallen des Liganden erfolgt über Nacht, also benötigt man >8 Stunden. Ferner wird in den Beispielen darauf verwiesen, dass im Anschluss an die Fällung über Nacht, erneut ein Lösungsmittel zugegeben werden muss, um die Ausfällung zu komplementieren (Beispiel 2). Diese langen Reaktionszeiten sind bei großtechnischen Synthesen problematisch, da lange Verweilzeiten und damit letztlich lange Produktionszeiten für den Liganden zu einer Verteuerung desselbigen führen.

Die Schrift EP 0 285 136 beansprucht ein Verfahren zur Reinigung von tertiären Organophosphiten von fünfwertigen Organophosphor-Verbindungen, die als Nebenprodukte der Synthese oder auch als Abbau- bzw. Hydrolyseprodukte der tertiären Organophosphite entstehen. Das Verfahren sieht eine Behandlung des gelösten verunreinigten Organophosphits mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen, eingesetzt.
Ein Nachteil des beanspruchten Verfahrens liegt in der Behandlung mit Wasser. Nicht nur die zu entfernenden Verunreinigungen, sondern auch die tertiären Organophosphite selbst reagieren unter den genannten Bedingungen, so dass, je nach Hydrolysestabilität der Organophosphite, ein Teil des Wertprodukts verloren geht.
Die Schrift DE 10 2004 049 339 beschreibt ein Verfahren zur Reinigung von phosphorhaltigen Chelatliganden mittels Extraktion unter Verwendung eines polaren Extraktionsmittels. Der Rohligand wurde hierbei sechsmal mit einem polaren Lösungsmittel extrahiert und weist im Anschluss einen Gehalt an Aminbase, Aminhydrochlorid oder deren Gemischen von weniger als 100 ppm auf. Bei dieser Art der Aufreinigung sind jedoch enorme Mengen an Lösungsmittel notwendig, was aus ökonomischer und ökologischer Sicht verbesserungswürdig ist.
Aus CN 101684130 A ist die Aufreinigung von Phosphitliganden durch den Zusatz von entionisiertem Wasser und der anschließenden Extraktion bekannt. Das organische Lösungsmittel wird in einem folgenden Schritt destillativ entfernt und das Rohprodukt erneut umkristallisiert. Auf diesem Wege konnte ein Produkt mit einem Rest-Chlorgehalt von 0,01 Gewichts-% Chlor erhalten werden.
Um mit dieser Methode den Chlorgehalt des Liganden zu reduzieren, sind somit eine Extraktion und eine anschließende Umkristallisation notwendig. Das bedeutet, dass viel Lösungsmittel eingesetzt werden muss und Ausbeuteverluste aufgrund der verschiedenen Reinigungsschritte und der ggf. nicht vorhandenen Hydrolysestabilität der Organophosphite ein Teil des Wertprodukts verloren geht.

WO2013098368 betrifft ein Verfahren zur Reinigung von organischen Diphosphitverbindungen.
Aufgabe der vorliegenden Erfindung war es nun, ein Aufreinigungsverfahren für Organobisphosphite zu entwickeln, bei dem der Chlorgehalt reduziert wird, ohne dass dies Verfahren die zuvor beschriebenen Nachteile aufweist.
Insbesondere bestand die Aufgabe darin mit dem Verfahren Organobisphosphite mit einem Chlorgehalt von 1.500 ppm bis 100.000 ppm im Organobisphosphit auf einen Chlorgehalt von weniger als 350 ppm im Organobisphosphite aufzureinigen. Vorzugsweise sollte der Chlorgehalt auf weniger als 300 ppm im Organobisphosphit, und besonders bevorzugt auf weniger als 200 ppm im Organobisphosphit reduziert werden. Die angegebenen Chlorgehalte verstehen sich als Gesamtchlorgehalte.

Das verunreinigte Organobisphosphit kann nämlich organische Chloride und/oder anorganische Chloride enthalten. Organische Chloride enthalten mindestens ein Kohlenstoffatom, währenddessen anorganische Chloride kein Kohlenstoff aufweisen. Verschmutzungen des Organophosphorprodukts durch die folgenden Chloride sind besonders wahrscheinlich, da diese chlorhaltigen Verbindungen entweder bei der Synthese von Organophosphorverbindungen benötigt werden oder als Nebenprodukte unvermeidlich anfallen:
Phosphortrichlorid, Chlorophosphite, Dichlorophosphite, Hydrochloride von Aminen, Hydrochloride von Alkalimetallen, Chloride von Erdalkalimetallen, chlorhaltige Säuren erhältlich aus der Hydrolyse von Phosphortrichlorid.

Deshalb weist das verunreinigte Organobisphosphit in der Regel mindestens eines der aufgezählten Chloride auf.

Des Weiteren soll das Reinigungsverfahren aufgrund der Hydrolyseinstabilität der Organobisphosphite auf die Verwendung von Wasser verzichten.

Gelöst wird diese Aufgabe durch ein Verfahren gemäß Anspruch 1.

Verfahren zur Reduktion des Chlorgehalts in einem Organobisphosphit einer der allgemeinen Formeln **I, II, III, IV, V** oder **VI:** 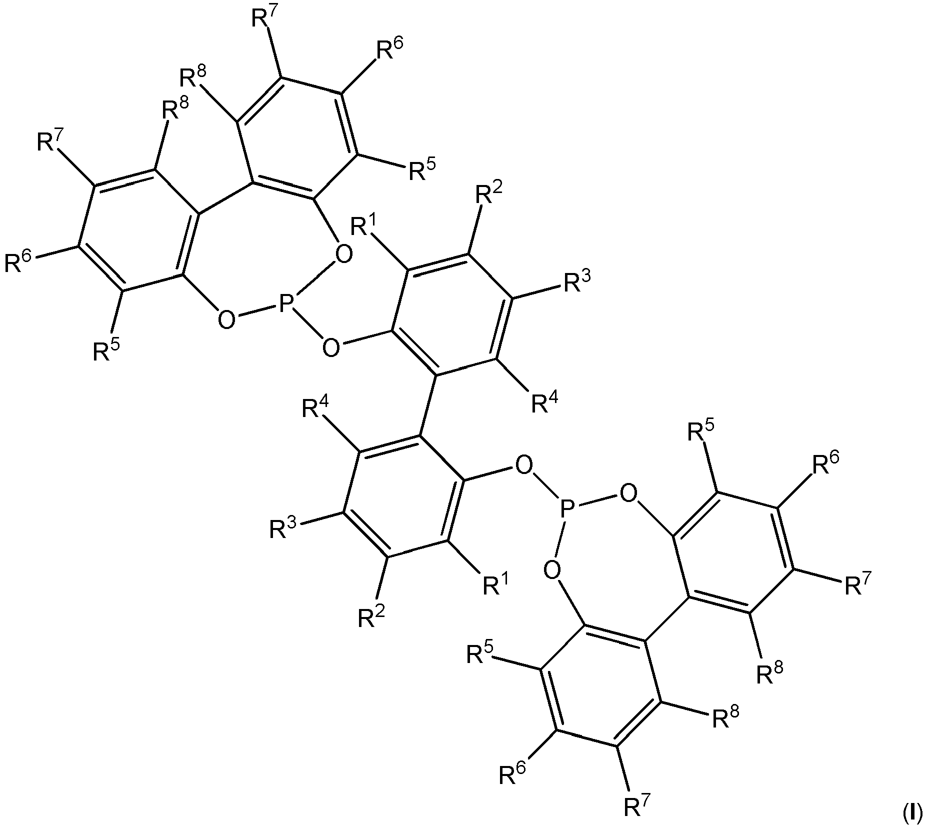 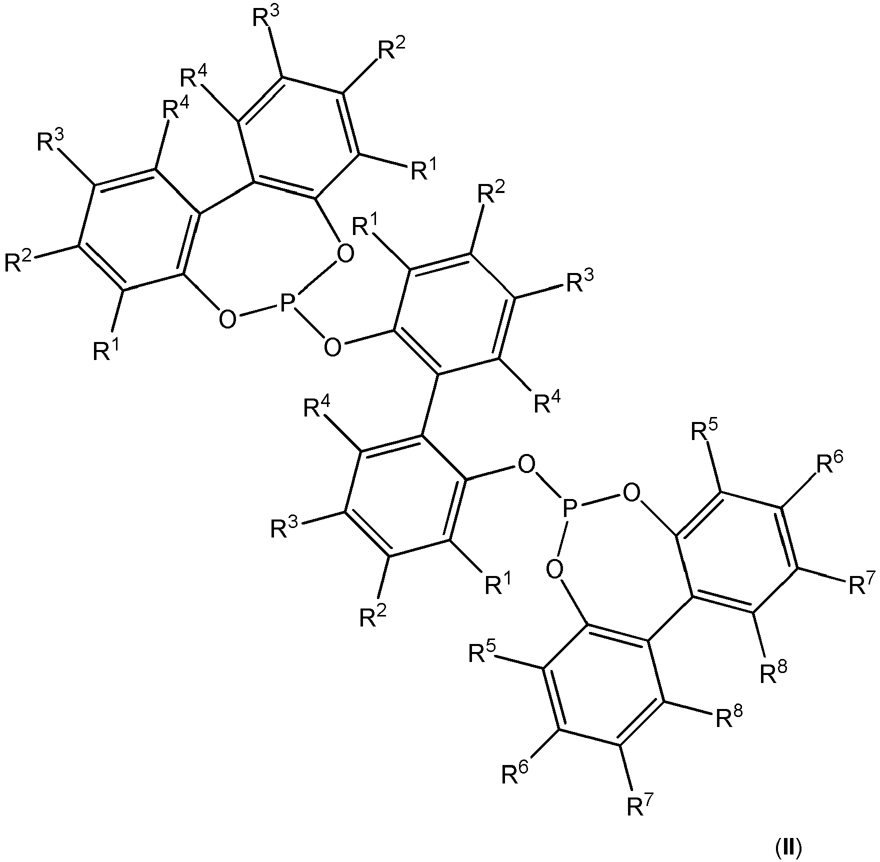 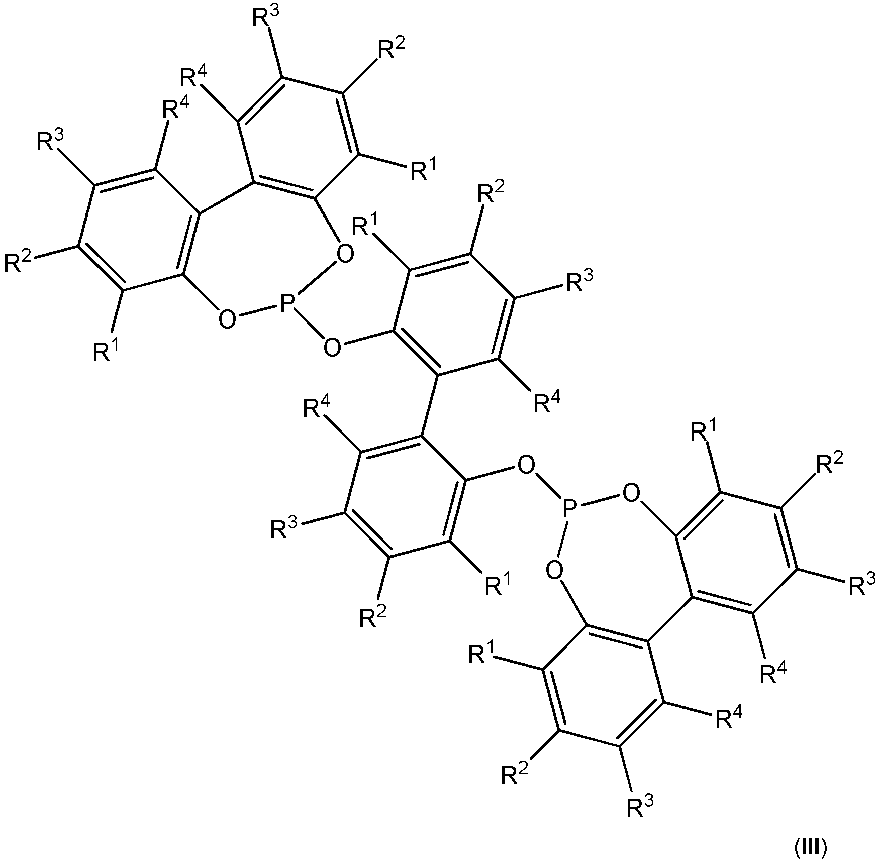 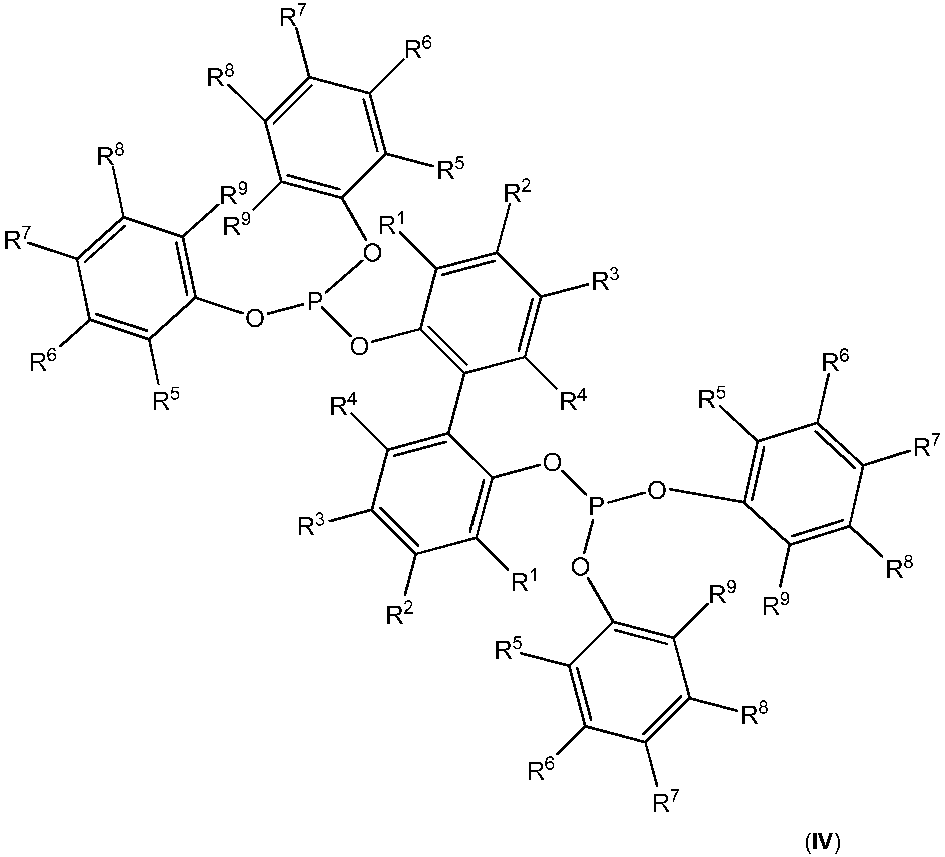 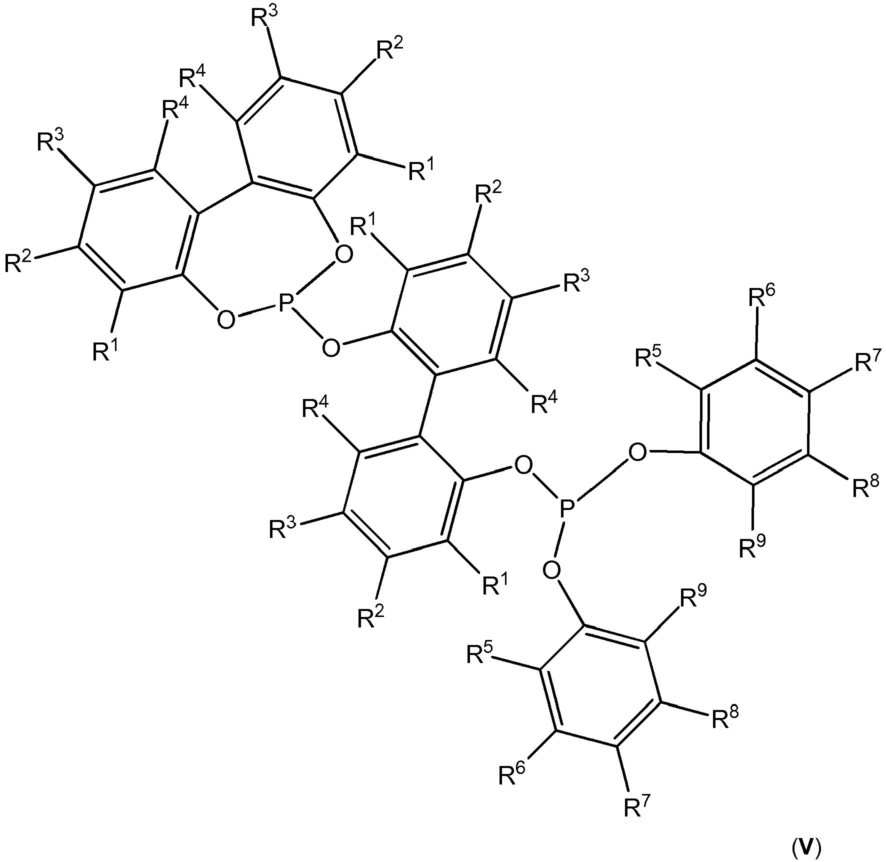 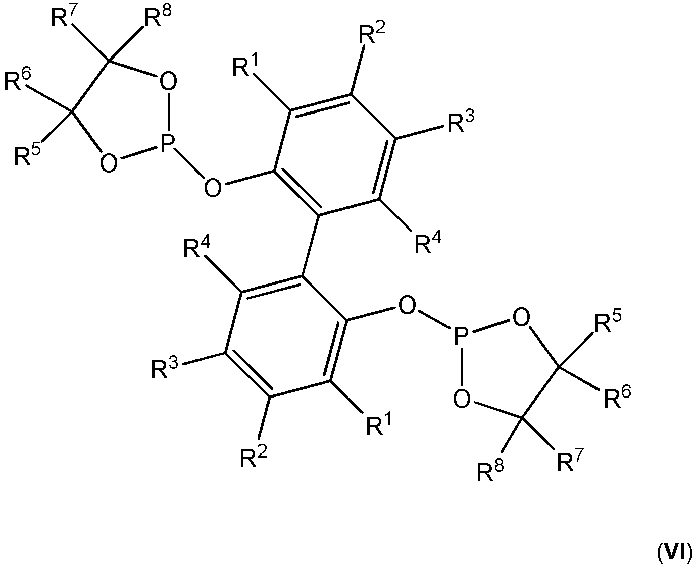 wobei
R¹, R², R³, R⁴, R⁵, R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₆)-Aryl, -(C₆-C₂₀)-Aryl, Halogen, -COO-(C₁-C₁₂)-Alkyl,-CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H, -SO₃Na, -NO₂, -CN, -NH₂, -N[(C₁-C₁₂)-Alkyl]₂;
und die folgenden vier Restepaarungen nicht gleichzeitig alle vier paarweise für den gleichen Rest stehen:
   R¹ und R⁵, R² und R⁶, R³ und R⁷, R⁴ und R⁸;
   umfassend die Verfahrensschritte:
      a) teilweises oder vollständiges auflösen des Organobisphosphits in einer ersten Lösung,
      b) einbringen der ersten Lösung in eine zweite Lösung, wodurch das aufgereinigte Organobisphosphit ausgefällt wird,
      wobei
   die erste Lösung ein erstes Lösungsmittel und eine erste Base umfasst,
   und die zweite Lösung ein zweites Lösungsmittel und eine zweite Base umfasst,
      und
   das erste Lösungsmittel ausgewählt ist aus:
      Aromaten, Alkohole, Aceton, Ethylacetat, Acetonitril, Ether,
   das zweite Lösungsmittel ausgewählt ist aus:
      Aromaten, C5-C10-Alkane, Alkohole, Aceton, Ethylacetat, Acetonitril, Ether,
   die erste Base ausgewählt ist aus:
      Aminbasen, Alkoholate, Pyridin, Pyridinderivate, *N*-Methyl-2-pyrrolidon, Triethanolamin, die zweite Base ausgewählt ist aus:
   Aminbasen, Alkoholate, Pyridin, Pyridinderivate, *N*-Methyl-2-pyrrolidon,Triethanolamin,
   und sich das Organobisphosphit im ersten Lösungsmittel besser löst als im zweiten Lösungsmittel.

Von den vier Restepaarungen R¹ und R⁵, R² und R⁶, R³ und R⁷, R⁴ und R⁸ können bis zu drei Paarungen jeweils paarweise für den gleichen Rest stehen, soweit in der verbleibenden Paarung die beiden Reste nicht gleich sind.
So sind beispielsweise die folgenden Restekombinationen möglich:
R¹ = R⁵, R² = R⁶, R³ = R⁷, R⁴ und R⁸ sind verschieden oder
R¹ und R⁵ sind verschieden, R² = R⁶, R³ = R⁷, R⁴ = R⁸ oder
R¹ und R⁵ sind verschieden, R² = R⁶, R³ = R⁷, R⁴ und R⁸ sind verschieden oder
R¹ und R⁵ sind verschieden, R² und R⁶ sind verschieden, R³ und R⁷ sind verschieden, R⁴ und R⁸ sind verschieden.

Ausgeschlossen ist lediglich die folgende Restekombination:
R¹ = R⁵, R² = R⁶, R³ = R⁷, R⁴ = R⁸.

Aus der Voraussetzung, dass sich das Organobisphosphit im ersten Lösungsmittel besser löst als im zweiten Lösungsmittel, ergibt sich, dass das erste Lösungsmittel nicht identisch mit dem zweiten Lösungsmittel sein kann.

(C₁-C₁₂)-Alkyl und O-(C₁-C₁₂)-Alkyl können jeweils unsubstituiert oder durch einen oder mehrere gleiche oder verschiedene Reste substituiert sein, die ausgewählt sind unter (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₃-C₁₂)-Cycloalkyl und (C₃-C₁₂)-Heterocycloalkyl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₆-C₂₀)-Aryl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Dimethylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrahydrofuryl, Tetrahydropyranyl und Dioxanyl.

Substituierte -(C₃-C₁₂)-Cycloalkylgruppen und substituierte -(C₃-C₁₂)-Heterocycloalkylgruppen können, in Abhängigkeit von ihrer Ringgröße, einen oder mehrere (z.B. 1, 2, 3, 4 oder 5) weitere Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl. Substituierte -(C₃-C₁₂)-Cycloalkylgruppen tragen vorzugsweise eine oder mehrere -(C₁-C₆)-Alkylgruppen. Substituierte -(C₃-C₁₂)-Heterocycloalkylgruppen tragen vorzugsweise eine oder mehrere -(C₁-C₆)-Alkylgruppen.

Der Ausdruck -(C₆-C₂₀)-Aryl umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Substituierte -(C₆-C₂₀)-Arylgruppen sind vorzugsweise substituierte -(C₆-C₁₀)-Arylgruppen, insbesondere substituiertes Phenyl oder substituiertes Naphthyl oder substituiertes Anthracenyl. Substituierte -(C₆-C₂₀)-Arylgruppen tragen vorzugsweise eine oder mehrere z.B. 1, 2, 3, 4 oder 5 Substituenten, ausgewählt unter -(C₁-C₁₂)-Alkylgruppen, -(C₁-C₁₂)-Alkoxygruppen.

In einer Variante des Verfahrens ist das erste Lösungsmittel ausgewählt aus: Ethylacetat, Anisol, ortho-Xylol, Toluol, Aceton, Methanol, Ethanol, Propanol, iso-Propanol, Acetonitril.

Bevorzugt ist das erste Lösungsmittel ausgewählt aus: Ethylacetat, Anisol, ortho-Xylol, Toluol.

Besonders bevorzugt ist das erste Lösungsmittel ausgewählt aus: ortho-Xylol, Toluol.

In einer Variante des Verfahrens ist das zweite Lösungsmittel ausgewählt aus:
Ethylacetat, Anisol, ortho-Xylol, Toluol, Aceton, Methanol, Ethanol, Propanol, iso-Propanol, Acetonitril, Tetrahydrofuran, Diethylether, Glykol, C5-C10-Alkane.

Bevorzugt ist das zweite Lösungsmittel ausgewählt aus: Ethylacetat, Aceton, Methanol, Ethanol, Propanol, iso-Propanol, Acetonitril, C5-C10-Alkane.

Besonders bevorzugt ist das zweite Lösungsmittel Acetonitril.

C5-C10-Alkane sind insbesondere Pentan, Hexan, n-Heptan, Octan, Nonan und Dekan. Von den Alkanen ist n-Heptan bevorzugt.

In einer Variante des Verfahrens ist die erste Base ausgewählt ist aus: Triethylamin, Dimethylaminobutan (DMAB), Pentylamin, Hexylamin, Dibutylamin, *N*-Methyl-2-pyrrolidon (NMP), Triethanolamin, Natrium-methanolat, Natrium-ethanolat, Pyridin, Dimethylaminopyridin (DMAP).

Bevorzugt ist die erste Base ausgewählt aus: Triethylamin, Dimethylaminobutan (DMAB) Natrium-methanolat, Natrium-ethanolat, Pyridin, Dimethylaminopyridin (DMAP).

Besonders bevorzugt ist die erste Base Dimethylaminobutan (DMAB).

In einer Variante des Verfahrens ist die zweite Base ausgewählt aus: Triethylamin, Dimethylaminobutan (DMAB), Pentylamin, Hexylamin, Dibutylamin, *N*-Methyl-2-pyrrolidon (NMP), Triethanolamin, Natrium-methanolat, Natrium-ethanolat, Pyridin, Dimethylaminopyridin (DMAP).

Bevorzugt ist die zweite Base ausgewählt aus: Triethylamin, Dimethylaminobutan (DMAB) Natrium-methanolat, Natrium-ethanolat, Pyridin, Dimethylaminopyridin (DMAP).

Besonders bevorzugt ist die zweite Base Dimethylaminobutan (DMAB).

In einer Variante des Verfahrens umfasst die zweite Lösung ein drittes Lösungsmittel, welches nicht mit dem zweiten Lösungsmittel identisch ist.
Das dritte Lösungsmittel kann aber identisch sein mit dem ersten Lösungsmittel.

In einer Variante des Verfahrens ist das dritte Lösungsmittel identisch mit dem ersten Lösungsmittel.

In einer Variante des Verfahrens umfasst die zweite Lösung ein drittes Lösungsmittel, welches nicht mit dem zweiten Lösungsmittel identisch ist, und das dritte Lösungsmittel ausgewählt ist aus: Aromaten, Alkohole, Aceton, Ethylacetat, Acetonitril, Ether.

In einer Variante des Verfahrens wird im Verfahrensschritt a) das Organobisphosphit vollständig in der ersten Lösung aufgelöst.

In einer Variante des Verfahrens erfolgt das Einbringen im Verfahrensschritt b) mittels Eintropfen.

In einer anderen Variante des Verfahrens erfolgt das Einbringen im Verfahrensschritt b) mittels Eindosierung.

In einer Variante des Verfahrens handelt es sich bei der erste Base und der zweite Base nicht um die gleiche Base.

In einer besonders bevorzugten Variante des Verfahrens handelt es sich bei der ersten und der zweiten Base um dieselbe Base.

In einer bevorzugten Ausführungsform des erfindungsgemäßen Verfahrens wird das Organobisphsophit, bevorzugt unter Erhitzen, in dem ersten Lösungsmittel gelöst, werden unlösliche Bestandteile durch Filtration (durch eine sogenannte Klärfiltration ggf. auch unter Zusatz eines Filterhilfsmittels), vorzugsweise bei einer Temperatur bis zu 130 °C, entfernt und wird das Organobisphosphit anschließend warm in das zweite Lösungsmittels eindosiert, sodass das Organobisphosphit ausfällt bzw. auskristallisiert.

Als Filtrationshilfsmittel können sowohl mineralische Filtrationshilfsmittel wie beispielsweise Siliziumdioxid oder organische Filtrationshilfsmittel wie beispielsweise Cellulose oder Aktivkohle verwendet werden. Es können auch unterschiedliche Filtrationshilfsmittel gemischt werden.

In einer Variante des Verfahrens weist das Organobisphosphit beim Einbringen im Verfahrensschritt b) einen Chlorgehalt von 1.500 ppm bis 100.000 ppm auf.

Vorzugsweise weist das Organobisphosphit beim Einbringen im Verfahrensschritt b) einen Chlorgehalt von 5.000 ppm bis 100.000 ppm auf.

Die angegebenen Chlorgehalte verstehen sich als Gesamtchlorgehalte.
Der Gesamtchlorgehalt wird nach Wickbold bestimmt: Probenvorbereitung nach DIN 51408 und Messung per lonenchromatographie nach DIN EN ISO 10304.

In einer Variante des Verfahrens wird die zweite Lösung auf eine Temperatur in dem Bereich von -20°C bis 120 °C erwärmt, bevor in Verfahrensschritt b) die erste Lösung in die zweite Lösung eingebracht wird. Dabei sollte die Temperatur des Lösungsmittels so gewählt werden, dass dieses nicht siedet. Die Temperatur hängt also von der Wahl des Lösungsmittels ab.

Vorzugsweise wird die zweite Lösung auf eine Temperatur in dem Bereich von -10 °C bis 80°C erwärmt, bevor in Verfahrensschritt b) die erste Lösung in die zweite Lösung eingebracht wird.

In einer Variante des Verfahrens zur Reduktion des Chlorgehalts wird ein Organobisphosphit einer der allgemeinen Formeln **I, II, IV** oder **VI:** 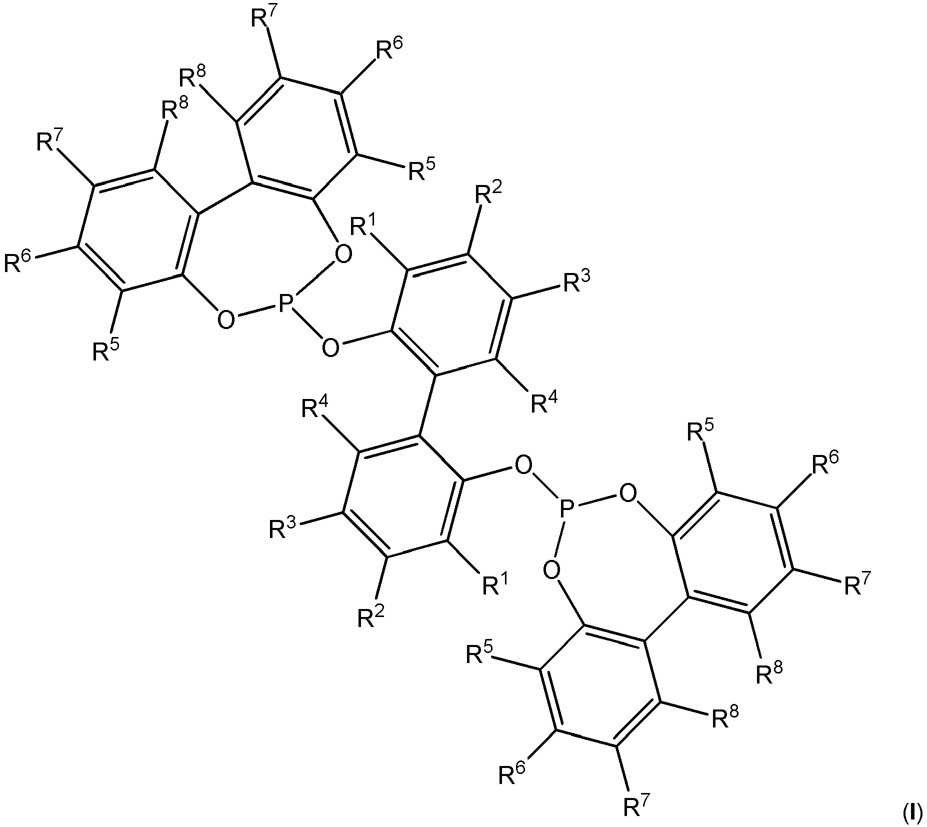 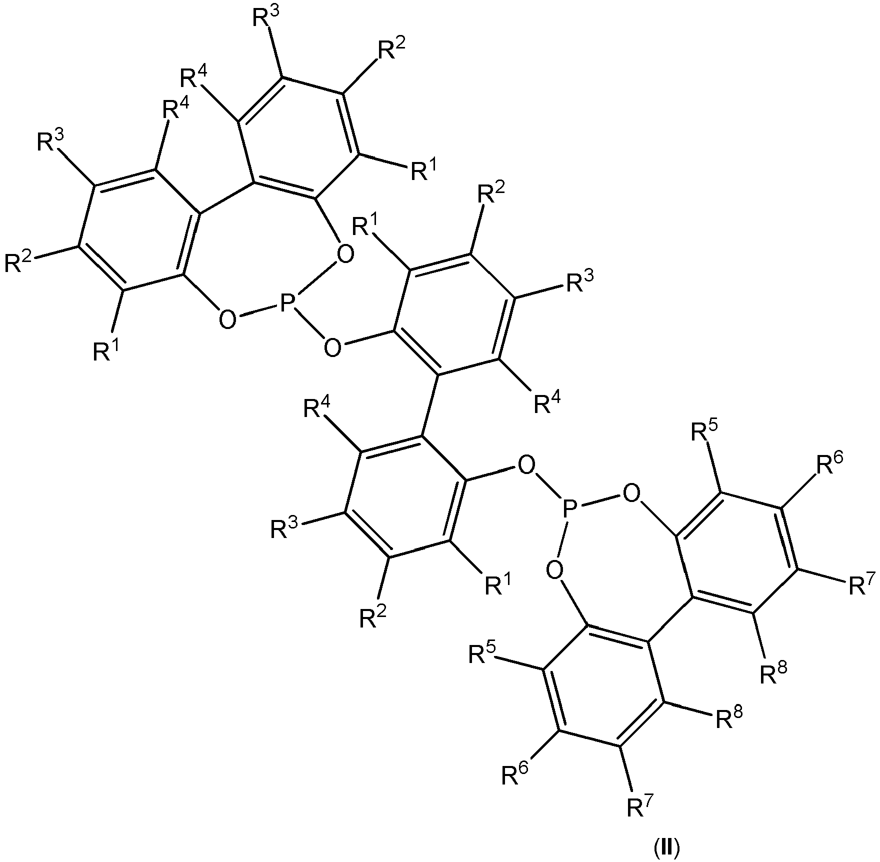 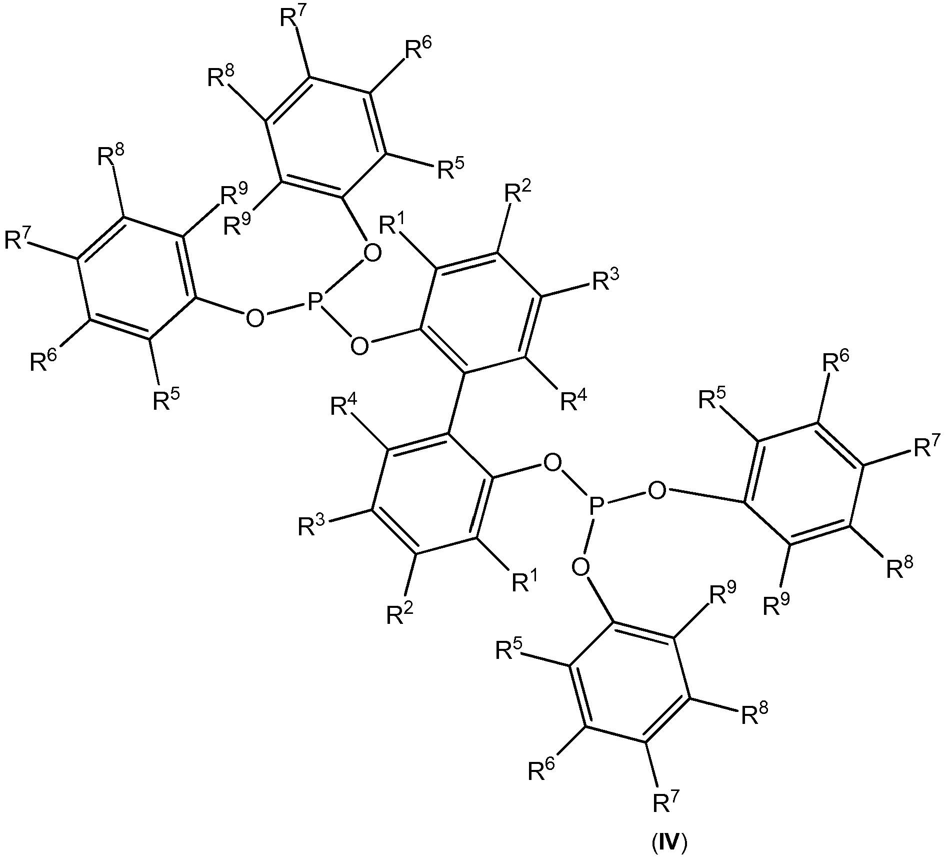 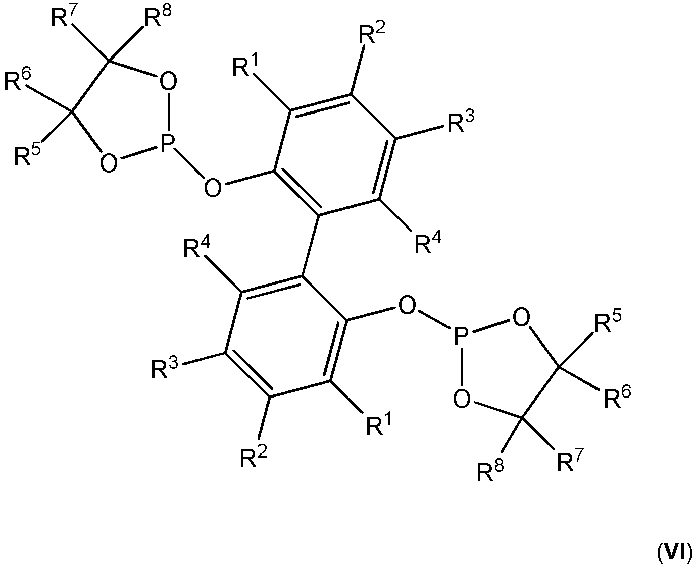 aufgereinigt, wobei die Reste der oben genannten Definition entsprechen.

In einer Variante des Verfahrens zur Reduktion des Chlorgehalts wird ein Organobisphosphit einer der allgemeinen Formeln **I, II** oder **VI:** 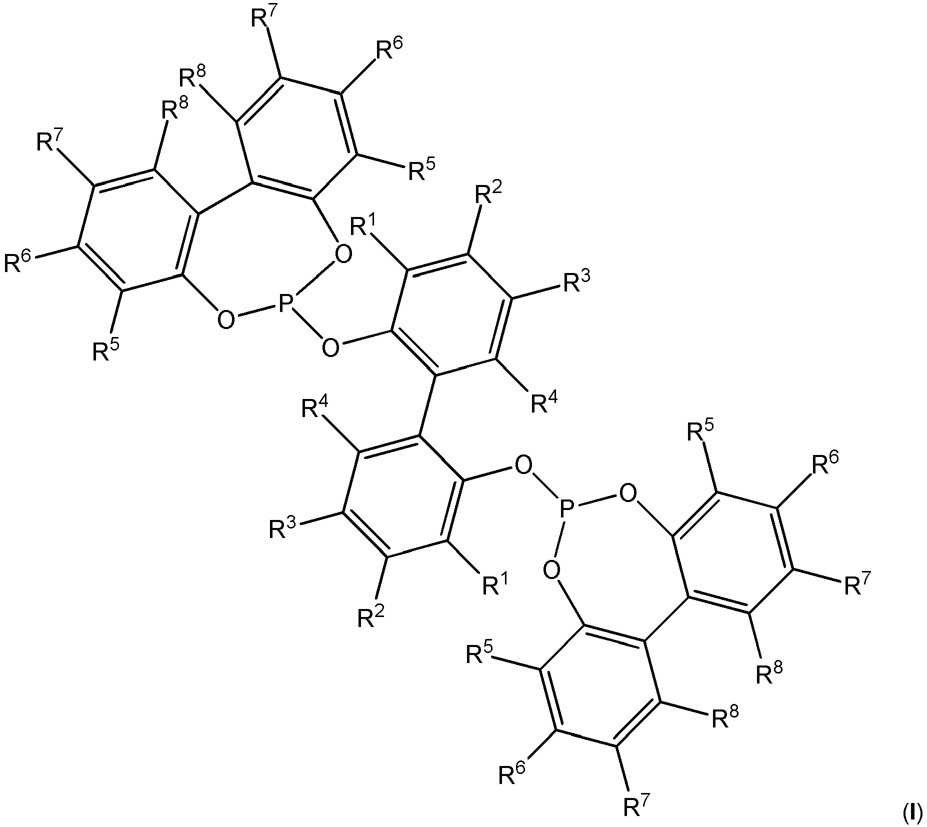 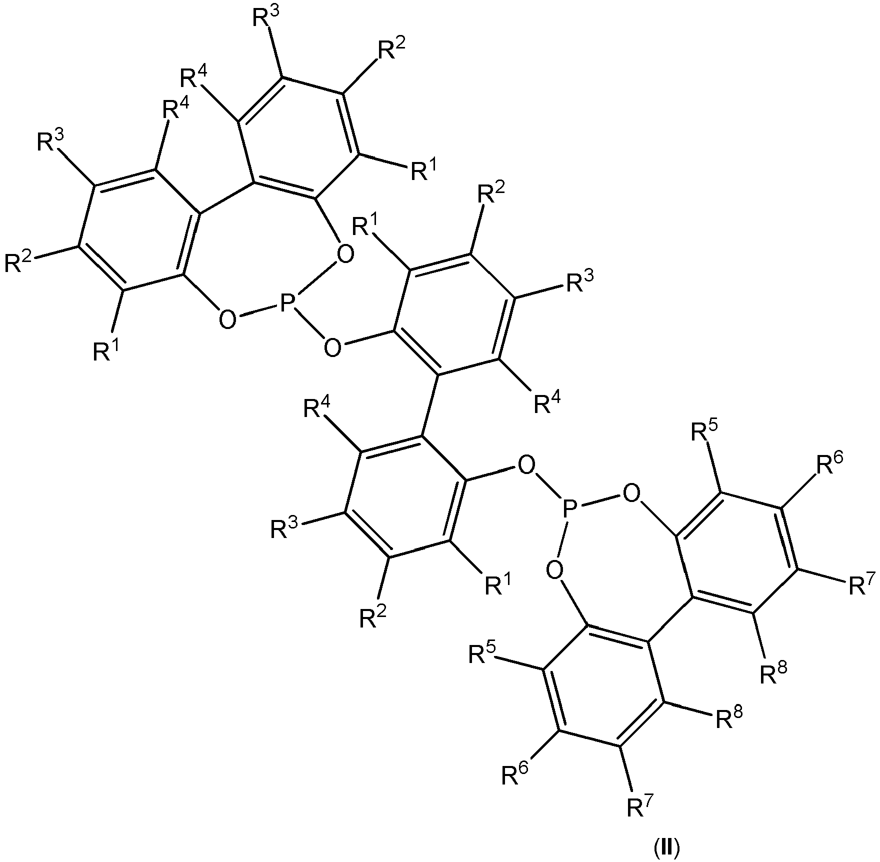 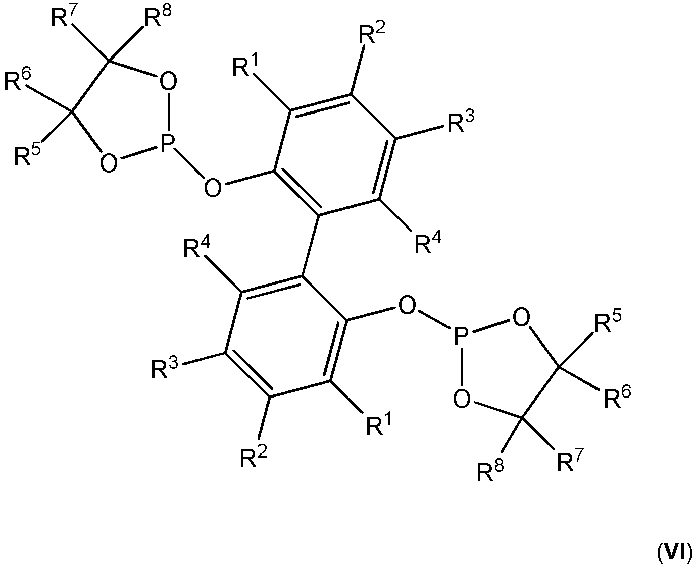 aufgereinigt, wobei die Definition der Rest der oben genannten Definition entspricht.

In einer Variante des Verfahrens zur Reduktion des Chlorgehalts wird ein Organobisphosphit einer der allgemeinen Formeln **I, II** oder **VI:** 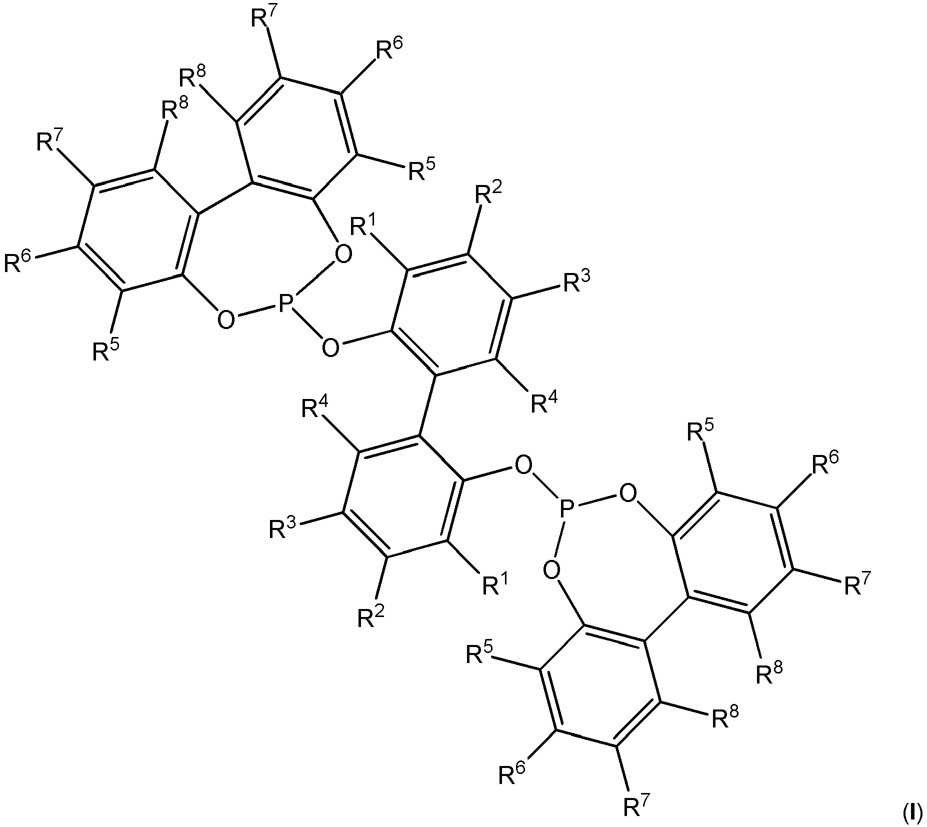 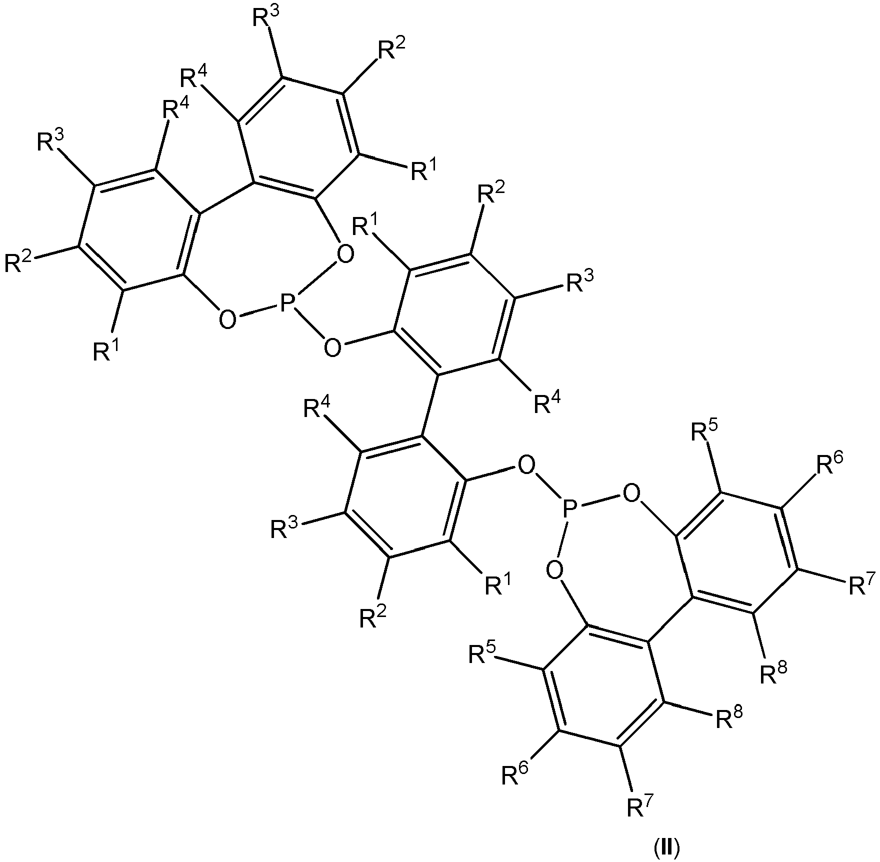 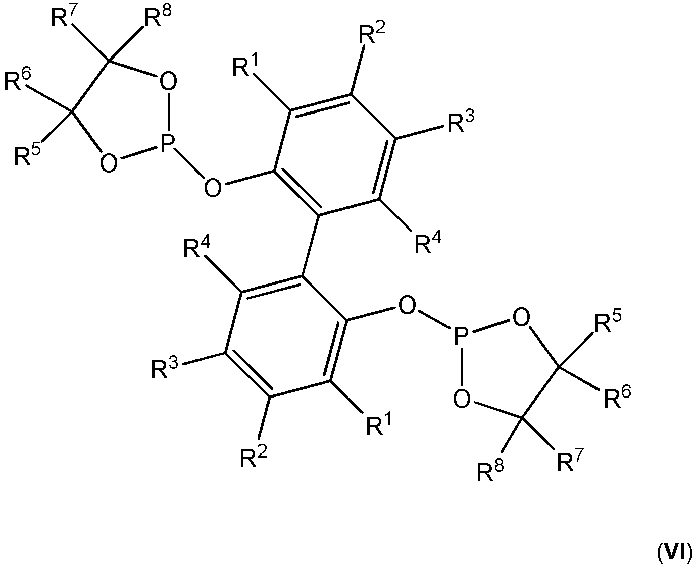 aufgereinigt, wobei
R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₆)-Aryl, -(C₆-C₂₀)-Aryl.

Besonders bevorzugt dient das erfindungsgemäße Verfahren zur Aufreinigung von Bisphosphiten einer der Strukturformeln (la), (Ib), (Ic), (IIa) und (VIa):

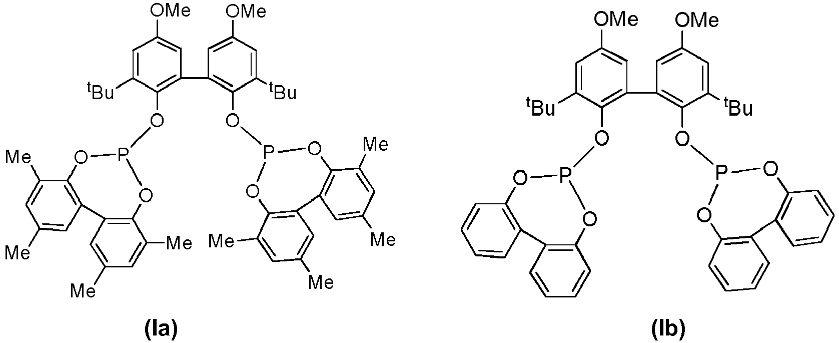

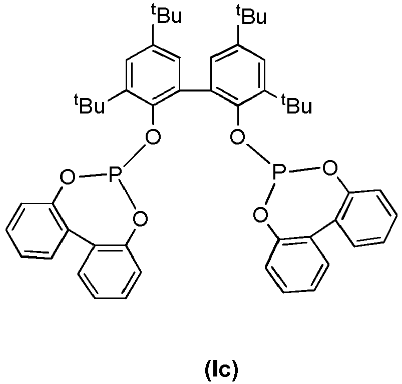

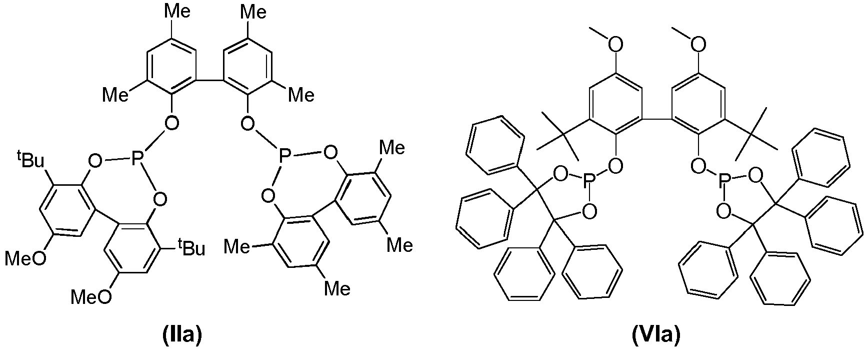

Dem beanspruchten Verfahren können auch Verfahrensschritte vorgelagert sein, wie beispielsweise die Synthese der Liganden. Diese Verfahrensschritte erfolgen dann vor dem Verfahrensschritt a).

In einer Variante des Verfahrens sind dem Verfahrensschritt a) die folgenden Verfahrensschritte, vorgelagert:
i) Umsetzung eines Diols der allgemeinen Formel (**VII**): 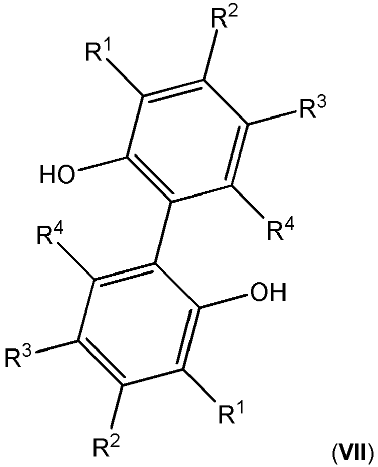 wobei
   R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₆)-Aryl, -(C₆-C₂₀)-Aryl, Halogen, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂, -N[(C₁-C₁₂)-Alkyl]₂;
      mit PCl₃ zum Phosphorochloriditderivat unter Inertgasatmosphäre;
ii) Umsetzung des Phophorochloriditderivats aus i) mit einem Mono- oder Dialkohol in einem vierten Lösungsmittel.

Die Stufen i) und ii) können hierbei unter Zusatz einer Base erfolgen.

In einer Variante des Verfahrens entspricht das vierte Lösungsmittel aus dem Verfahrensschritt ii) dem zweiten Lösungsmittel.

Nach erfolgter Umkristallisation kann das Organobisphosphit isoliert werden. Dies geschieht typischerweise durch Abfiltrieren und, optional, Trocknen des abfiltrierten Organobisphsophits. Neben dem Verfahren wird auch die Verwendung des durch dieses Verfahren erhaltenen Produkts in einer Hydroformylierungsreaktion offenbart. Das Produkt fungiert hierbei als Ligand in einem Katalysatorkomplex, welcher sich aus dem Ligand und mindestens einem Metall-Zentral-Atom zusammensetzt. Dieser Katalysatorkomplex wird zur Katalyse einer Hydroformylierungsreaktion verwendet. Offenbarung der Verwendung eines Organobisphosphit einer der allgemeinen Formeln **I** , **II, III, IV, V** oder **VI,** welches mit einem Verfahren gemäß einem der Ansprüche 1 bis 11 aufgereinigt wurde, als Liganden in einem Katalysatorkomplex, welcher eine Hydroformylierungsreaktion katalysiert.

Im Folgenden soll die Erfindung anhand von Ausführungsbeispielen näher erläutert werden. Besonders vorteilhaft ist, dass bestimmte Lösungsmittelkombinationen, die aus der Ligandensynthese resultieren (Acetonitril (ACN), N,N'-Dimethylaminobutan (DMAB)) nach einmaliger Destillation zur Umkristallisation verwendet werden können.

Dadurch kann das aus der Synthese verwendete Gemisch erneut eingesetzt werden, was aus ökologischer und wirtschaftlicher Sicht vorteilhaft ist.

Es handelt sich somit um ein besonders einfaches und effizientes Verfahren. Hierbei ist weiterhin besonders vorteilhaft, da dieses Verfahren sehr schnell durchführbar ist, d.h. das gereinigte Organobisphosphit nach einer kurzen Reaktionszeit wieder ausfällt bzw. auskristallisiert und das Verfahren somit gute Raum-Zeit-Ausbeuten aufweist. Das ist insbesondere für eine großtechnische Synthese vorteilhaft, da verlängerter Reaktionszeiten sich gleich auf den Preis der Verbindung auswirken. Die gute Möglichkeit eines großtechnischen Einsatzes ist ein wichtiges Kriterium, da der Herstellungsaufwand und damit verbunden die anfallenden Kosten nur so hoch sein dürfen, dass die Rentabilität des Gesamtprozesses weiterhin gewährleistet ist.

### Allgemeine Arbeitsvorschriften

Der in Zusammenhang mit dieser Erfindung angegebene Gesamtchlorgehalt wird nach Wickbold bestimmt: Probenvorbereitung nach DIN 51408 und Messung per lonenchromatographie nach DIN EN ISO 10304.

Alle nachfolgenden Präparationen wurden mit Standard-Schlenkgefäß-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Die Charakterisierung der Produkte erfolgte mittels NMR-Spektroskopie. Chemische Verschiebungen werden in ppm angegeben.
Die Referenzierung der ³¹P-NMR-Signale erfolgte gemäß: SR_{31P} = SR_{1H} * (BF_{31P} / BF_{1H}) = SR_{1H} * 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84). Die Chlorbestimmung erfolgte als Verbrennung nach Wickbold; mit Probenvorbereitung nach DIN 51408 und Messung per lonenchromatographie nach DIN EN ISO 10304.

### Synthese von (1):

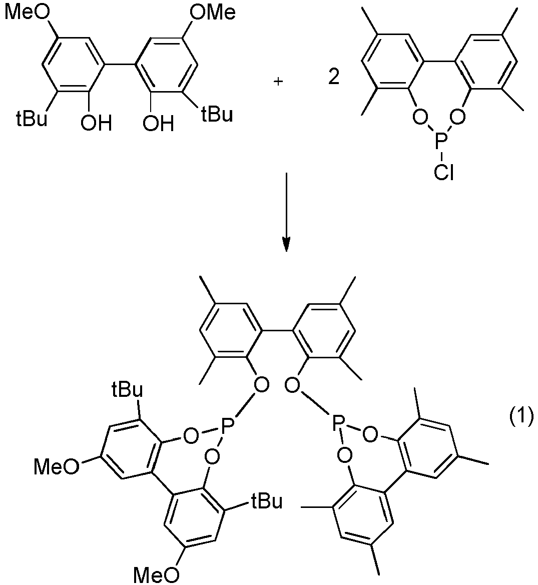

Das Zielprodukt (1) wird zukünftig u.a. als Rohligand bzw. Rohware bezeichnet.

### Herstellung der Rohware

In einem 100 ml Schlenkgefäß wurde unter Schutzgas 6 g (19,0 mmol) 2,2'-Bis-(3,5-dimethylphenyl)chlorophosphit in 20 ml entgastem Acetonitril (ACN) gelöst und auf 35 °C erwärmt. In einem zweiten Schlenkgefäß (50 ml) wurden 3,4 g (9,0 mmol) 3,3'-Di-tert.-butyl-5,5'-dimethoxy-[1,1'-biphenyl]-2,2'diol in 15 ml Dimethylaminobutan (DMAB) gelöst und anschließend langsam zu der Chlorophosphitlösung getropft. Die Reaktion wurde bei 35 °C über Nacht rühren gelassen.
Am nächsten Tag wurde die Lösung filtriert und der Feststoff zweimal mit ACN gewaschen. Das Zielprodukt konnte als weißer Feststoff (5,3 g, 66%) erhalten werden. ³¹P-NMR (202,4 MHz, toluene-d⁸): 142,8 und 141,2 (89,4%) sowie weitere Verunreinigungen. Cl-Wert: nach Wickbold 0,44 Massen %.

### Aufreinigung der Rohware

Die erfindungsgemäßen Aufreinigungsverfahren sind mit * gekennzeichnet.

### 1) Toluol/Acetonitril

In einem sekurierten 500 ml Schlenkgefäß wurden 10 g Rohligand in 40 ml entgastem Toluol unter Rühren bei 105 °C auf gelöst.
In einem zweiten sekurierten 500 ml Schlenkgefäß wurden 200 ml entgastes Acetonitril vorgelegt. Dann wurde vorsichtig und langsam die noch warme Ligand/ Toluol - Lösung innerhalb von ca. 10 min unter Rühren bei Raumtemperatur (RT) zum Acetonitril getropft. Es war keine Wärmetönung festzustellen aber sofortige Ausfällungen von Feststoff erkennbar. Der erhaltene Feststoff wurde noch 2 h bei RT gerührt, im Anschluss filtriert, 1 mal mit 25 ml entgastem Acetonitril nachgewaschen, getrocknet. Das Produkt konnte in 88%iger Ausbeute (8,8 g) erhalten werden. Ergebnis Chlor nach Wickbold: 430 ppm

### 2) Toluol/ Acetonitril-Triethylamin

In einem sekurierten 500 ml Schlenkgefäß wurden 10 g Rohligand in 40 ml entgastem Toluol unter Rühren bei 105 °C auf gelöst. Dann wurde die Lösung wieder auf 20 °C abgekühlt.
In einem zweiten sekurierten 500 ml Schlenkgefäß wurde unter Rühren 200 ml entgastes Acetonitril und 20 ml Triethylamin vorgelegt. Dann wurde die Mixtur ebenfalls auf 20 °C abgekühlt. Im Anschluss wurde vorsichtig und langsam innerhalb von ca. 15 min unter Rühren die Ligand/ Toluol - Lösung bei 20 °C in die entgaste Acetonitril/ Triethylamin - Lösung getropft. Das Ausfallen von Feststoff konnte nach ca. 3 min wahrgenommen werden. Der erhaltene Feststoff wurde noch 2 h bei RT gerührt, im Anschluss filtriert, 1 mal mit 25 ml entgastem Acetonitril nachgewaschen, getrocknet. Das Produkt konnte in 89%Iger Ausbeute (8,9 g) erhalten werden.
Ergebnis Chlor nach Wickbold: 400 ppm

### 3) Toluol/ Acetonitril-DMAB

In einem sekurierten 500 ml Schlenkgefäß wurden 10 g Rohligand in 40 ml entgastem Toluol unter Rühren bei 105 °C auf gelöst. Dann wurde die Lösung wieder auf 20 °C abgekühlt.
In einem zweiten sekurierten 500 ml Schlenkgefäß wurde unter Rühren 200 ml entgastes Acetonitril und 20 ml N,N'-Dimethylaminobutan (DMAB) vorgelegt. Dann wurde die Mixtur ebenfalls auf 20 °C abgekühlt. Im Anschluss wurde vorsichtig und langsam innerhalb von ca. 15 min unter Rühren die Ligand/ Toluol - Lösung bei 20 °C in die entgaste Acetonitril/ DMAB - Lösung getropft. Das Ausfallen von Feststoff konnte nach ca. 3 min wahrgenommen werden. Der erhaltene Feststoff wurde noch 2 h bei RT gerührt, im Anschluss filtriert, 1 mal mit 25 ml entgastem Acetonitril nachgewaschen, getrocknet und in die Glove-Box eingeschleust. Das Produkt konnte in 89%iger Ausbeute erhalten werden (8,89 g).
Ergebnis Chlor nach Wickbold: 350 ppm

### 4) Toluol-Triethanolamin/ Acetonitril

In einem sekurierten 500 ml Schlenkgefäß wurden 10 g Rohligand in 40 ml entgastem Toluol und 10 ml entgastes Triethanolamin unter Rühren bei 105 °C auf gelöst. Dann wurde die Lösung wieder auf 20 °C abgekühlt.
In einem zweiten sekurierten 500 ml Schlenkgefäß wurde unter Rühren 200 ml entgastes ACN vorgelegt. Dann wurde auf RT abgekühlt. Im Anschluss wurde vorsichtig und langsam innerhalb von ca. 15 min unter Rühren die Ligand/ Toluol/ Amin - Lösung bei 20 °C in das entgaste ACN getropft. Das Ausfallen von Feststoff konnte nach ca. 3 min wahrgenommen werden. Der erhaltene Feststoff wurde noch 2 h bei RT gerührt, im Anschluss filtriert, 1 mal mit 25 ml entgastem Acetonitril nachgewaschen, getrocknet. Das Produkt konnte in 91%iger Ausbeute erhalten (9,1 g).
Ergebnis Chlor nach Wickbold: 800 ppm

### 5) Toluol-Triethanolamin/Ethylacetat

In einem sekurierten 500 ml Schlenkgefäß wurden 20 g Rohligand in 90 ml entgastem Toluol und 15 ml Triethanolamin unter Rühren bei 105 °C gelöst. Beim Abkühlen setzte sich eine 2te Phase ab, die sich beim Rühren wieder vermischte. Dann wurde die Lösung wieder auf RT abgekühlt.
In einem zweiten sekurierten 500 ml Schlenkgefäß wurde unter Rühren 300 ml entgastes Ethylacetat vorgelegt.
Im Anschluss wurde vorsichtig und langsam innerhalb von ca. 30 min unter Rühren die Ligand/ Toluol/ Amin - Lösung bei 20 °C in die entgaste Ethylacetat - Lösung getropft.

Das Ausfallen von geringem Feststoff konnte nach ca. 2h wahrgenommen werden. Nach 3h war immer noch keine vollständige Fällung erkennbar. Zur Verbesserung der Fällung wurden 100 ml Ethylacetat hinzu gegeben und 30 min nachgerührt.
Im Anschluss filtriert, 1 mal mit 25 ml entgastem Acetonitril nachgewaschen, getrocknet. Das Produkt konnte in 28%iger Ausbeute erhalten werden (5,57 g).
Ergebnis Chlor nach Wickbold: 0,74/0,65 Gew %

### 6) Toluol/EtOH-Triethanolamin

In einem sekurierten 500 ml Schlenkgefäß wurden 10 g Rohligand in 40 ml entgastem Toluol unter Rühren bei 105 °C gelöst. Dann wurde die Lösung wieder auf 20 °C abgekühlt. In einem zweiten sekurierten 500 ml Schlenkgefäß wurde unter Rühren 150 ml entgastes Methanol und 15 ml entgastes Triethanolamin vorgelegt. Dann wurde die Mixtur ebenfalls auf 20 °C abgekühlt. Im Anschluss wurde vorsichtig und langsam innerhalb von ca. 1h unter Rühren die Ligand/ Toluol - Lösung bei 20 °C in die entgaste Methanol/ Triethanolamin - Lösung getropft. Das Ausfallen von Feststoff konnte nach ca. 3 min wahrgenommen werden. Der erhaltene Feststoff wurde noch 2 h bei RT gerührt, im Anschluss filtriert, 2 mal mit 25 ml entgastem Aceton nachgewaschen, getrocknet. Das Produkt konnte in 91%iger Ausbeute erhalten werden (9,1 g).
Ergebnis Chlor nach Wickbold: 340 ppm

### 7) Toluol-DMAB/n-Heptan

In einem sekurierten 500 ml Schlenkgefäß wurden 10 g Rohligand in 45 ml entgastem Toluol und 7,5 ml entgastem N.N'-Dimethylaminobutan unter Rühren bei 105 °C gelöst (innerhalb von 15 min. wurde eine Lösung erhalten).
Dann wurde die Lösung wieder auf 20 °C abgekühlt.
In einem zweiten sekurierten 500 ml Schlenkgefäß wurde unter Rühren 150 ml entgastes n-Heptan vorgelegt. Dann wurde auf 20 °C abgekühlt. Im Anschluss wurde vorsichtig und langsam innerhalb von ca. 30 min unter Rühren die Ligand/ Toluol/ Amin - Lösung bei 20 °C in das entgaste n-Heptan getropft. Das Ausfallen von Feststoff konnte nach ca. 3 min wahrgenommen werden. Der erhaltene Feststoff wurde noch 2 h bei RT gerührt, im Anschluss filtriert, 2 mal mit 25 ml entgastem Aceton nachgewaschen, getrocknet.
Das Produkt konnte in 89%iger Ausbeute erhalten werden (8,87 g).
Ergebnis Chlor nach Wickbold: 440 ppm

### 8) Toluol-DMAB/Aceton

In einem sekurierten 500 ml Schlenkgefäß wurden 20 g Rohligand in 90 ml entgastem Toluol und 15 ml entgastem N.N'-Dimethylaminobutan unter Rühren bei 105 °C gelöst.
Dann wurde die Lösung wieder auf 20 °C abgekühlt. In einem zweiten sekurierten 500 ml Schlenkgefäß wurde unter Rühren 300 ml entgastes Aceton vorgelegt. Dann wurde auf 20 °C abgekühlt. Im Anschluss wurde vorsichtig und langsam innerhalb von ca. 30 min unter Rühren die Ligand/ Toluol/ Amin - Lösung bei 20 °C in das entgaste Aceton getropft. Das Ausfallen von Feststoff konnte nach ca. 45 min wahrgenommen werden. Der erhaltene Feststoff wurde noch 3,5 h bei RT gerührt, im Anschluss filtriert, 2 mal mit 50 ml entgastem Aceton nachgewaschen, getrocknet. Das Produkt konnte in 58%iger Ausbeute erhalten werden (11,56 g).
Ergebnis Chlor nach Wickbold: 550 ppm

### 9) Xylol/n-Heptan

Der nachfolgende Versuch wurde analog der Vorschrift in DE 10 2011 002 640 A1 durchgeführt. Hierbei wurde jedoch Rohmaterial verwendet, dass einen Eingangschlorwert von 860 ppm Gesamtchlor hatte.
12,13 g Rohligand wurden in 65 mL- o-Xylol und 7,5 mL n-Heptan suspendiert und auf 100°C erhitzt. Da sich nach 4h der größte Teil nicht aufgelöst hat, wurde noch mal 30 ml o-Xylol dazu gegeben. Nun war eine klare Lösung entstanden. Anschließend wurden 35 mL n-Heptan hinzugegeben und über Nacht auf RT abgekühlt, wobei Feststoff ausfiel. Die Fällung wurde durch Zugabe von weiteren 70 mL n-Heptan vervollständigt und der erhaltene Feststoff über eine G3 Fritte abfiltriert. Die Substanz wurde für 2 h getrocknet. Das Produkt konnte in 91%iger Ausbeute erhalten werden (11,04 g).
Ergebnis Chlor nach Wickbold: 590 ppm

Dieser Versuch wurde analog der oben genannten Patentschrift durchgeführt. Hierbei konnte jedoch nur eine geringe Reduzierung des Chlorwertes um 270 ppm erreicht werden. Hinzu kommen die sehr langen Reaktionszeiten über Nacht. Außerdem muss die Fällung des Liganden durch erneute Lösungsmittelzugabe vervollständigt werden. Dies ist insbesondere großtechnisch problematisch, da man in Stahlkesseln schlecht eine vollständige Fällung visuell überprüfen kann.

### 10) Xylol/n-Heptan/ Filterhilfsmittel

Der nachfolgende Versuch wurde analog der Vorschrift in DE 10 2011 002 640 A1 durchgeführt. 43,2 g Rohligand wurden in der Glove-Box in einem 1L Schlenk eingewogen, ausgeschleust, 260 ml entgastes o-Xylol und 62 ml entgastes n-Heptan zugegeben und 1 h bei 100 °C gerührt. Dabei löste sich alles auf. Nun wurde 8,2 g eines Filterhilfsmittels auf Basis einer Cellulosefaser (VITACEL ® LC 200) zugegeben, 15 min. kräftig bei 100 °C gerührt und filtriert. Zum Filtrat wurden dann 135 ml entgastes n-Heptan zugegeben und über Nacht bei Raumtemperatur gerührt. Am Morgen wurde zur Mischung zur Vervollständigung der Fällung 260 ml entgastes n-Heptan zugegeben und 2 h gerührt. Der Feststoff wurde abfiltriert und getrocknet. Das Produkt konnte in 65%iger Ausbeute erhalten werden (28 g).
Ergebnis Chlor nach Wickbold: 330 ppm

Der Versuch wurde analog der oben genannten Patentschrift durchgeführt. Zusätzlich zu dem Versuch 9) wurde hierbei noch ein Filterhilfsmittel zugesetzt. Dies führt zwar zu einer weiteren Reduzierung des Gesamtchlorwertes, allerdings auch zu einer deutlich verminderten Ausbeute. Dies ist bei einer großtechnischen Synthese sehr unvorteilhaft, da hierbei Wertprodukt verloren geht.

### 11)* Toluol-DMAB/ Acetonitril-DMAB

In einem sekurierten 500 ml Schlenkgefäß wurden 20 Rohligand in 90 ml Toluol und 10 ml N,N'-Dimethylaminobutan unter Rühren bei 105 °C gelöst. Dann wurde die Lösung wieder auf RT abgekühlt.
In einem zweiten sekurierten 1 I Schlenkgefäß wurde unter Rühren 200 ml Acetonitril und 10 ml N,N'-Dimethylaminobutan vorgelegt. Um die Schwebeteilchen zurück zu halten, wurde heiß über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 76,5%iger Ausbeute erhalten werden (15,3 g). Ergebnis Chlor nach Wickbold: 160 ppm

### 12)* Toluol-DMAB/ Acetonitril-DMAB

In einem sekurierten 500 ml Schlenkgefäß wurden 20 g Rohligand in 90 ml entgastem Toluol und 10 ml N,N'-Dimethylaminobutan unter Rühren bei 105 °C gelöst.
In einem zweiten sekurierten 500 ml Schlenkgefäß wurde unter Rühren 400 ml entgastes Acetonitril und 30 ml N,N'-Dimethylaminobutan vorgelegt. Im Anschluss wurde innerhalb von ein paar Minuten unter Rühren die Ligand/ Toluol/ Amin - Lösung noch warm in die Acetonitril - Lösung getropft. Um die Schwebeteilchen zurück zu halten, wurde über eine Fritte filtriert. Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 77,5%iger Ausbeute erhalten werden.
Ergebnis Chlor nach Wickbold: 100 ppm

### 13)* Toluol-DMAB/ Acetonitril-DMAB

In einem sekurierten 500 ml Schlenkgefäß wurden 20 g Rohligand in 90 ml entgastem Toluol und 15 ml N,N'-Dimethylaminobutan unter Rühren bei 105 °C gelöst.
In einem zweiten sekurierten 500 ml Schlenkgefäß wurde unter Rühren 300 ml entgastes Acetonitril und 15 ml N,N'-Dimethylaminobutan vorgelegt.
Im Anschluss wurde innerhalb von ein paar Minuten unter Rühren die Ligand/ Toluol/ Amin - Lösung noch sehr warm in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 30 ml getrocknetem Acetonitril nachgewaschen, getrocknet. Das Produkt konnte in 76%iger Ausbeute erhalten werden (15,2 g). Ergebnis Chlor nach Wickbold: 180 ppm

### 14)* Toluol-DMAB/ Acetonitril-DMAB

In einem sekurierten 500 ml Schlenkgefäß wurden 20 g Rohligand in 90 ml entgastem Toluol und 17,5 ml N,N'-Dimethylaminobutan unter Rühren bei 105 °C.
In einem zweiten sekurierten 1000 ml Schlenkgefäß wurde unter Rühren 350 ml entgastes Acetonitril und 17,5 ml N,N'-Dimethylaminobutan vorgelegt.
Im Anschluss wurde innerhalb von ein paar Minuten unter Rühren die Ligand/ Toluol/ Amin - Lösung heiß in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 80%iger Ausbeute erhalten werden.
Ergebnis Chlor nach Wickbold: 150 ppm

### 15)* Toluol-DMAB/ Acetonitril-DMAB

In einem sekurierten 500 ml Schlenkgefäß wurden 20 g Rohligand in 90 ml Toluol und 20 ml N,N'-Dimethylaminobutan unter Rühren bei 105 °C gelöst. Dann wurde die Lösung wieder auf RT abgekühlt.
In einem zweiten sekurierten 500 ml Schlenkgefäß wurde unter Rühren 400 ml feuchtes Acetonitril (Faßware) und 20 ml N,N'-Dimethylaminobutan vorgelegt. Um die Schwebeteilchen zurück zu halten, wurde warm über eine Fritte filtriert.
Das Ausfällen von Feststoff konnte nach ca. 3 min wahrgenommen werden. Der erhaltene Feststoff wurde noch 2-3 h bei RT gerührt, im Anschluss filtriert, 1 mal mit 25 ml getrocknetem Acetonitril nachgewaschen, getrocknet. Das Produkt konnte in 79,5%iger Ausbeute erhalten werden.
Ergebnis Chlor nach Wickbold: 100 ppm

Dieser Versuch zeigt, dass auch wasserhaltige Lösungsmittel bzw. Fällmittel verwendet werden können und eine Trocknung der selbigen nicht zwingend erforderlich. Wasser kann im Falle von Phosphiten zu Zersetzungen und damit zu Ausbeutenverlusten führen. Dies wird hier, bei Verwendung von wasserhaltigen Lösungsmitteln, nicht beobachtet. Dies bedeutet, dass auf eine aufwendige und kostenintensive Trocknung der Lösungsmittel verzichtet werden kann.

### 16)* Toluol-DMAB/ Acetonitril-DMAB

In einem sekurierten 500 ml Schlenkgefäß wurden 20 g Rohligand in 90 ml Toluol und 20 ml N,N'-Dimethylaminobutan unter Rühren bei 108 °C gelöst. Dann wurde die Lösung innerhalb von 60 min auf 90 °C abgekühlt.
In einem zweiten sekurierten 1 I Schlenkgefäß wurde unter Rühren bei RT 400 ml Acetonitril und 20 ml N,N'-Dimethylaminobutan vorgelegt und auf 0°C abgekühlt. Um die Schwebeteilchen zurück zu halten, wurde bei 90 °C über eine Fritte filtriert.
Das Ausfällen von Feststoff konnte nach ca. 1 min wahrgenommen werden. Der erhaltene Feststoff wurde 3 h bei RT gerührt, im Anschluss bei RT filtriert, 1 mal mit 30 ml Acetonitril nachgewaschen, getrocknet. Das Produkt konnte in 83%iger Ausbeute erhalten werden (16,6 g).
Ergebnis Chlor nach Wickbold: 105 ppm

### 17)* Toluol-DMAB/ Acetonitril-DMAB

In einem sekurierten 500 ml Schlenkgefäß wurden 20 Rohligand in 90 ml entgastem Toluol und 20 ml N,N'-Dimethylaminobutan unter Rühren bei 105 °C gelöst.
In einem zweiten sekurierten 1000 ml Schlenkgefäß wurde unter Rühren 400 ml entgastes Acetonitril und 20 ml N,N'-Dimethylaminobutan vorgelegt und auf 35 °C temperiert.
Im Anschluss wurde innerhalb von ein paar Minuten unter Rühren die Ligand/ Toluol/ Amin - Lösung heiß in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden.
Der erhaltene Feststoff wurde 3h bei 35°C gerührt, im Anschluss filtriert, 1 mal mit 30 ml getrocknetem Acetonitril nachgewaschen. Das Produkt konnte in 76,5%iger Ausbeute erhalten werden (15,3 g).
Ergebnis Chlor nach Wickbold: 90 ppm

### 18)* Toluol-DMAB/ Acetonitril-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst.
In einem zweiten sekurierten 1000 ml Schlenkgefäß wurde unter Rühren 400 ml entgastes Acetonitril und 20 ml N,N'-Dimethylaminobutan vorgelegt und auf 0°C abgekühlt!
Im Anschluss wurde innerhalb von ein paar Minuten unter Rühren die Ligand/ Toluol/ Amin - Lösung bei 75°C (im Ölbad abgekühlt) in die Acetonitril -Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 84%iger Ausbeute erhalten werden (16,75 g). Ergebnis Chlor nach Wickbold: 95 ppm

### 19)* Toluol-DMAB Acetonitril-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst.
Die Lösung wurde anschließend im Heizbad auf 80°C abgekühlt.
In einem zweiten sekurierten 1000 ml Schlenkgefäß wurde unter Rühren 400 ml entgastes Acetonitril und 20 ml N,N'-Dimethylaminobutan vorgelegt und auf 0°C abgekühlt!
Im Anschluss wurde innerhalb von ein paar Minuten unter Rühren die Ligand/ Toluol/ Amin - Lösung bei 80°C (im Ölbad abgekühlt) in die Acetonitril -Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 30 ml getrocknetem Acetonitril nachgewaschen, getrocknet. Das Produkt konnte in 81%iger Ausbeute erhalten werden (16,1 g). Ergebnis Chlor nach Wickbold: 110 ppm

### 20)* Toluol-DMAB/ Acetonitril-DMAB

In einem sekurierten 500 ml Schlenkgefäß wurden 20 g Rohligand in 90 ml entgastes Toluol und 20 ml N,N'-Dimethylaminobutan unter Rühren bei 105 °C gelöst.
Die Lösung wurde anschließend im Heizbad auf 100°C abgekühlt.
In einem zweiten sekurierten 1000 ml Schlenkgefäß wurde unter Rühren 400 ml entgastes Acetonitril und 20 ml N,N'-Dimethylaminobutan vorgelegt und auf 0°C abgekühlt!
Im Anschluss wurde innerhalb von ein paar Minuten unter Rühren die Ligand/ Toluol/ Amin - Lösung bei 100°C (im Ölbad abgekühlt) in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 4 h bei RT gerührt, im Anschluss filtriert, 1 mal mit 30 ml getrocknetem Acetonitril nachgewaschen, getrocknet. Das Produkt konnte in 82%iger Ausbeute erhalten werden (16,4 g). Ergebnis Chlor nach Wickbold: 120 ppm

### 21)* Toluol-DMAB/ Acetonitril-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst.
Die Lösung wurde anschließend im Heizbad auf 85°C abgekühlt.
In einem zweiten sekurierten 1000 ml Schlenkgefäß wurde unter Rühren 400 ml entgastes Acetonitril und 20 ml N,N'-Dimethylaminobutan vorgelegt und auf 0°C abgekühlt!
Im Anschluss wurde innerhalb von ein paar Minuten unter Rühren die Ligand/ Toluol/ Amin - Lösung bei 85°C (im Ölbad abgekühlt) in die Acetonitril -Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 4 h bei 0°C gerührt, im Anschluss filtriert, 1 mal mit 30 ml getrocknetem Acetonitril nachgewaschen, getrocknet. Das Produkt konnte in 78%iger Ausbeute (15,6g) erhalten werden. Ergebnis Chlor nach Wickbold: 130 ppm

### 22)* Toluol-DMAB/ Acetonitril-DMAB

In einem sekurierten 500 ml Schlenkgefäß wurden 20 g Rohligand in 90 ml entgastem Toluol und 20 ml N,N'-Dimethylaminobutan unter Rühren bei 110 °C der Feststoff gelöst.
Die Lösung wurde anschließend im Heizbad auf 85 °C abgekühlt.
In einem zweiten sekurierten 1000 ml Schlenkgefäß wurde unter Rühren 400 ml entgastes Acetonitril und 20 ml N,N'-Dimethylaminobutan vorgelegt und auf 0 °C abgekühlt!
Im Anschluss wurde innerhalb von ein paar Minuten unter Rühren die Ligand/ Toluol/ Amin - Lösung bei 85°C (im Ölbad abgekühlt) in die Acetonitril -Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 4 h bei 0°C gerührt, im Anschluss filtriert, 1 mal mit 30 ml getrocknetem Acetonitril nachgewaschen, getrocknet. Das Produkt konnte in 77%iger Ausbeute erhalten werden (15,4g). Ergebnis Chlor nach Wickbold: 110 ppm

### 23)* Toluol-DMAB/ Acetonitril-DMAB

In einem sekurierten 500 ml Schlenkgefäß wurden 20 g Rohligand in 90 ml entgastem Toluol und 20 ml N,N'-Dimethylaminobutan unter Rühren wurde bei 105 °C der Feststoff gelöst.
Die Lösung wurde anschließend im Heizbad auf 90°C abgekühlt.
In einem zweiten sekurierten 1000 ml Schlenkgefäß wurde unter Rühren 400 ml entgastes Acetonitril und 20 ml N,N'-Dimethylaminobutan vorgelegt und auf-20 °C abgekühlt!
Im Anschluss wurde innerhalb von ein paar Minuten unter Rühren die Ligand/ Toluol/ Amin - Lösung bei 90°C (im Ölbad abgekühlt) in die Acetonitril -Amin Lösung getropft. Um die Schwebeteilchen zurück zu halten, wurde über eine Fritte getropft.
Das Ausfällen von Feststoff konnte nach ca. 2 min wahrgenommen werden. Der erhaltene Feststoff wurde noch 4 h bei -20°C gerührt, im Anschluss filtriert, 1 mal mit 30 ml getrocknetem Acetonitril nachgewaschen, getrocknet. Das Produkt konnte in 85%iger Ausbeute erhalten werden (17g).
Ergebnis Chlor nach Wickbold: 110 ppm

Um ein Ausfall des Liganden aus dem Lösungsmittel zu verhindern, hat es sich als vorteilhaft erwiesen, die Lösung bei einer Temperatur von 60°C und mehr zu filtrieren bzw. im Anschluss daran in das Fällmittel laufen zu lassen. Weiterhin ist es vorteilhaft, das Fällmittel bzw. dessen Gemisch zu kühlen, da dadurch die Auskristallisation weiter vervollständigt werden kann und somit höhere Ausbeuten am Wertprodukt erhalten werden.

### 24)* Toluol-DMAB/ Acetonitril-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst. Dann wurde die Lösung wieder auf 20°C abgekühlt.
In einem zweiten sekurierten 500 ml Schlenkgefäß wurde unter Rühren 400 ml entgastes Acetonitril und 20 ml N,N'-Dimethylaminobutan vorgelegt. Im Anschluss wurde vorsichtig und langsam innerhalb von ca. 30 min unter Rühren die Ligand/ Toluol/ Amin - Lösung bei 20 °C in die entgaste Acetonitril - Lösung getropft.
Das Ausfallen von Feststoff konnte nach ca. 3 min wahrgenommen werden. Der erhaltene Feststoff wurde noch 2 h bei RT gerührt, im Anschluss filtriert, 1 mal mit 25 ml entgastem Acetonitril nachgewaschen, getrocknet. Das Produkt konnte in 82%iger Ausbeute erhalten werden (16,35g). Ergebnis Chlor nach Wickbold: 110 ppm

### 25)* Toluol-DMAB/ Acetonitril-DMAB

In einem sekurierten 500 ml Schlenkgefäß wurden 20 g Rohligand in 90 ml entgastem Toluol und 22,5 ml N,N'-Dimethylaminobutan unter Rühren bei 105 °C gelöst.
In einem zweiten sekurierten 1000 ml Schlenkgefäß wurde unter Rühren 450 ml entgastes Acetonitril und 22,5 ml N,N'-Dimethylaminobutan vorgelegt.
Im Anschluss wurde innerhalb von ein paar Minuten unter Rühren die Ligand/ Toluol/ Amin - Lösung noch sehr warm in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 79,5%iger Ausbeute erhalten werden (15,9g). Ergebnis Chlor nach Wickbold: 180 ppm

### 26)* Toluol-DMAB/ Acetonitril-DMAB

In einem sekurierten 500 ml Schlenkgefäß wurden 20 g Rohligand in 90 ml entgastem Toluol und 24 ml N,N'-Dimethylaminobutan unter Rühren bei 105 °C gelöst.
In einem zweiten sekurierten 500 ml Schlenkgefäß wurde unter Rühren 400 ml entgastes Acetonitril und 24 ml N,N'-Dimethylaminobutan vorgelegt.
Im Anschluss wurde innerhalb von ein paar Minuten unter Rühren die Ligand/ Toluol/ Amin - Lösung noch warm in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 2,5 h bei RT gerührt, im Anschluss filtriert, 1 mal mit 25 ml getrocknetem Acetonitril nachgewaschen, getrocknet. Das Produkt konnte in 78,5%iger Ausbeute erhalten werden (15,7 g). Ergebnis Chlor nach Wickbold: 85 ppm

### 27)* Toluol-DMAB/ Acetonitril-DMAB

In einem sekurierten 500 ml Schlenkgefäß wurden 20 g Rohligand in 90 ml entgastem Toluol und 30 ml N,N'-Dimethylaminobutan unter Rühren bei 105 °C gelöst.
In einem zweiten sekurierten 500 ml Schlenkgefäß wurde unter Rühren 400 ml entgastes Acetonitril und 10 ml N,N'-Dimethylaminobutan vorgelegt. Im Anschluss wurde innerhalb von ein paar Minuten unter Rühren die Ligand/ Toluol/ Amin - Lösung noch warm in die Acetonitril - Lösung getropft. Um die Schwebeteilchen zurück zu halten, wurde über eine Fritte filtriert. Das Ausfällen von Feststoff konnte nach ca. 3 min wahrgenommen werden. Der erhaltene Feststoff wurde noch 2 h bei RT gerührt, im Anschluss filtriert, 1 mal mit 25 ml getrocknetem Acetonitril nachgewaschen, getrocknet. Das Produkt konnte in 79%iger Ausbeute erhalten werden.
Ergebnis Chlor nach Wickbold: 100 ppm

### 28)* Toluol-DMAB/ Acetonitril-DMAB

In einem sekurierten 500 ml Schlenkgefäß wurden 20 g Rohligand in 90 ml entgastem Toluol und 30 ml N,N'-Dimethylaminobutan unter Rühren bei 105 °C gelöst.
In einem zweiten sekurierten 500 ml Schlenkgefäß wurde unter Rühren 400 ml getrocknetes Acetonitril und 30 ml N,N'-Dimethylaminobutan vorgelegt. Im Anschluss wurde vorsichtig und langsam innerhalb von ca. 30 min unter Rühren die Ligand/ Toluol/ Amin - Lösung bei 20 °C in die getrocknete Acetonitril - Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 2 h bei RT gerührt, im Anschluss filtriert, 1 mal mit 25 ml getrocknetem Acetonitril nachgewaschen, getrocknet. Das Produkt konnte in 79,4%iger Ausbeute erhalten werden (15,88 g). Ergebnis Chlor nach Wickbold: 80 ppm

### 29)* Toluol-DMAB/ Acetonitril-DMAB

In einem sekurierten 500 ml Schlenkgefäß wurden 20 g Rohligand in 90 ml entgastem Toluol und 30 ml N,N'-Dimethylaminobutan unter Rühren bei 105 °C gelöst.
In einem zweiten sekurierten 1000 ml Schlenkgefäß wurde unter Rühren 600 ml entgastes Acetonitril und 30 ml N,N'-Dimethylaminobutan vorgelegt.
Im Anschluss wurde innerhalb von ein paar Minuten unter Rühren die Ligand/ Toluol/ Amin - Lösung heiß in die Acetonitril - Amin Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 3 h bei RT gerührt, im Anschluss filtriert, 1 mal mit 25 ml getrocknetem Acetonitril nachgewaschen, getrocknet. Das Produkt konnte in 79,5%iger Ausbeute erhalten werden (15,9 g). Ergebnis Chlor nach Wickbold: 100 ppm

### 30)* Toluol-DMAB/iPrOH-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst. Dann wurde die Lösung wieder auf 20 °C abgekühlt. Nach dem Abkühlen waren in der Lösung Schwebeteilchen festzustellen.
In einem zweiten sekurierten 1000 ml Schlenkgefäß wurde unter Rühren 300 ml entgastes Isopropanol und 20 ml N,N'-Dimethylaminobutan vorgelegt. Im Anschluss wurde langsam über eine Fritte innerhalb von ca. 15 min unter Rühren die Ligand/ Toluol/ Amin - Lösung bei 20 °C in die entgaste Isopropanol/ Amin - Lösung filtriert. Das Ausfallen von Feststoff konnte nach ca. 3 min wahrgenommen werden. Der erhaltene Feststoff wurde noch 3 h bei RT gerührt, im Anschluss filtriert, 1 mal mit 30 ml entgastem Isopropanol nachgewaschen, getrocknet. Das Produkt konnte in 82%iger Ausbeute erhalten werden (16,4 g).
Ergebnis Chlor nach Wickbold: 110 ppm

### 31)* Toluol-DMAB/iPrOH-DMAB

In einem sekurierten 500 ml Schlenkgefäß wurden 20 g Rohligand in 90 ml entgastem Toluol und 20 ml N,N'-Dimethylaminobutan unter Rühren bei 105 °C gelöst. Dann wurde die Lösung wieder auf 20 °C abgekühlt. In einem zweiten sekurierten 1000 ml Schlenkgefäß wurde unter Rühren 300 ml entgastes Isopropanol und 20 ml N,N'-Dimethylaminobutan vorgelegt. Im Anschluss wurde langsam über eine Fritte (Entfernung Feststoffteilchen) innerhalb von ca. 15 min unter Rühren die Ligand/ Toluol/ Amin - Lösung bei 20 °C in die engaste Isopropanol/ Amin - Lösung filtriert. Das Ausfallen von Feststoff konnte nach ca. 3 min wahrgenommen werden. Der erhaltene Feststoff wurde noch 3 h bei RT gerührt, im Anschluss filtriert, 1 mal mit 30 ml entgastem Isopropanol nachgewaschen, getrocknet. Das Produkt konnte in 56%iger Reinheit erhalten werden (11,1 g).
Ergebnis Chlor nach Wickbold: 120 ppm

### 32)* Toluol-Triethylamin /iPrOH-Triethylamin

In einem sekurierten 500 ml Schlenkgefäß wurden 20 g Rohligand in 90 ml entgastem Toluol und 20 ml entgastem Triethylamin unter Rühren bei 105 °C gelöst. Es waren wenige Schwebeteilchen erkennbar.

In einem sekurierten 1000 ml Schlenkgefäß wurde unter Rühren 400 ml entgastes Isopropanol und 20 ml entgastes Triethylamin vorgelegt. Im Anschluss wurde langsam über eine Fritte (Entfernung Feststoffteilchen) innerhalb von ca. 15 min unter Rühren die Ligand/ Toluol/ Amin - Lösung warm in die entgaste Isopropanol/ Amin - Lösung getropft. Das Ausfallen von Feststoff konnte nach ca. 3 min wahrgenommen werden. Der erhaltene Feststoff wurde noch 2 h bei RT gerührt, im Anschluss filtriert, 1 mal mit 30 ml entgastem Isopropanol nachgewaschen, getrocknet. Das Produkt konnte in 84%iger Ausbeute erhalten werden (16,8 g).
Ergebnis Chlor nach Wickbold: 130 ppm

### 33)* Toluol-Triethylamin / Acetonitril-Triethylamin

In einem sekurierten 500 ml Schlenkgefäß wurden 50 g Rohligand in 225 ml Toluol und 50 ml Triethylamin unter Rühren bei 105 °C gelöst. Dann wurde die Lösung abgekühlt.
In einem zweiten sekurierten 2 l Schlenkgefäß wurde unter Rühren 1000 ml entgastes Acetonitril und 50 ml Triethylamin vorgelegt. Um die Schwebeteilchen zurück zu halten, wurde warm über eine Fritte filtriert
Das Ausfällen von Feststoff konnte nach ca. 3 min wahrgenommen werden. Der erhaltene Feststoff wurde 3 h gerührt, im Anschluss filtriert, 1 mal mit 75 ml Acetonitril nachgewaschen, getrocknet. Das Produkt konnte in 78%iger Ausbeute erhalten werden (38,9 g).
Ergebnis Chlor nach Wickbold: 95 ppm

Hierbei wurde eine andere Base verwendet. Auch hierbei zeigen sich sehr gute Resultate bezogen auf den Chlorwert.

### 34)* Toluol-NaOMe/MeOH-NaOMe

In einem sekurierten 500 ml Schlenkgefäß wurden 20 g Rohligand in 90 ml entgastem Toluol und 1,3 ml Natriummethanolat bei 105 °C gelöst und abgekühlt. In einem sekurierten 1000 ml Schlenkgefäß wurde unter Rühren 300 ml entgastes Methanol und 1,3 ml 30 %ige Natriummethanolat - Lösung in Methanol vorgelegt. Im Anschluss wurde vorsichtig und langsam innerhalb von ca. 30 min. unter Rühren die Ligand/ Toluol -Mischung in die entgaste Methanol/ Natriummethanolat - Lösung getropft. Um den Feststoffanteil zurück zu halten, wurde über eine Fritte filtriert
Das Ausfällen von Feststoff konnte nach ca. 3 min wahrgenommen werden. Der erhaltene Feststoff wurde noch 2 h bei RT gerührt, im Anschluss filtriert, 2 mal mit 25 ml entgastem Methanol nachgewaschen, getrocknet. Das Produkt konnte in 84%iger Ausbeute erhalten werden (16,88 g). Ergebnis Chlor nach Wickbold: 100 ppm

### 35)* Toluol-NaOEt/EtOH-NaOEt

In einem sekurierten 500 ml Schlenkgefäß wurden 20 g Rohligand in 90 ml entgastem Toluol und 1,3 ml 30 %ige Natriumethanolat - Lösung unter Rühren bei 105 °C gelöst.
In einem sekurierten 1000 ml Schlenkgefäß wurde unter Rühren 300 ml entgastes Ethanol und 1,3 ml 30 %ige Natriumethanolat - Lösung in Ethanol vorgelegt. Im Anschluss wurde vorsichtig und langsam innerhalb von ein paar min. unter Rühren die Ligand/ Toluol/Natriumethanolat - Lösung warm in die entgaste Ethanol/ Natriummethanolat - Lösung getropft. Um die Schwebeteilchen zurück zu halten, wurde über eine Fritte filtriert.
Das Ausfällen von Feststoff konnte nach ca. 3 min wahrgenommen werden. Der erhaltene Feststoff wurde noch 2 h bei RT gerührt, im Anschluss filtriert, 2 mal mit 25 ml entgastem Ethanol nachgewaschen, getrocknet. Das Produkt konnte in 84%iger Ausbeute erhalten werden (16,7g). Ergebnis Chlor nach Wickbold: 90 ppm

### 36)* o-Xylol-DMAB/Acetonitril- DMAB

In einem sekurierten 500 ml Schlenkgefäß wurden 20 g Rohligand in 120 ml entgastes Xylol und 15 ml N,N'-Dimethylaminobutan unter Rühren bei 105 °C gelöst und anschließend im Heizbad auf 90°C abgekühlt.
In einem zweiten sekurierten 1000 ml Schlenkkolben wurden unter Rühren 300 ml entgastes Acetonitril und 15 ml N,N'-Dimethylaminobutan vorgelegt und auf 0°C abgekühlt!
Im Anschluss wurde innerhalb von ein paar Minuten unter Rühren die Ligand/Xylol - Lösung bei 90°C in die Acetonitril /DMAB-Lösung (0°C) getropft. Um die Schwebeteilchen zurück zuhalten, wurde über eine Fritte filtriert.
Das Ausfällen von Feststoff konnte nach ca. 5 min wahrgenommen werden. Der erhaltene Feststoff wurde noch 4 h bei 0°C gerührt, im Anschluss filtriert und 3 mal mit 30 ml getrocknetem Acetonitril nachgewaschen, getrocknet. Das Produkt konnte in 84%iger Ausbeute erhalten werden (16,6g). Ergebnis Chlor nach Wickbold: 65 ppm

### 37)* o-Xylol-DMAB/Acetonitril-DMAB

In einem sekurierten 500 ml Schlenkgefäß wurden 50 g Rohligand in 300 ml entgastes Xylol und 50 ml N,N'-Dimethylaminobutan unter Rühren bei 105 °C gelöst und anschließend im Heizbad auf 90°C abgekühlt.
In einem zweiten sekurierten 2000 ml Schlenk wurden unter Rühren 1000 ml entgastes Acetonitril und 50 ml N,N'-Dimethylaminobutan vorgelegt und auf 0°C abgekühlt!

Im Anschluss wurde innerhalb von ein paar Minuten unter Rühren die Ligand/Xylol - Lösung bei 90°C in die Acetonitril /DMAB-Lösung (0°C) getropft. Um die Schwebeteilchen zurück zuhalten, wurde über eine Fritte filtriert.
Das Ausfällen von Feststoff konnte nach ca. 5 min wahrgenommen werden. Der erhaltene Feststoff wurde noch 4 h bei 0°C gerührt, im Anschluss filtriert und 3 mal mit 75 ml entgastem Acetonitril nachgewaschen, getrocknet.
Das Produkt konnte in 86%iger Ausbeute erhalten werden (42,8g).
Ergebnis Chlor nach Wickbold: 110 ppm

**Tabelle 1: Chlorwerte**

| | 1. Lösungsmittel | 1. Base | 2. Lösungsmittel | 2. Base | Chlorwert [ppm] |
|---|---|---|---|---|---|
| 1) | Toluol | | Acetonitril | | 430 |
| 2) | Toluol | | Acetonitril | Triethylamin | 400 |
| 3) | Toluol | | Acetonitril | DMAB | 350 |
| 4) | Toluol | Triethanolamin | Acetonitril | | 800 |
| 5) | Toluol | Triethanolamin | Ethylacetat | | >1000 |
| 6) | Toluol | | EtOH | Triethanolamin | 340 |
| 7) | Toluol | DMAB | n-Heptan | | 440 |
| 8) | Toluol | DMAB | Aceton | | 550 |
| 9) | Xylol/n-Heptan | | n-Heptan | | 590 |
| 10) | Xylol/n-Heptan | | n-Heptan | | 330 |
| 11)* | Toluol | 10 ml DMAB | Acetonitril | 10 ml DMAB | 160 |
| 12)* | Toluol | 10 ml DMAB | Acetonitril | 30 ml DMAB | 100 |
| 13)* | Toluol | 15 ml DMAB | Acetonitril | 15 ml DMAB | 180 |
| 14)* | Toluol | 17,5 ml DMAB | Acetonitril | 17,5 ml DMAB | 150 |
| 15)* | Toluol | 20 ml DMAB | Acetonitril | 20 ml DMAB | 100 |
| 16)* | Toluol | 20 ml DMAB | Acetonitril | 20 ml DMAB | 105 |
| 17)* | Toluol | 20 ml DMAB | Acetonitril | 20 ml DMAB | 90 |
| 18)* | Toluol | 20 ml DMAB | Acetonitril | 20 ml DMAB | 95 |
| 19)* | Toluol | 20 ml DMAB | Acetonitril | 20 ml DMAB | 110 |
| 20)* | Toluol | 20 ml DMAB | Acetonitril | 20 ml DMAB | 120 |
| 21)* | Toluol | 20 ml DMAB | Acetonitril | 20 ml DMAB | 130 |
| 22)* | Toluol | 20 ml DMAB | Acetonitril | 20 ml DMAB | 110 |
| 23)* | Toluol | 20 ml DMAB | Acetonitril | 20 ml DMAB | 110 |
| 24)* | Toluol | 20 ml DMAB | Acetonitril | 20 ml DMAB | 110 |
| 25)* | Toluol | 22,5 ml DMAB | Acetonitril | 22,5 ml DMAB | 180 |
| 26)* | Toluol | 24 ml DMAB | Acetonitril | 24 ml DMAB | 85 |
| 27)* | Toluol | 30 ml DMAB | Acetonitril | 10 ml DMAB | 100 |
| 28)* | Toluol | 30 ml DMAB | Acetonitril | 30 ml DMAB | 80 |
| 29)* | Toluol | 30 ml DMAB | Acetonitril | 30 ml DMAB | 100 |
| 30)* | Toluol | 20 ml DMAB | iPrOH | 20 ml DMAB | 110 |
| 31)* | Toluol | 20 ml DMAB | iPrOH | 20 ml DMAB | 120 |
| 32)* | Toluol | Triethylamin | iPrOH | Triethylamin | 130 |
| 33)* | Toluol | Triethylamin | Acetonitril | Triethylamin | 95 |
| 34)* | Toluol | NaOMe | MeOH | NaOMe | 100 |
| 35)* | Toluol | NaOEt | EtOH | NaOEt | 90 |
| 36)* | o-Xylol | 15 ml DMAB | Acetonitril | 15 ml DMAB | 65 |
| 37)* | o-Xylol | 50 ml DMAB | Acetonitril | 50 ml DMAB | 110 |

| | | | | | |
|---|---|---|---|---|---|
| *) erfindungsgemäße Ausführungsbeispiele | | | | | |

## Patentansprüche

1. Verfahren zur Reduktion des Chlorgehalts in einem Organobisphosphit einer der allgemeinen Formeln **I** , **II, III, IV, V** oder **VI:** 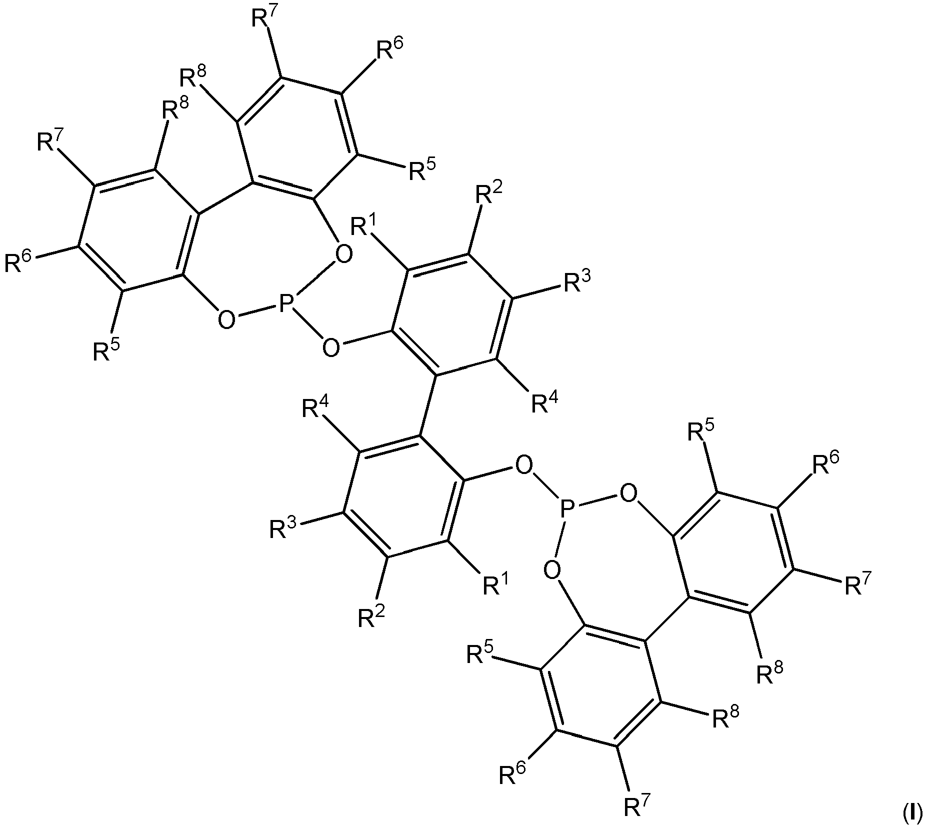 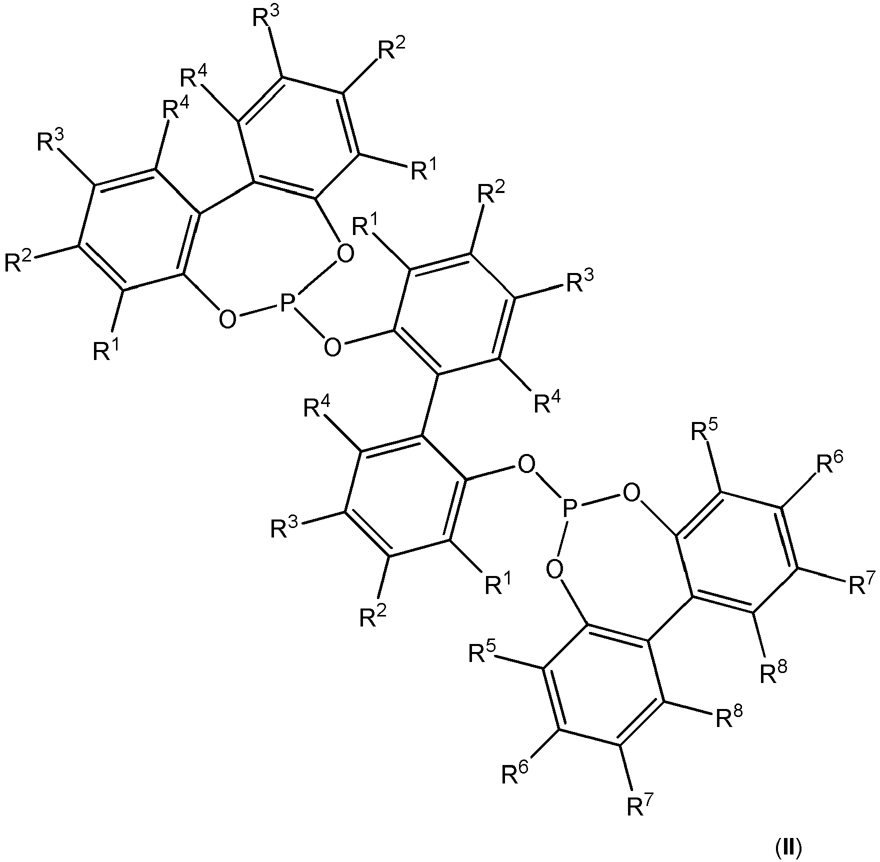 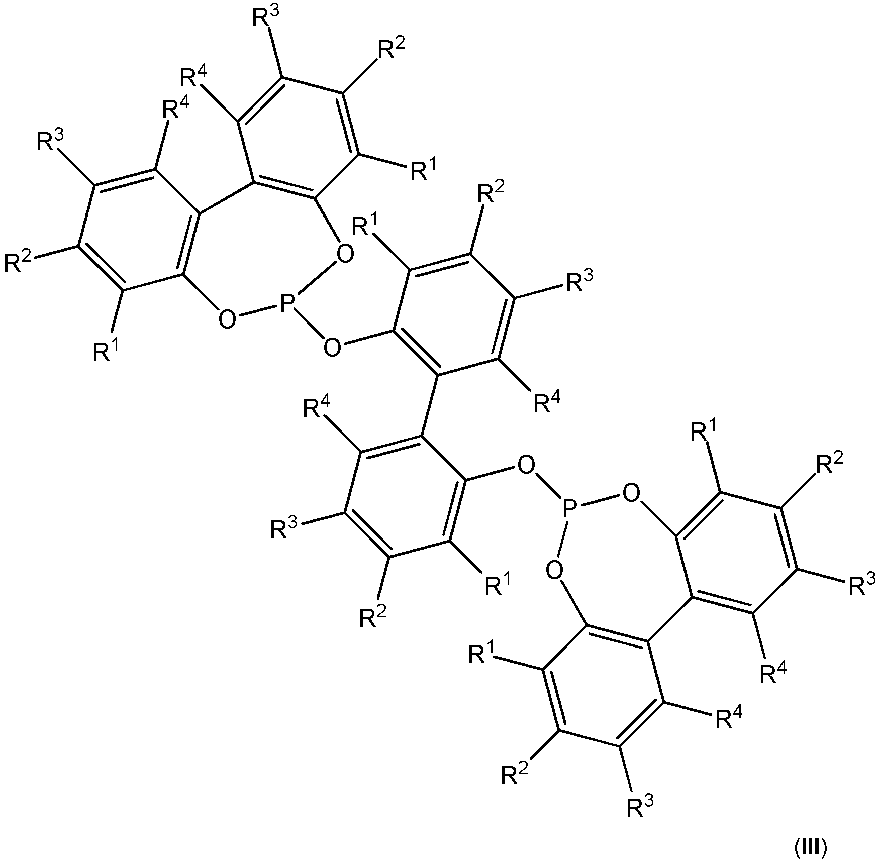 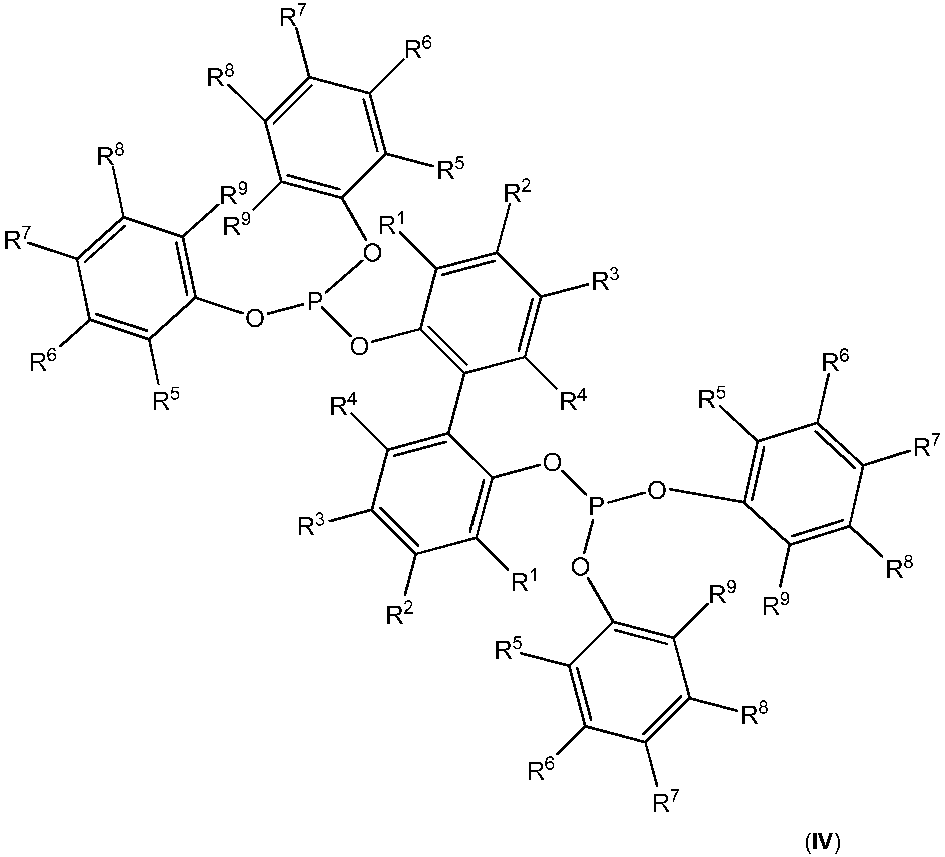 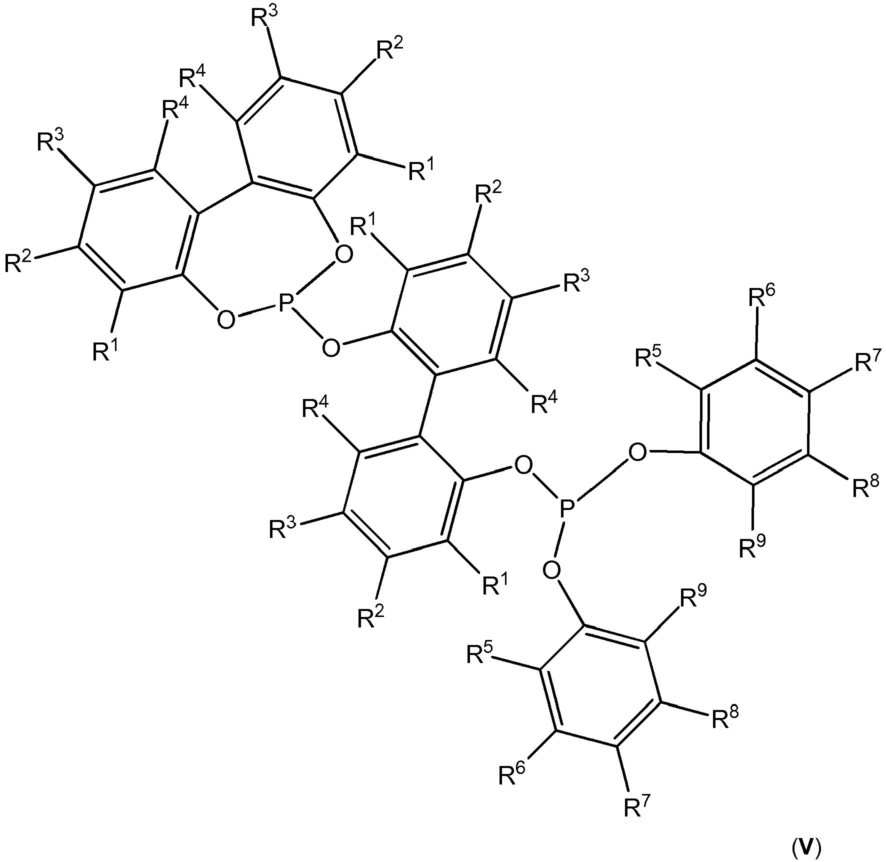 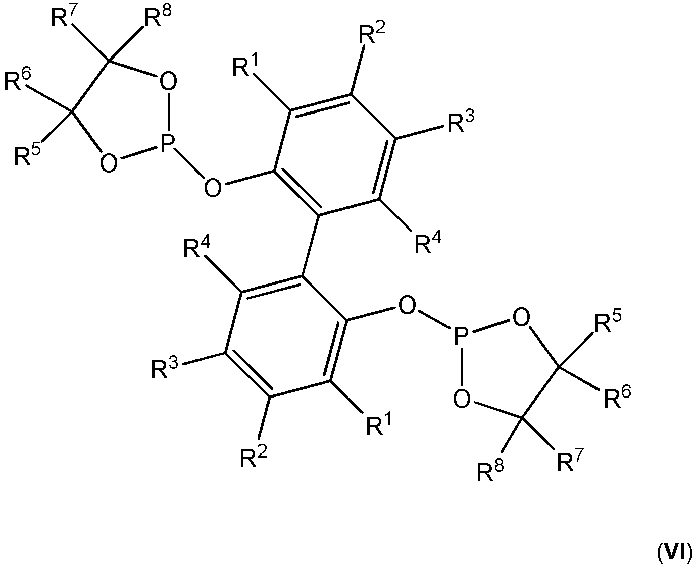 wobei
R¹, R², R³, R⁴, R⁵, R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, -COO-(C₁-C₁₂)-Alkyl,-CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂, -N[(C₁-C₁₂)-Alkyl]₂;
und die folgenden vier Restepaarungen nicht gleichzeitig alle vier paarweise für den gleichen Rest stehen:
R¹ und R⁵, R² und R⁶, R³ und R⁷, R⁴ und R⁸;
umfassend die Verfahrensschritte:
a) teilweises oder vollständiges auflösen des Organobisphosphits in einer ersten Lösung,
b) einbringen der ersten Lösung in eine zweite Lösung, wodurch das aufgereinigte Organobisphosphit ausgefällt wird,
wobei
die erste Lösung ein erstes Lösungsmittel und eine erste Base umfasst,
und die zweite Lösung ein zweites Lösungsmittel und eine zweite Base umfasst,
und
das erste Lösungsmittel ausgewählt ist aus:
Aromaten, Alkohole, Aceton, Ethylacetat, Acetonitril, Ether,
das zweite Lösungsmittel ausgewählt ist aus:
Aromaten, C5-C10-Alkane, Alkohole, Aceton, Ethylacetat, Acetonitril, Ether,
die erste Base ausgewählt ist aus:
Aminbasen, Alkoholate, Pyridin, Pyridinderivate, *N*-Methyl-2-pyrrolidon, Triethanolamin,
die zweite Base ausgewählt ist aus:
Aminbasen, Alkoholate, Pyridin, Pyridinderivate, *N*-Methyl-2-pyrrolidon,Triethanolamin,
und sich das Organobisphosphit im ersten Lösungsmittel besser löst als im zweiten Lösungsmittel.

2. Verfahren nach Anspruch 1,
wobei das erste Lösungsmittel ausgewählt ist aus: Ethylacetat, Anisol, ortho-Xylol, Toluol, Aceton, Methanol, Ethanol, Propanol, iso-Propanol, Acetonitril.

3. Verfahren nach einem der Ansprüche 1 oder 2,
wobei das zweite Lösungsmittel ausgewählt ist aus: Ethylacetat, Anisol, ortho-Xylol, Toluol, Aceton, Methanol, Ethanol, Propanol, iso-Propanol, Acetonitril, Tetrahydrofuran, Diethylether, Glykol, C5-C10-Alkane.

4. Verfahren nach einem der Ansprüche 1 bis 3,
wobei die erste Base ausgewählt ist aus: Triethylamin, Dimethylaminobutan, Pentylamin, Hexylamin, Dibutylamin, *N*-Methyl-2-pyrrolidon, Triethanolamin, Natrium-methanolat, Natrium-ethanolat, Pyridin, Dimethylaminopyridin.

5. Verfahren nach einem der Ansprüche 1 bis 4,
wobei die zweite Base ausgewählt ist aus: Triethylamin, Dimethylaminobutan, Pentylamin, Hexylamin, Dibutylamin, *N*-Methyl-2-pyrrolidon, Triethanolamin, Natrium-methanolat, Natrium-ethanolat, Pyridin, Dimethylaminopyridin.

6. Verfahren nach einem der Ansprüche 1 bis 5,
wobei die zweite Lösung ein drittes Lösungsmittel umfasst, welches nicht mit dem zweiten Lösungsmittel identisch ist.

7. Verfahren nach Anspruch 6,
wobei das dritte Lösungsmittel ausgewählt ist aus: Aromaten, Alkohole, Aceton, Ethylacetat, Acetonitril, Ether.

8. Verfahren nach einem der Ansprüche 1 bis 7,
wobei im Verfahrensschritt a) das Organobisphosphit vollständig in der ersten Lösung aufgelöst wird.

9. Verfahren nach einem der Ansprüche 1 bis 8,
wobei es sich bei der erste Base und der zweite Base nicht um die gleiche Base handelt.

10. Verfahren nach einem der Ansprüche 1 bis 9,
wobei das Organobisphosphit beim Einbringen im Verfahrensschritt b) einen Chlorgehalt von 1.500 ppm bis 100.000 ppm aufweist.

11. Verfahren nach einem der Ansprüche 1 bis 10,
wobei die zweite Lösung auf eine Temperatur in dem Bereich von -20°C bis 120 °C erwärmt wird, bevor in Verfahrensschritt b) die erste Lösung in die zweite Lösung eingebracht wird.

12. Verfahren nach einem der Ansprüche 1 bis 11,
wobei das Organobisphosphit eine der allgemeinen Formeln **I, II, IV** oder **VI** aufweist:

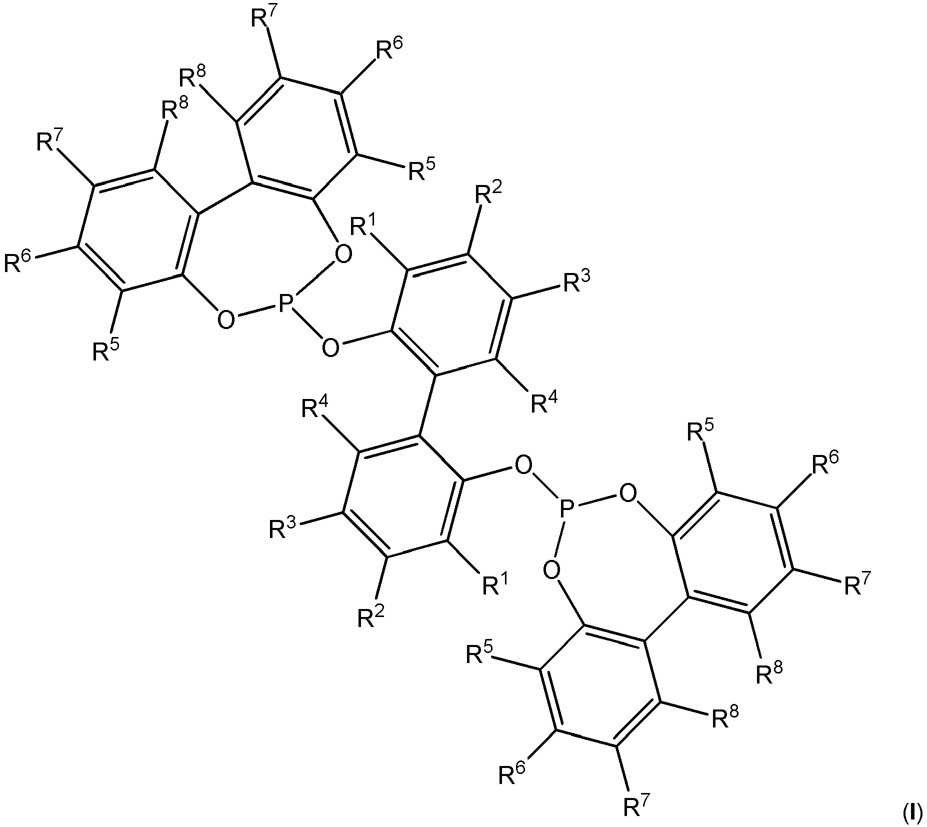

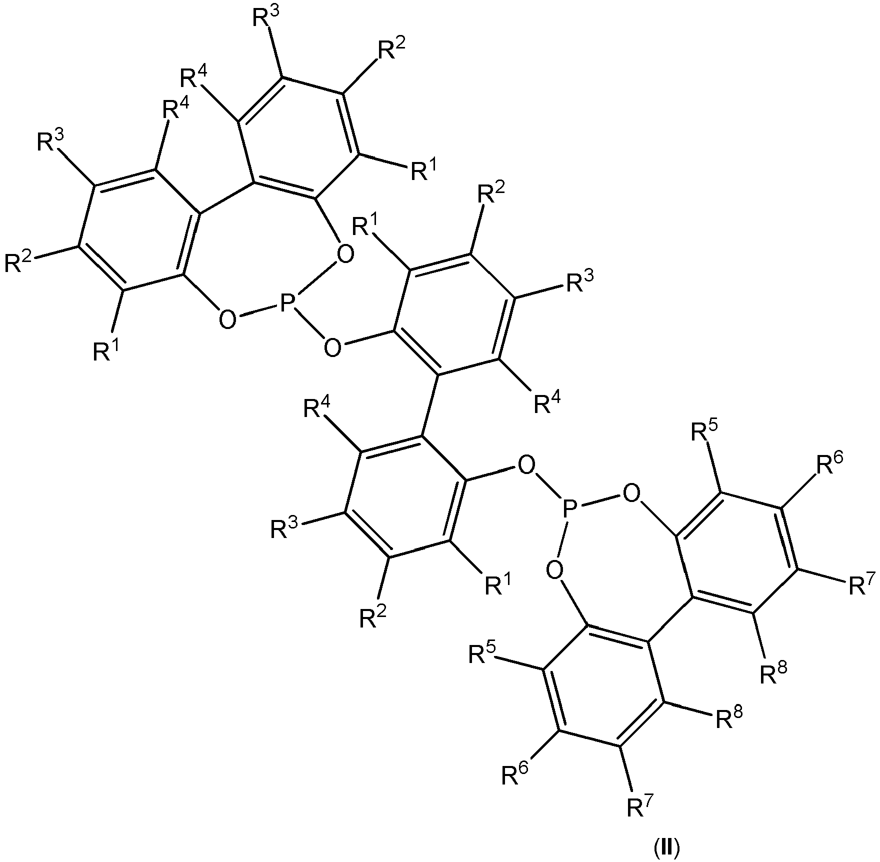

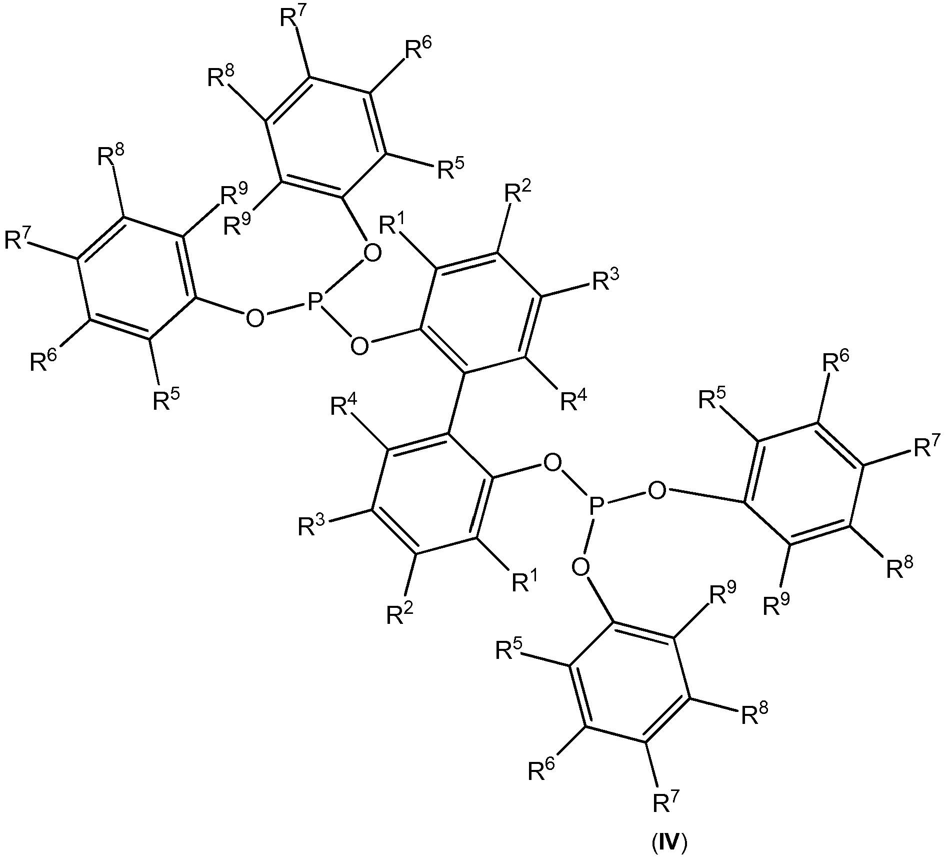

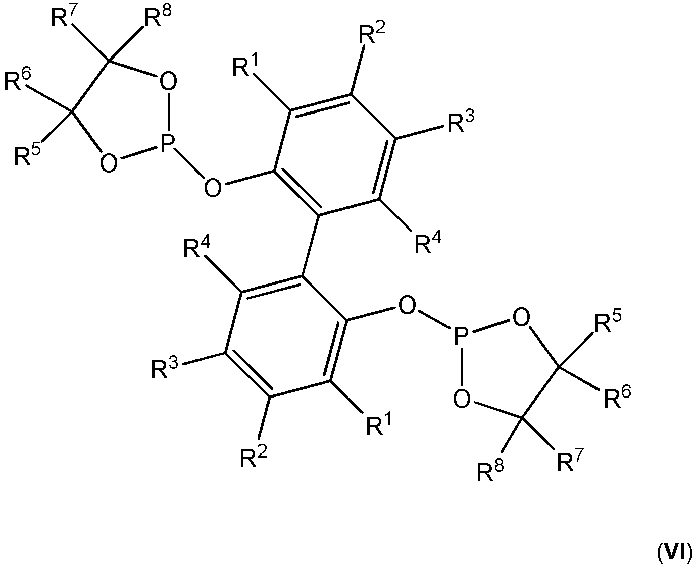

13. Verfahren nach einem der Ansprüche 1 bis 11,
wobei das Organobisphosphit eine der allgemeinen Formeln **I, II** oder **VI** aufweist:

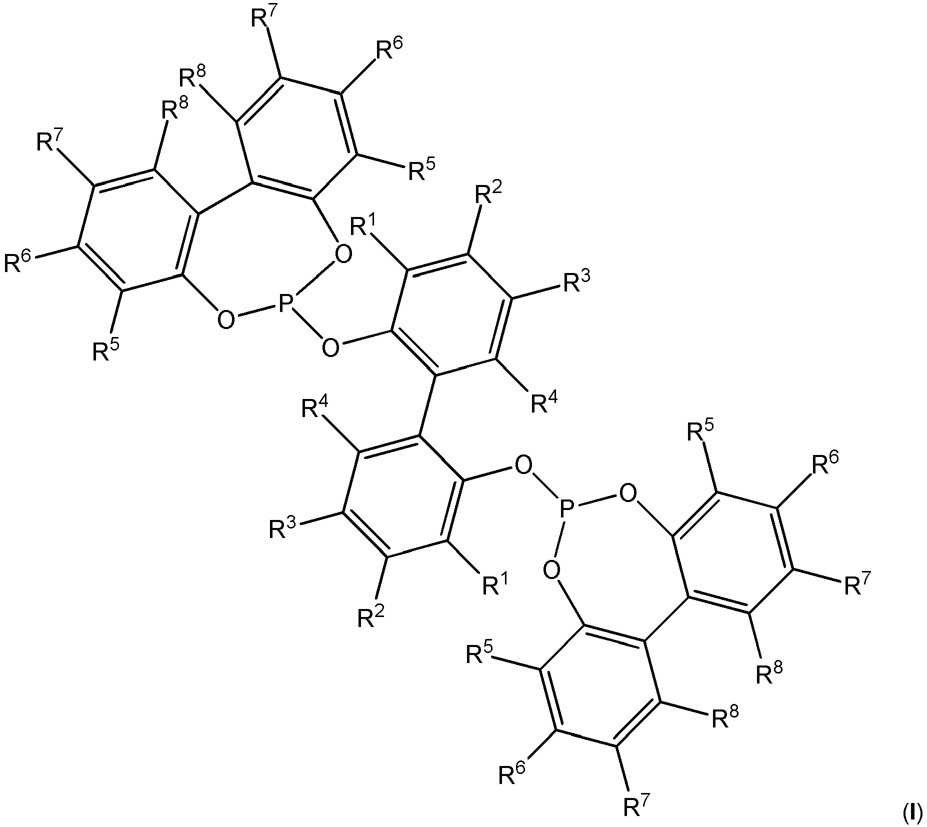

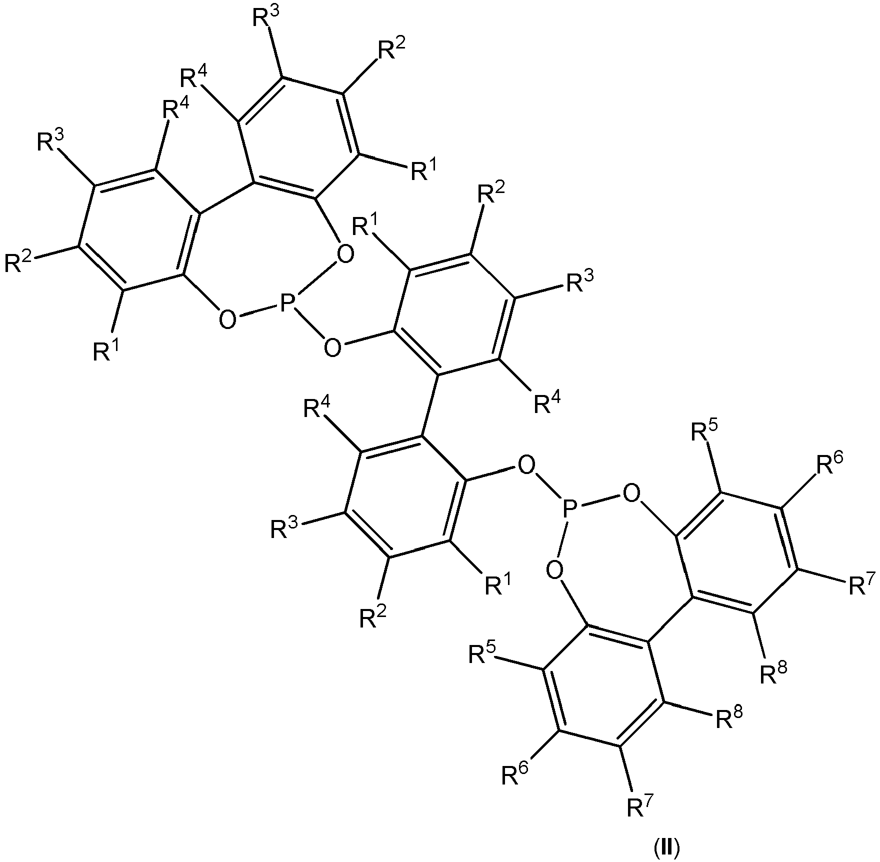

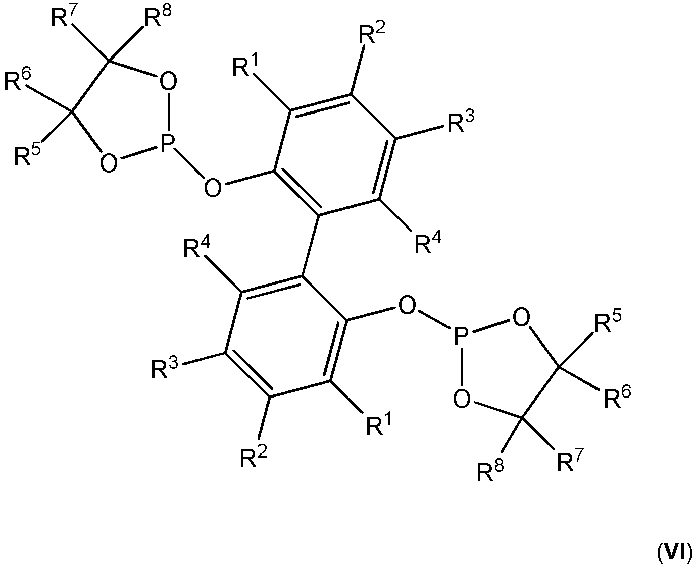

14. Verfahren nach einem der Ansprüche 1 bis 11,
wobei das Organobisphosphit eine der allgemeinen Formeln **I, II** oder **VI** aufweist: 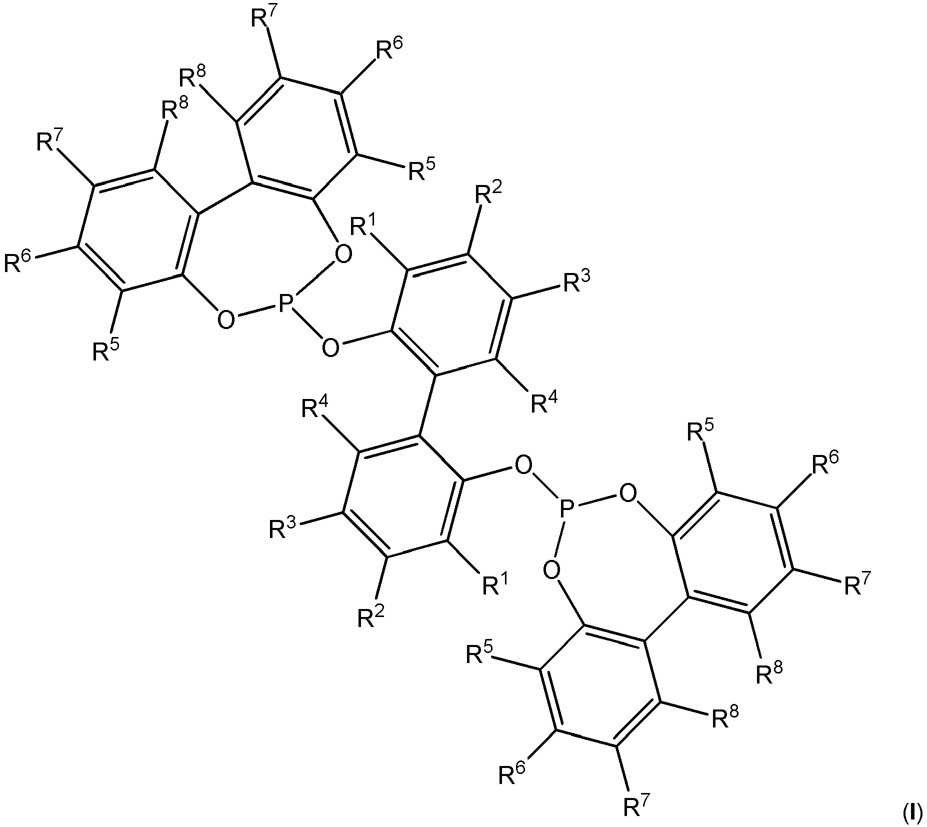 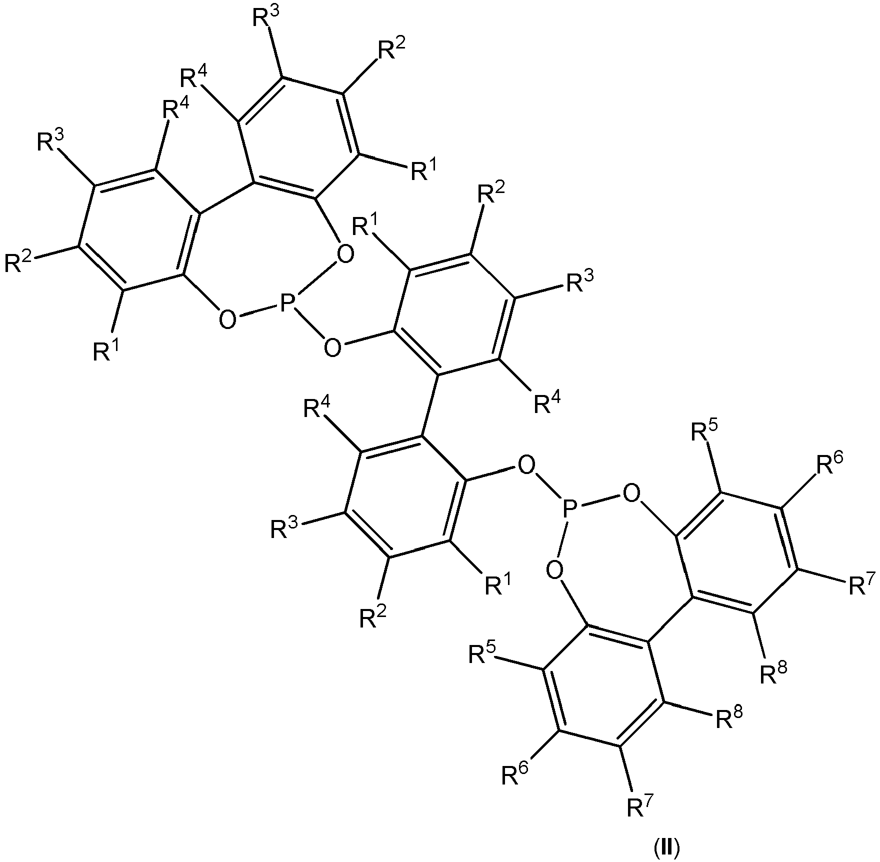 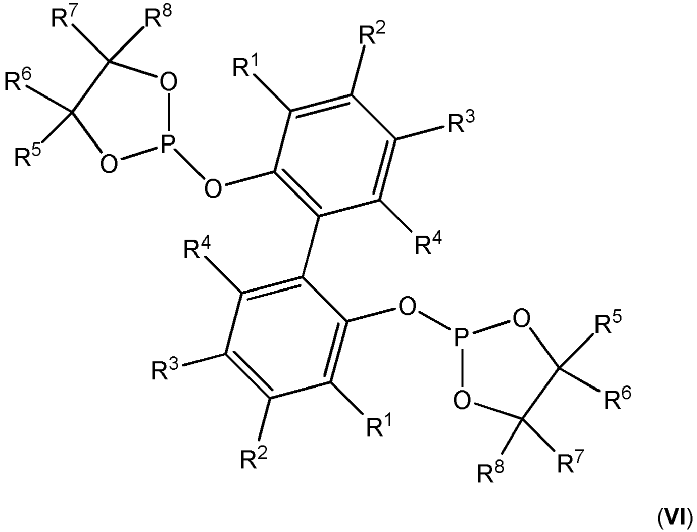 und wobei
R¹, R², R³, R⁴, R⁵, R⁶, R⁷, R⁸ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl.

## Claims

1. Process for reducing the chlorine content in an organobisphosphite of one of the general formulae **I, II, III, IV, V** and **VI:** 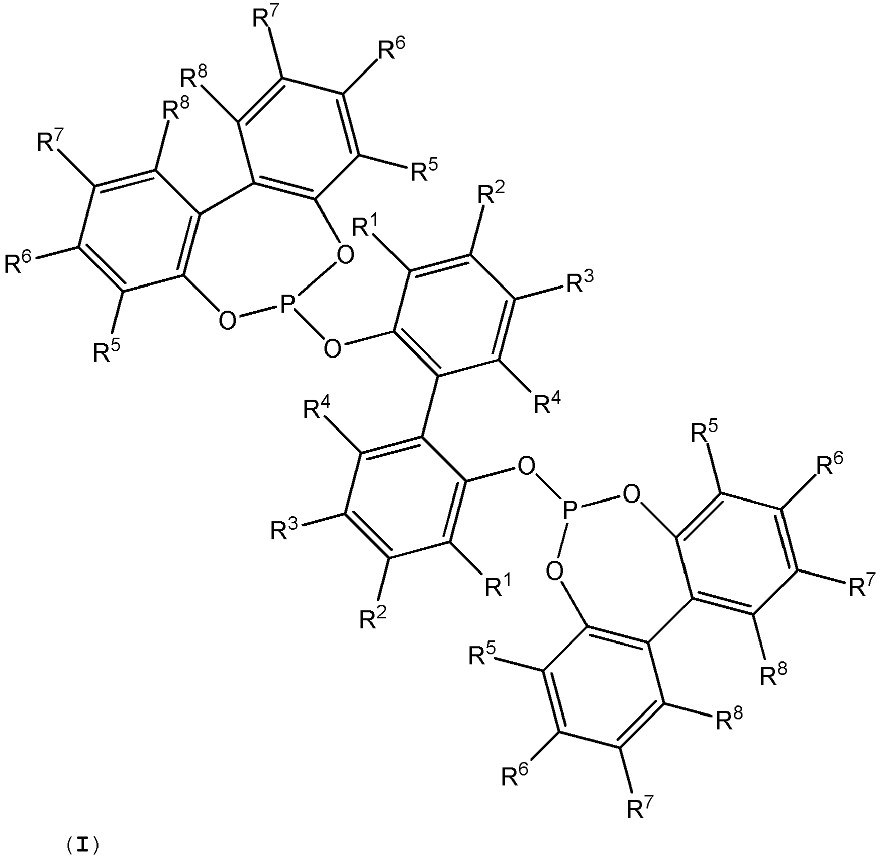 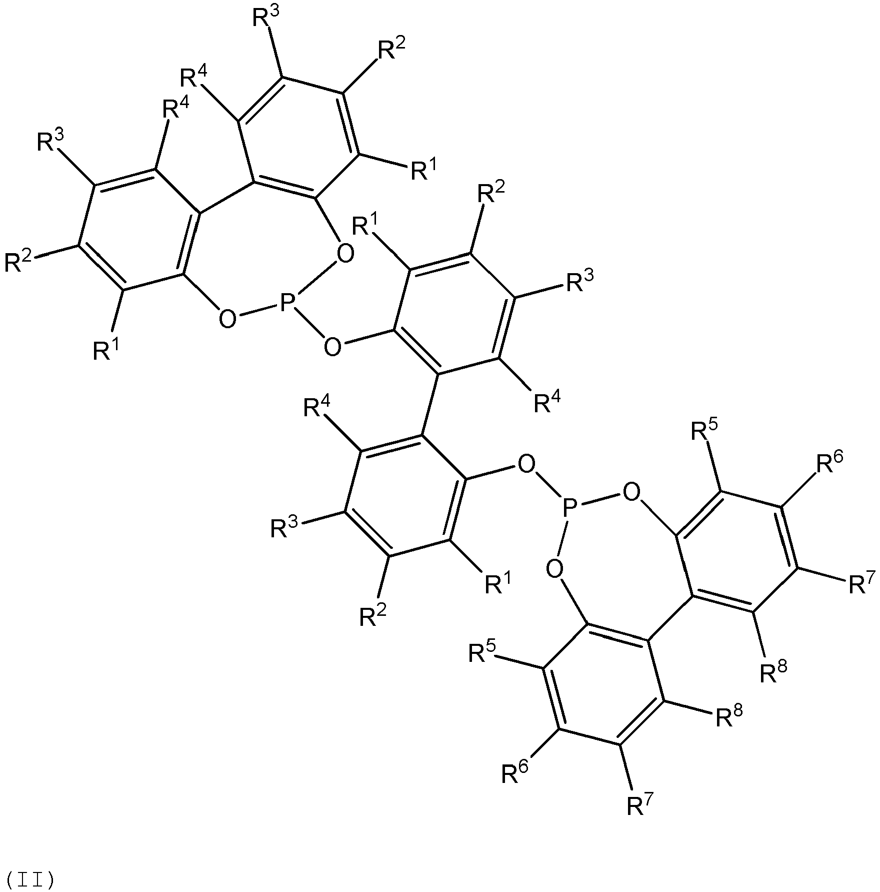 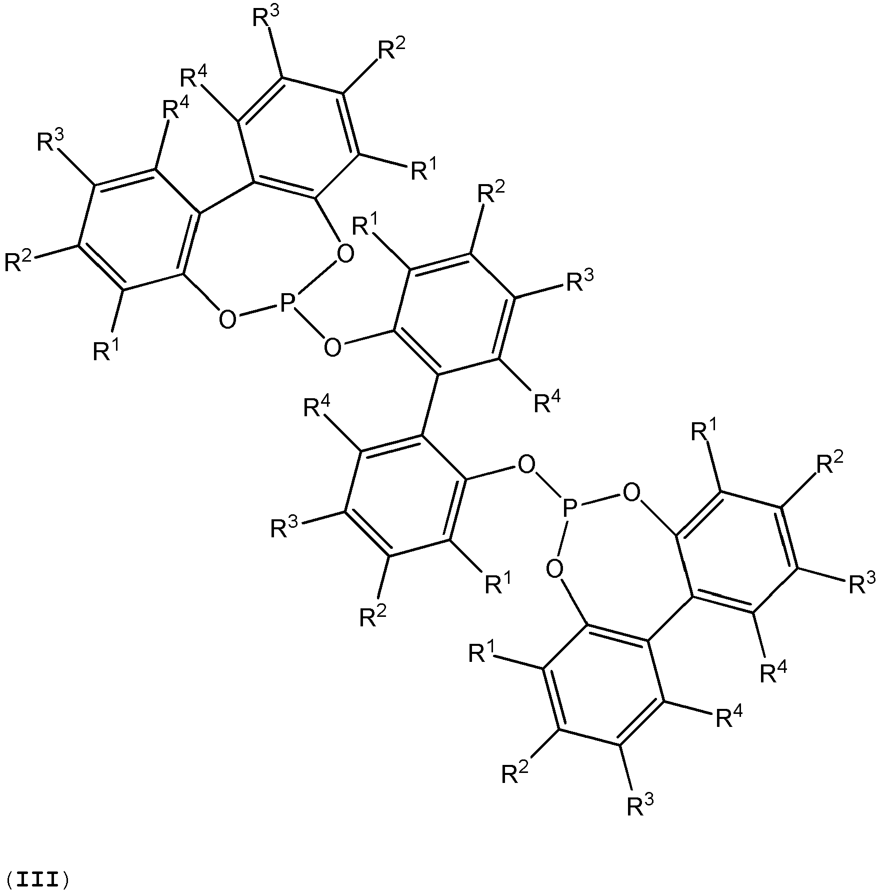 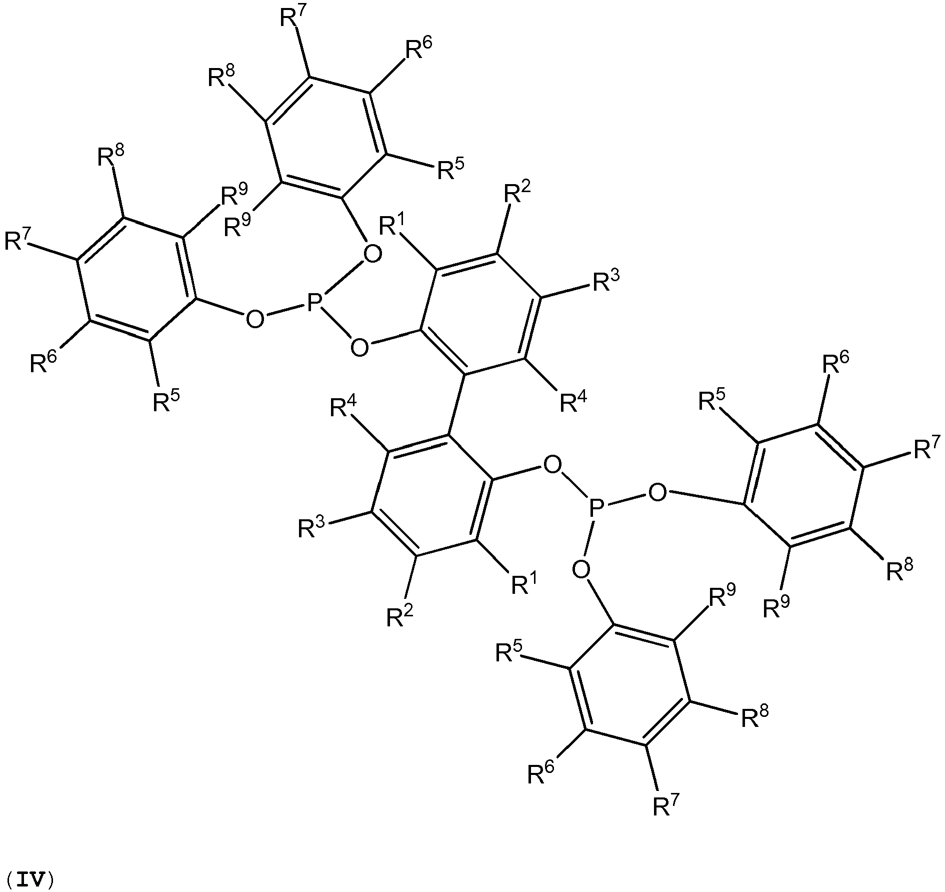 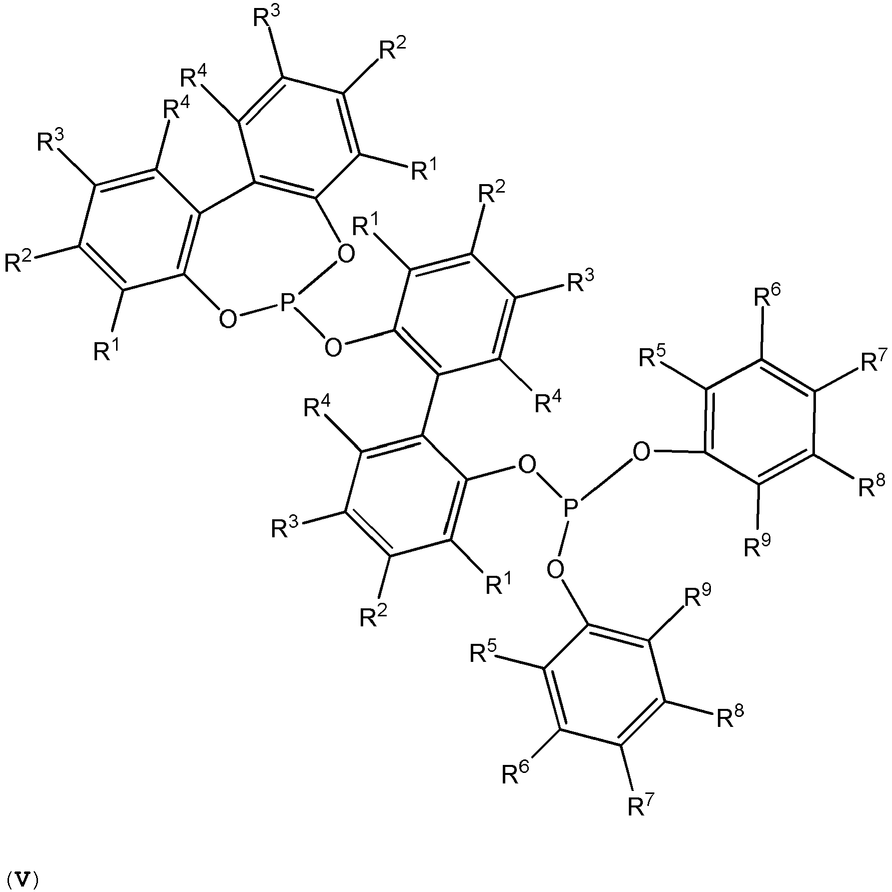 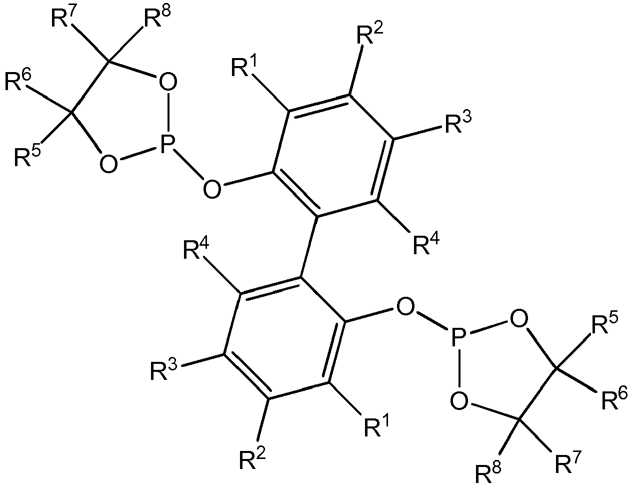 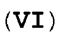 where
R¹, R², R³, R⁴, R⁵, R⁶, R⁷, R⁸, R⁹ are each independently selected from: -H, -(C₁-C₁₂)-alkyl, -O-(C₁-C₁₂)-alkyl,-O-(C₆-C₂₀)-aryl, -(C₆-C₂₀)-aryl, halogen, -COO-(C₁-C₁₂)-alkyl, -CONH-(C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl, -COOH,-OH, -SO₃H, -SO₃Na, -NO₂, -CN, -NH₂, -N[(C₁-C₁₂)-alkyl]₂; and the four following pairs of radicals are not both the same radical in all four pairs:
R¹ and R⁵, R² and R⁶, R³ and R⁷, R⁴ and R⁸;
comprising the process steps of:
a) partly or fully dissolving the organobisphosphite in a first solution,
b) introducing the first solution into a second solution, which results in precipitation of the purified organobisphosphite,
wherein
the first solution comprises a first solvent and a first base,
the second solution comprises a second solvent and a second base,
and
the first solvent is selected from:
aromatics, alcohols, acetone, ethyl acetate, acetonitrile, ethers,
the second solvent is selected from:
aromatics, C5-C10-alkanes, alcohols, acetone, ethyl acetate, acetonitrile, ethers,
the first base is selected from:
amine bases, alkoxides, pyridine, pyridine derivatives, N-methyl-2-pyrrolidone, triethanolamine,
the second base is selected from:
amine bases, alkoxides, pyridine, pyridine derivatives, N-methyl-2-pyrrolidone, triethanolamine,
and the organobisphosphite has better solubility in the first solvent than in the second solvent.

2. Process according to Claim 1,
wherein the first solvent is selected from: ethyl acetate, anisole, ortho-xylene, toluene. acetone, methanol, ethanol, propanol, isopropanol, acetonitrile.

3. Process according to either of Claims 1 and 2,
wherein the second solvent is selected from: ethyl acetate, anisole, ortho-xylene, toluene. acetone, methanol, ethanol, propanol, isopropanol, acetonitrile, tetrahydrofuran, diethyl ether, glycol, C5-C10-alkanes.

4. Process according to any of Claims 1 to 3,
wherein the first base is selected from: triethylamine, dimethylaminobutane, pentylamine, hexylamine, dibutylamine, N-methyl-2-pyrrolidone, triethanolamine, sodium methoxide, sodium ethoxide, pyridine, dimethylaminopyridine.

5. Process according to any of Claims 1 to 4,
wherein the second base is selected from: triethylamine, dimethylaminobutane, pentylamine, hexylamine, dibutylamine, N-methyl-2-pyrrolidone, triethanolamine, sodium methoxide, sodium ethoxide, pyridine, dimethylaminopyridine.

6. Process according to any of Claims 1 to 5,
wherein the second solution comprises a third solvent non-identical to the second solvent.

7. Process according to Claim 6,
wherein the third solvent is selected from: aromatics, alcohols, acetone, ethyl acetate, acetonitrile, ethers.

8. Process according to any of Claims 1 to 7,
wherein the organobisphosphite is dissolved fully in the first solution in process step a).

9. Process according to any of Claims 1 to 8,
wherein the first base and the second base are not the same base.

10. Process according to any of Claims 1 to 9,
wherein the organobisphosphite has a chlorine content of 1500 ppm to 100 000 ppm on introduction in process step b).

11. Process according to any of Claims 1 to 10,
wherein the second solution is heated to a temperature in the range from -20°C to 120°C before the first solution is introduced into the second solution in process step b).

12. Process according to any of Claims 1 to 11,
wherein the organobisphosphite has one of the general formulae **I, II, IV** and **VI:**

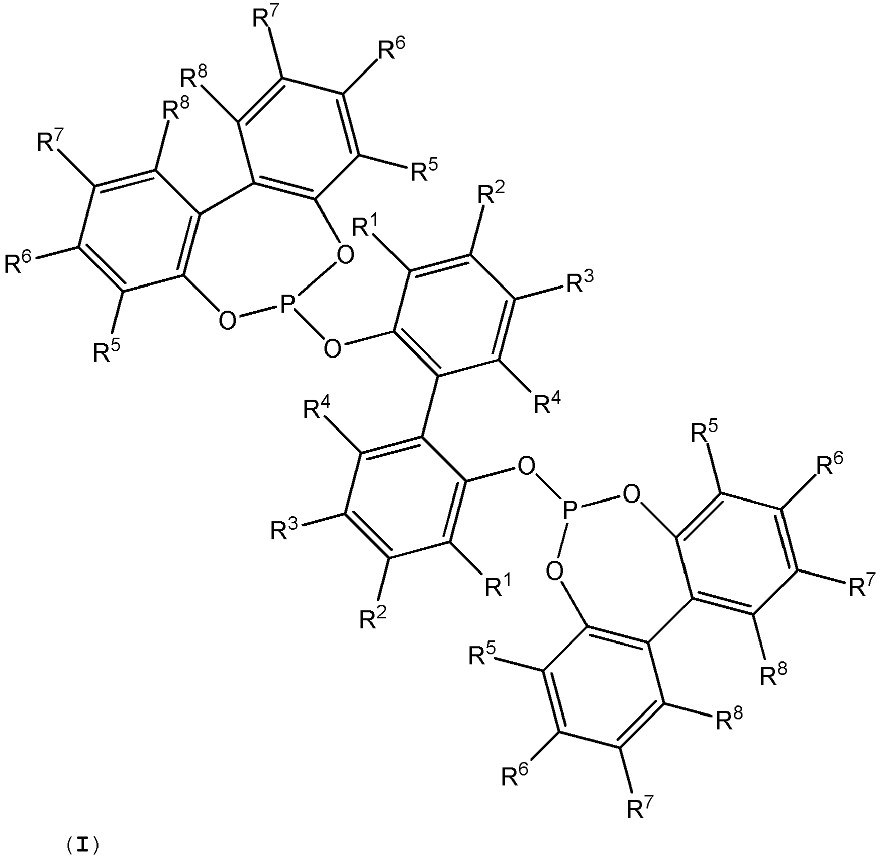

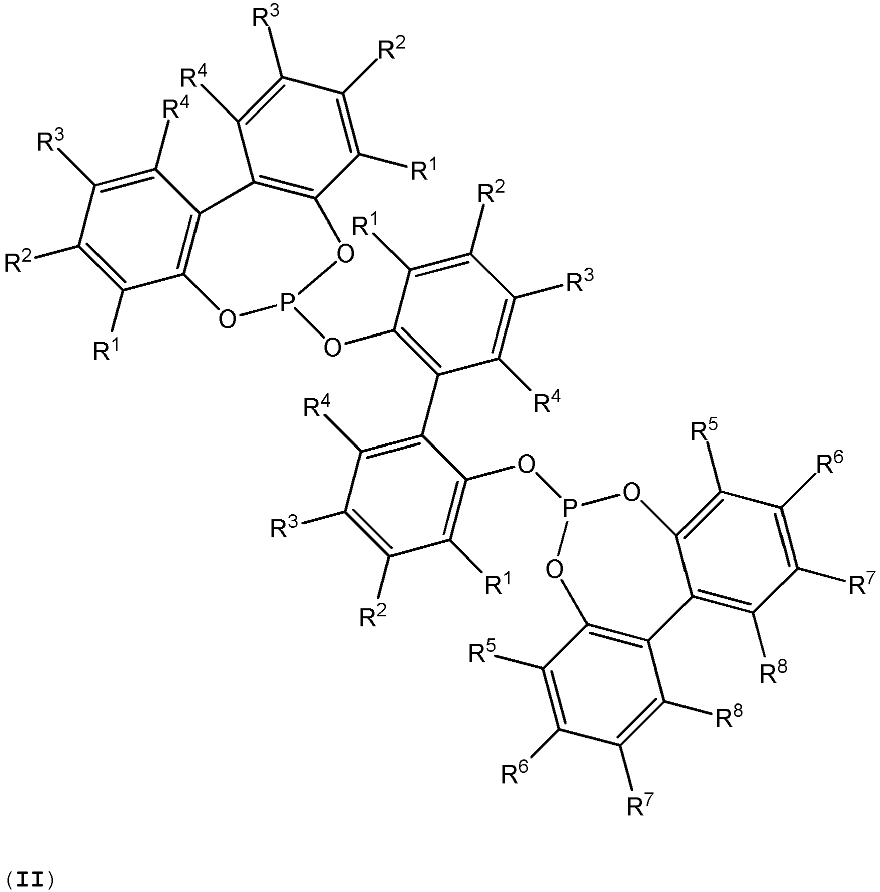

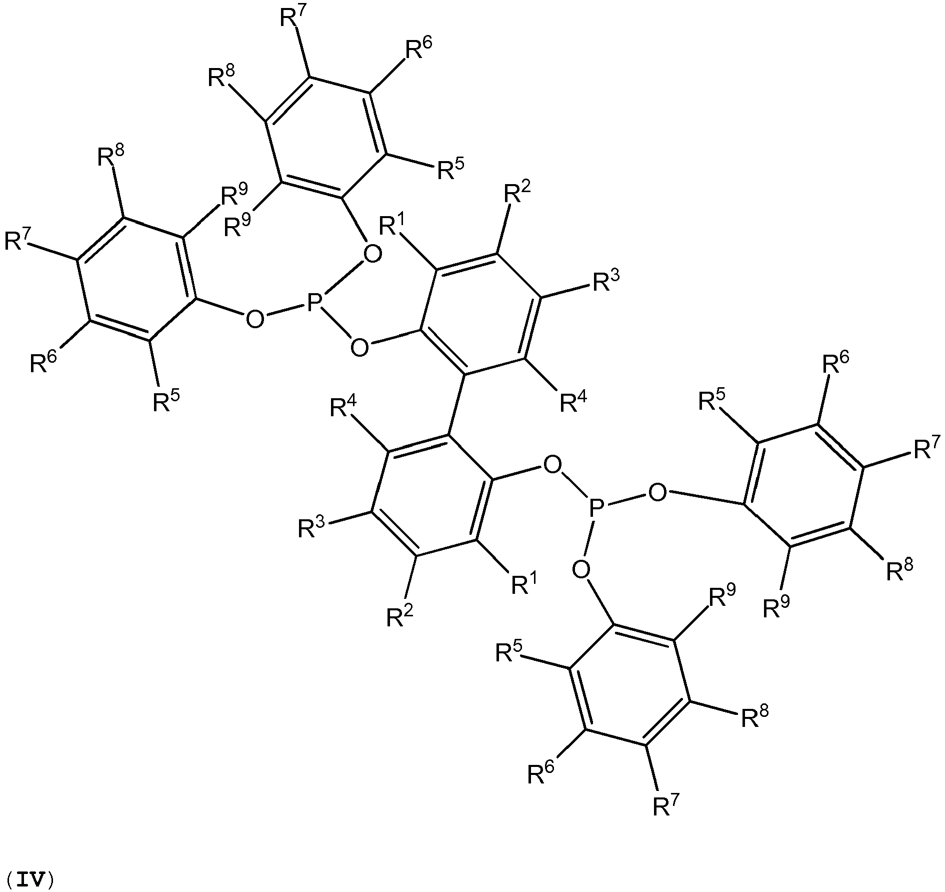

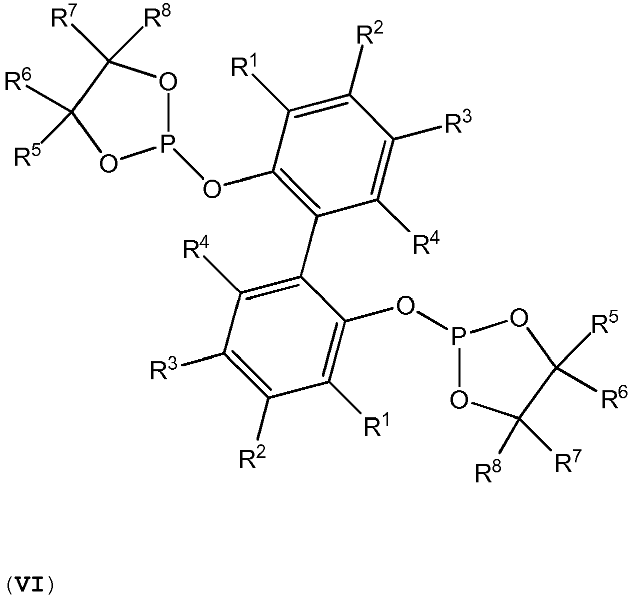

13. Process according to any of Claims 1 to 11,
wherein the organobisphosphite has one of the general formulae **I, II** and **VI:**

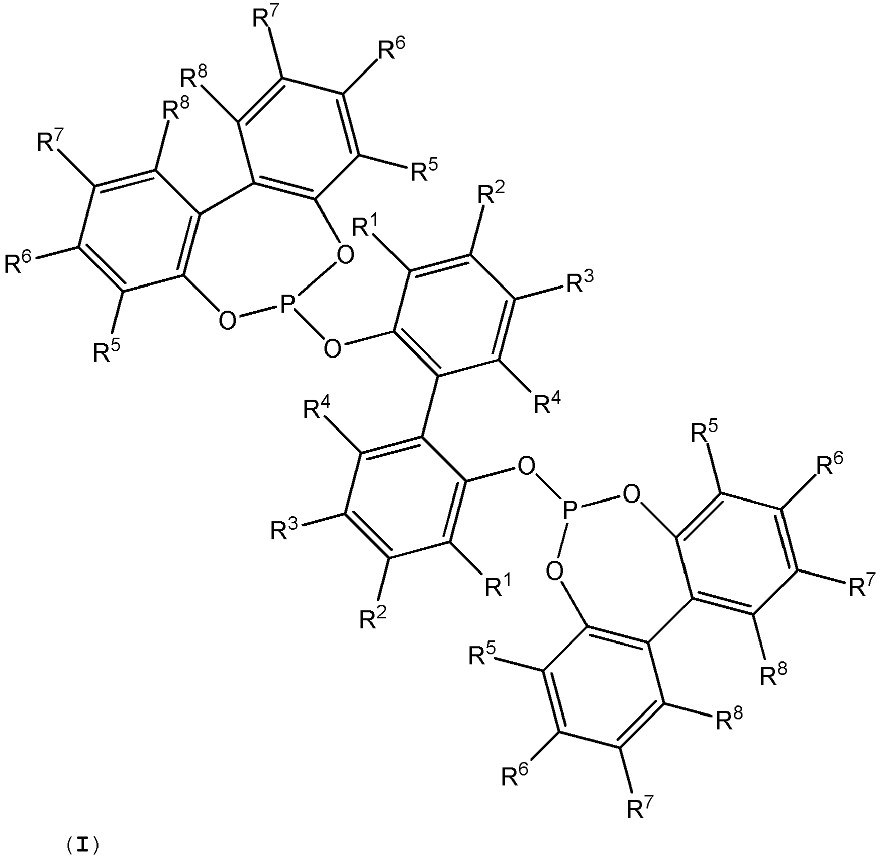

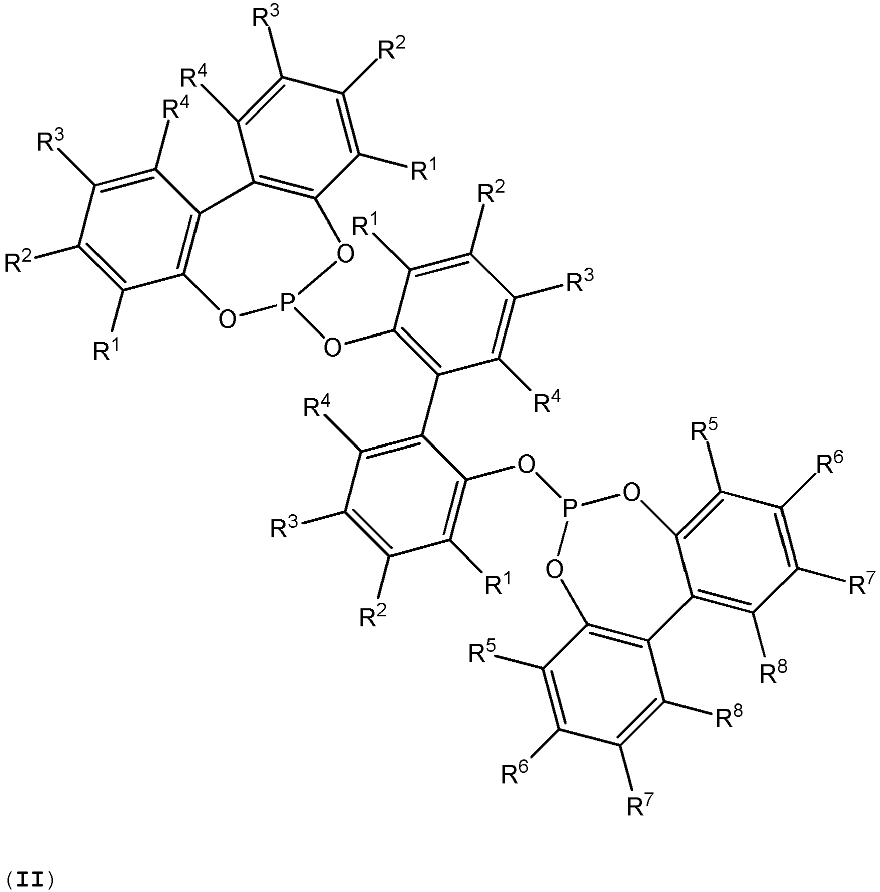

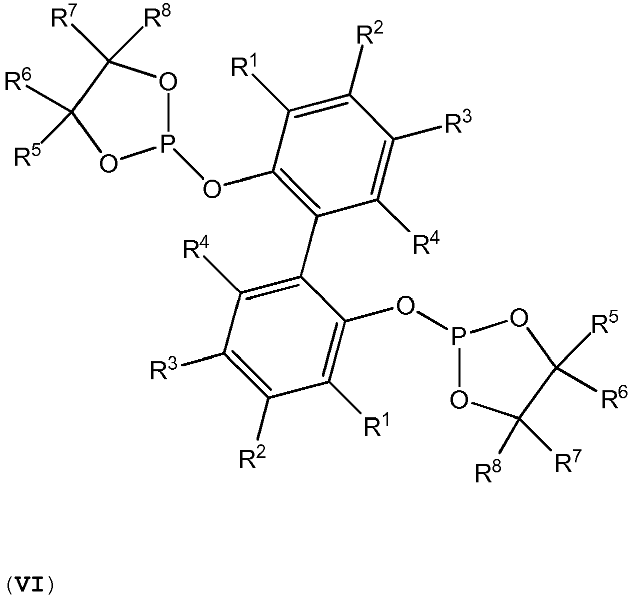

14. Process according to any of Claims 1 to 11,
wherein the organobisphosphite has one of the general formulae **I, II** and **VI:** 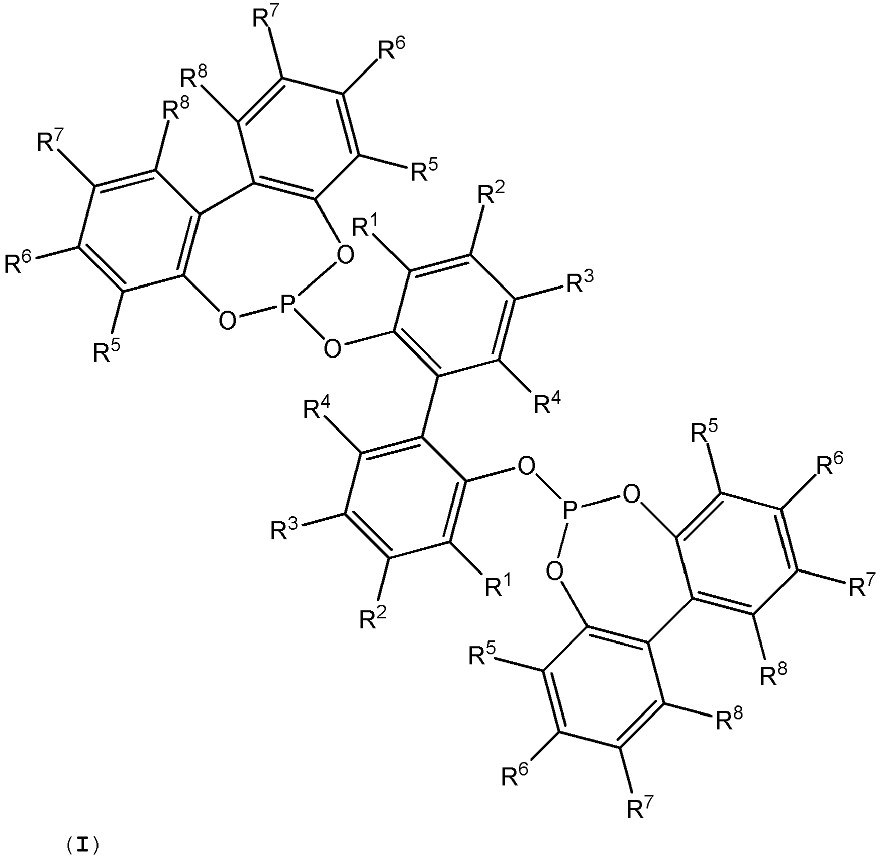 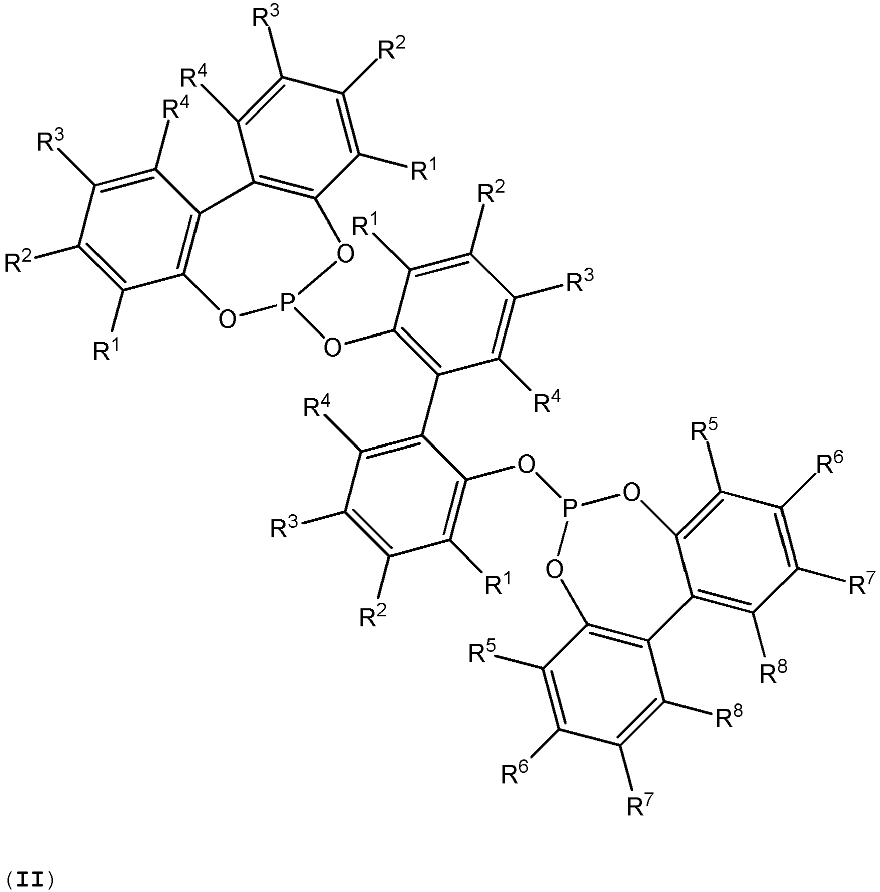 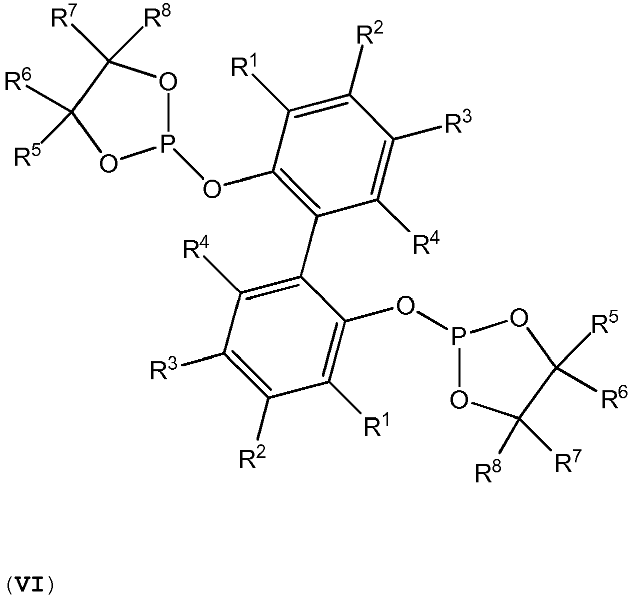 and where
R¹, R², R³, R⁴, R⁵, R⁶, R⁷, R⁸ are each independently selected from: -H, -(C₁-C₁₂)-alkyl, -O-(C₁-C₁₂)-alkyl,-O-(C₆-C₂₀)-aryl, -(C₆-C₂₀)-aryl.

## Revendications

1. Procédé de réduction de la teneur en chlore dans un organobisphosphite d'une des formules générales I, II, III, IV, V ou VI : 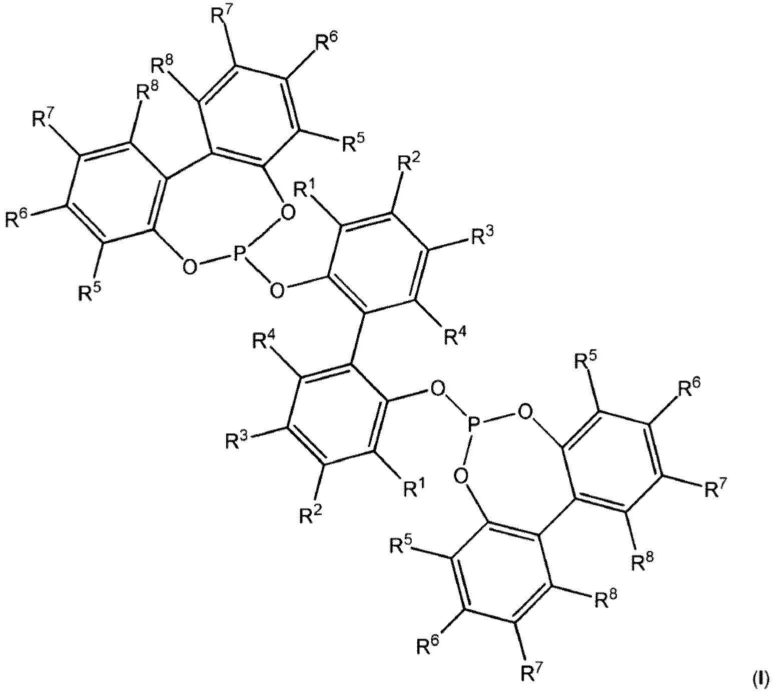 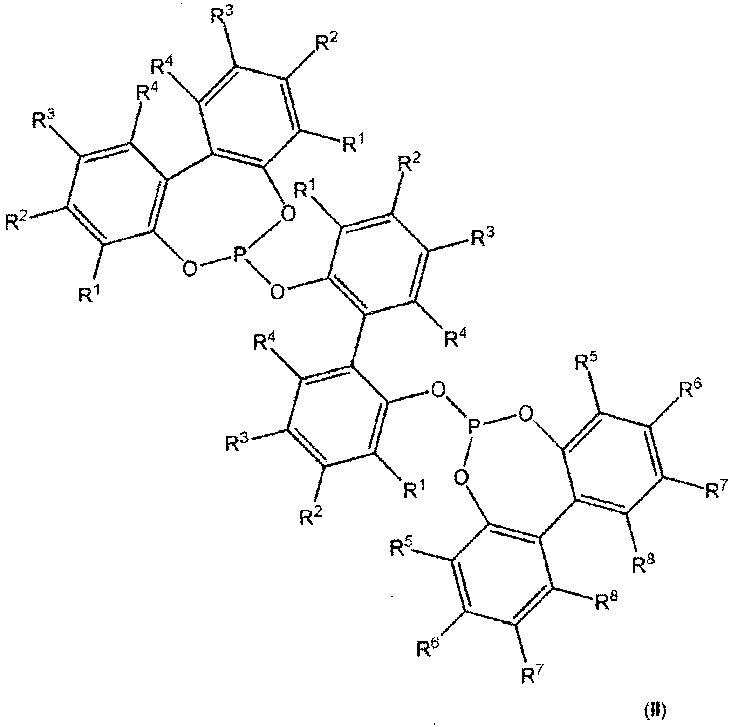 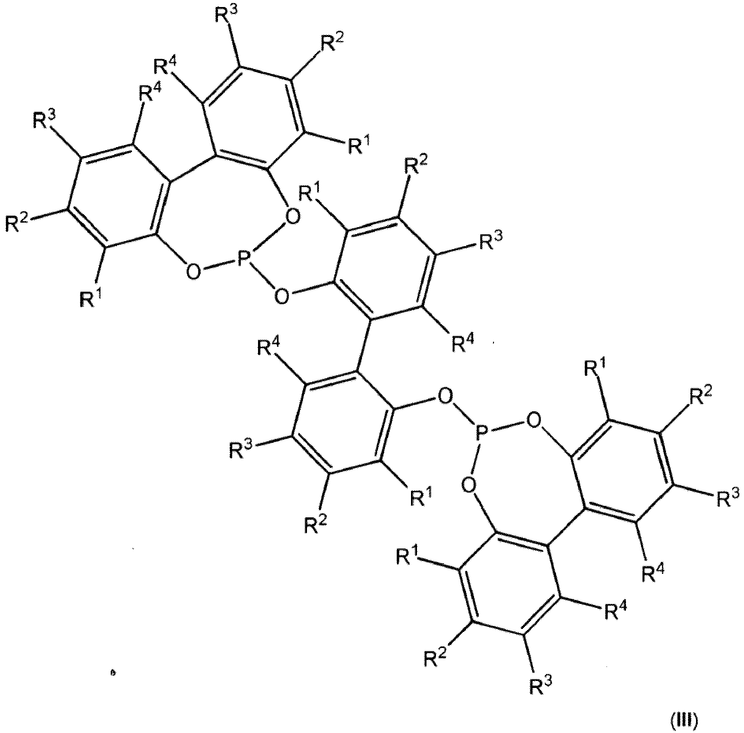 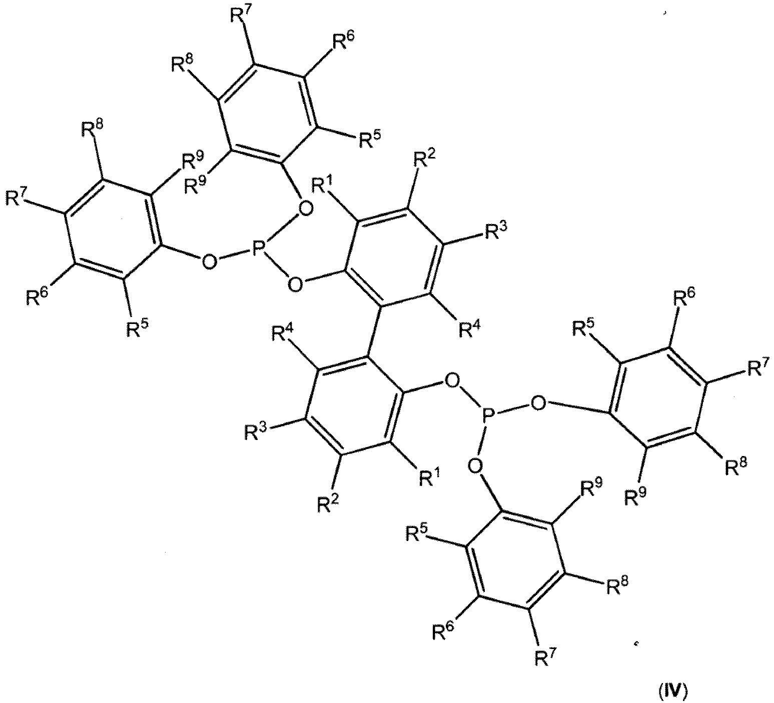 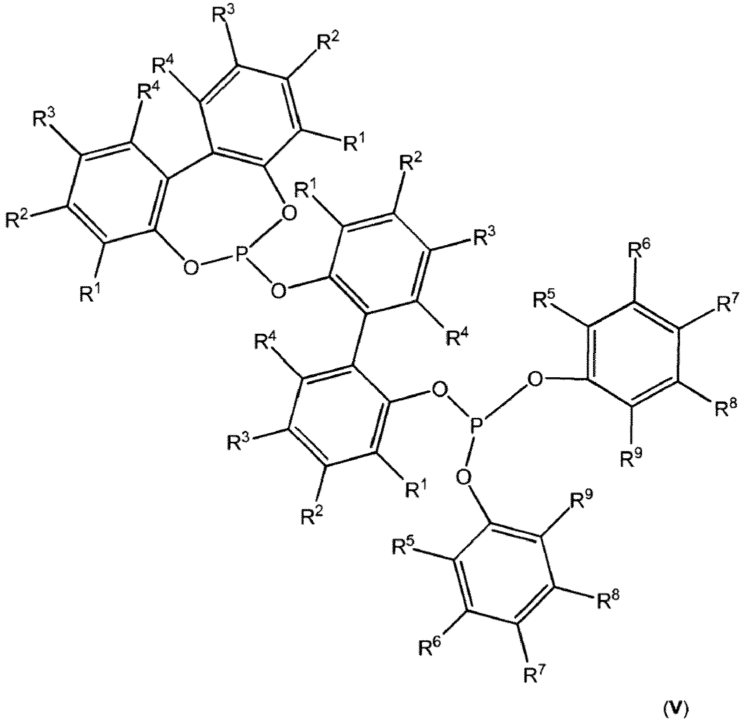 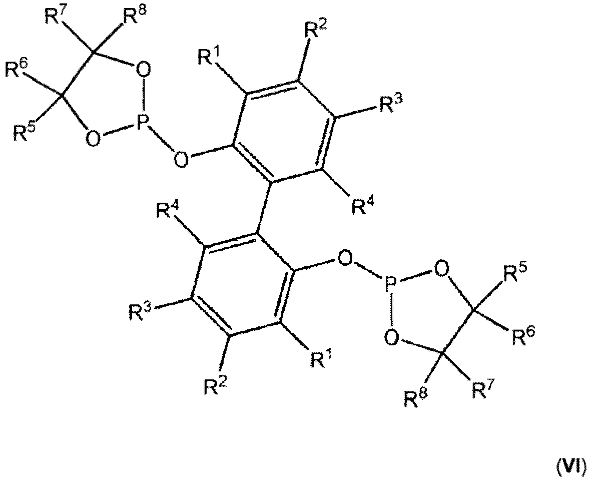 dans lesquelles
R¹, R², R³, R⁴, R⁵, R⁶, R⁷, R⁸, R⁹ sont chacun choisis indépendamment les uns des autres parmi : -H, alkyle en (C₁-C₁₂), -O-alkyle en (C₁-C₁₂), -O-aryle en (C₆-C₂₀), aryle en (C₆-C₂₀), halogène, -COO-alkyle en (C₁-C₁₂), -CONH-alkyle en (C₁-C₁₂), -aryle en (C₆-C₂₀) -CON [alkyle en (C₁-C₁₂)]₂, -CO-alkyle en (C₁-C₁₂), -CO-aryle en (C₆-C₂₀), - COOH, -OH, -SO₃H ; -SO₃Na, -NO₂, -CN, -NH₂, -N[alkyle en (C₁-C₁₂)]₂ ;
et les quatre paires de radicaux suivantes ne représentent pas toutes les quatre simultanément le même radical en paire :
R¹ et R⁵, R² et R⁶, R³ et R⁷, R⁴ et R⁸ ;
comprenant les étapes de procédé suivantes :
a) la dissolution partielle ou totale de l'organobisphosphite dans une première solution,
b) l'introduction de la première solution dans une deuxième solution, l'organobisphoshite purifié étant ainsi précipité,
la première solution comprenant un premier solvant et une première base,
et la deuxième solution comprenant un deuxième solvant et une deuxième base,
et
le premier solvant étant choisi parmi:
les composés aromatiques, les alcools, l'acétone, l'acétate d'éthyle, l'acétonitrile, les éthers,
le deuxième solvant étant choisi parmi :
les composés aromatiques, les alcanes en C5-C10, les alcools, l'acétone, l'acétate d'éthyle, l'acétonitrile, les éthers,
la première base étant choisie parmi :
les bases aminées, les alcoolates, la pyridine, les dérivés de pyridine, la N-méthyl-2-pyrrolidone, la triéthanolamine,
la deuxième base étant choisie parmi :
les bases aminées, les alcoolates, la pyridine, les dérivés de pyridine, la N-méthyl-2-pyrrolidone, la triéthanolamine,
et l'organobisphosphite se dissolvant mieux dans le premier solvant que dans le deuxième solvant.

2. Procédé selon la revendication 1, dans lequel le premier solvant est choisi parmi : l'acétate d'éthyle, l'anisole, l'ortho-xylène, le toluène, l'acétone, le méthanol, l'éthanol, le propanol, l'iso-propanol, l'acétonitrile.

3. Procédé selon l'une quelconque des revendications 1 ou 2, dans lequel le deuxième solvant est choisi parmi : l'acétate d'éthyle, l'anisole, l'ortho-xylène, le toluène, l'acétone, le méthanol, l'éthanol, le propanol, l'iso-propanol, l'acétonitrile, le tétrahydrofurane, l'éther diéthylique, le glycol, les alcanes en C5-C10.

4. Procédé selon l'une quelconque des revendications 1 à 3, dans lequel la première base est choisie parmi : la triéthylamine, le diméthylaminobutane, la pentylamine, l'hexylamine, la dibutylamine, la N-méthyl-2-pyrrolidone, la triéthanolamine, le méthanolate de sodium, l'éthanolate de sodium, la pyridine, la diméthylaminopyridine.

5. Procédé selon l'une quelconque des revendications 1 à 4, dans lequel la deuxième base est choisie parmi : la triéthylamine, le diméthylaminobutane, la pentylamine, l'hexylamine, la dibutylamine, la N-méthyl-2-pyrrolidone, la triéthanolamine, le méthanolate de sodium, l'éthanolate de sodium, la pyridine, la diméthylaminopyridine.

6. Procédé selon l'une quelconque des revendications 1 à 5, dans lequel la deuxième solution comprend un troisième solvant, qui n'est pas identique au deuxième solvant.

7. Procédé selon la revendication 6, dans lequel le troisième solvant est choisi parmi : les composés aromatiques, les alcools, l'acétone, l'acétate d'éthyle, l'acétonitrile, les éthers.

8. Procédé selon l'une quelconque des revendications 1 à 7, dans lequel l'organobisphosphite est entièrement dissous dans la première solution à l'étape de procédé a) .

9. Procédé selon l'une quelconque des revendications 1 à 8, dans lequel la première base et la deuxième base ne sont pas la même base.

10. Procédé selon l'une quelconque des revendications 1 à 9, dans lequel l'organobisphosphite présente lors de l'introduction à l'étape de procédé b) une teneur en chlore de 1 500 ppm à 100 000 ppm.

11. Procédé selon l'une quelconque des revendications 1 à 10, dans lequel la deuxième solution est portée à une température dans la plage allant de -20 °C à 120 °C avant que la première solution ne soit introduite dans la deuxième solution à l'étape de procédé b).

12. Procédé selon l'une quelconque des revendications 1 à 11, dans lequel l'organobisphosphite présente une des formules générales I, II, IV ou VI :

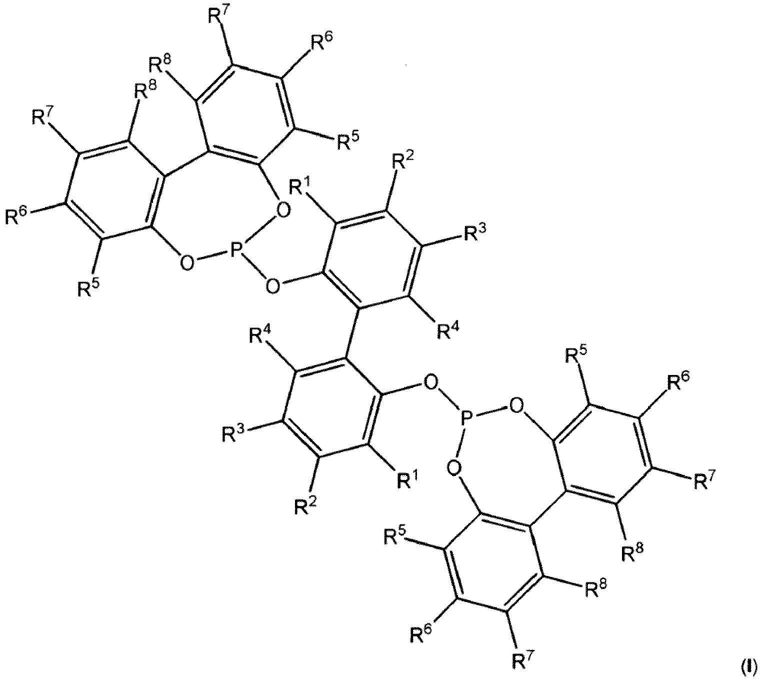

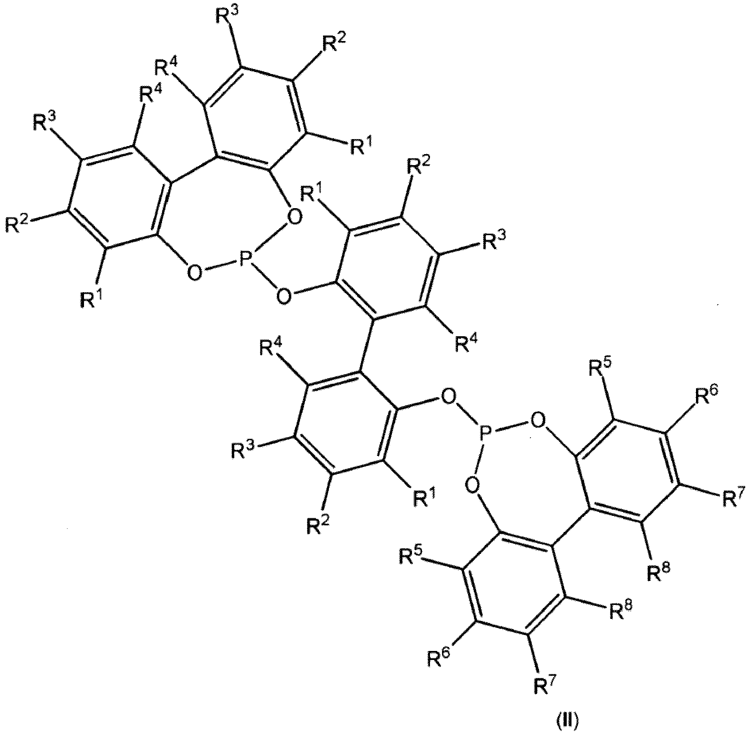

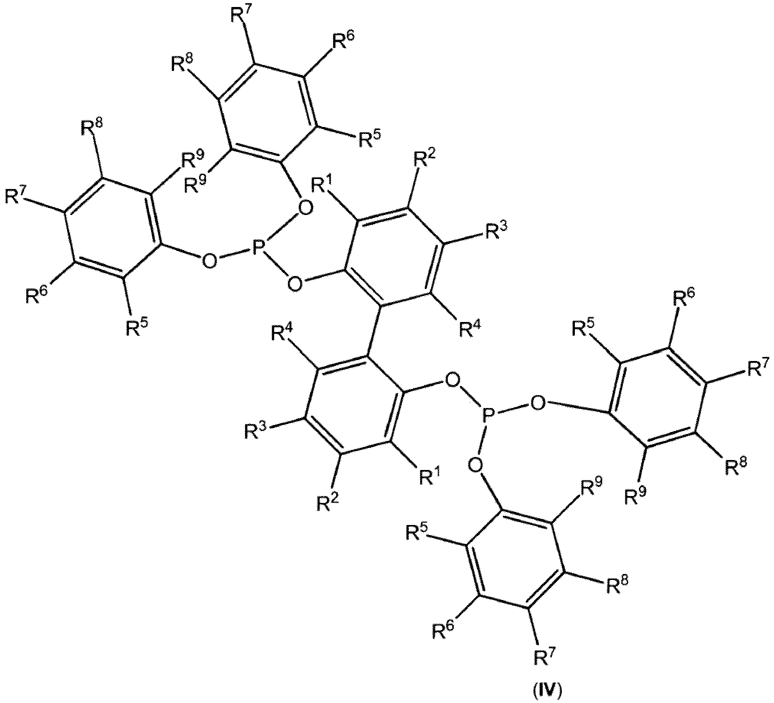

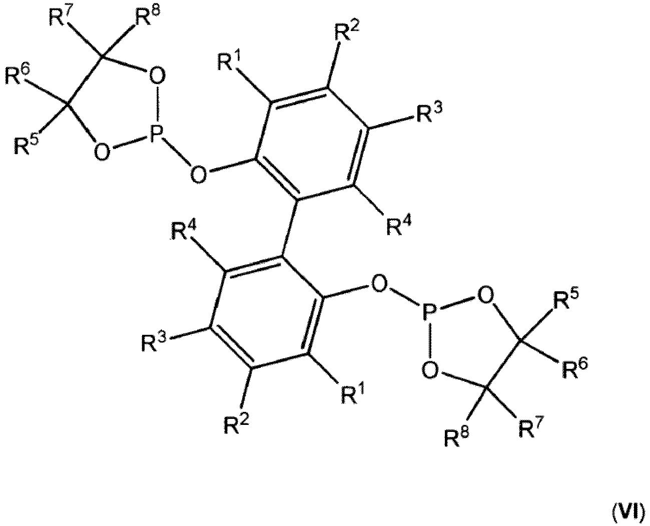

13. Procédé selon l'une quelconque des revendications 1 à 11, dans lequel l'organobisphosphite présente une des formules générales I, II ou VI :

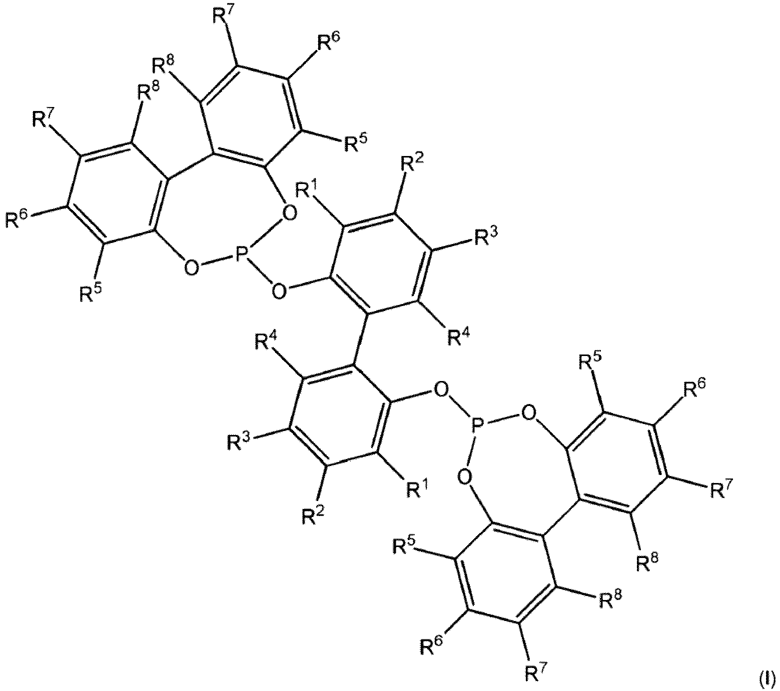

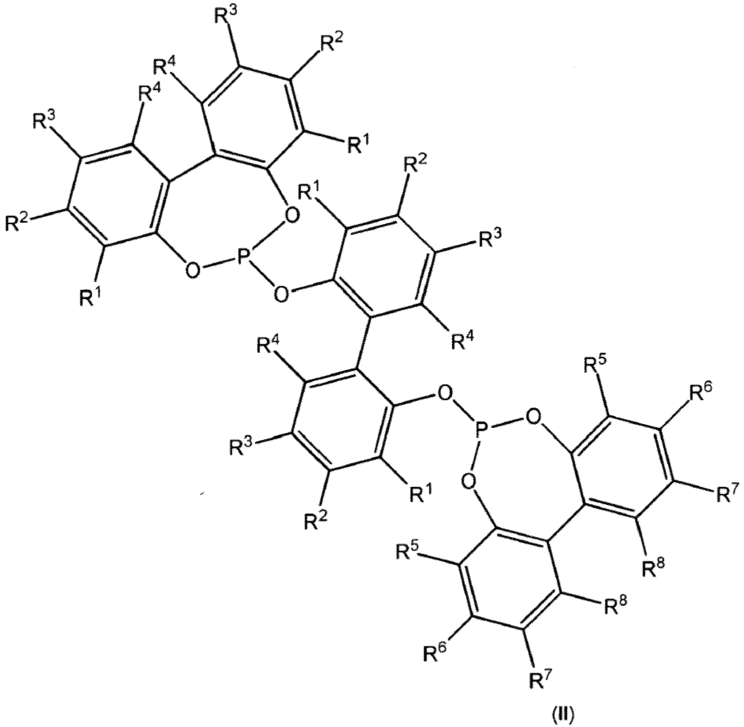

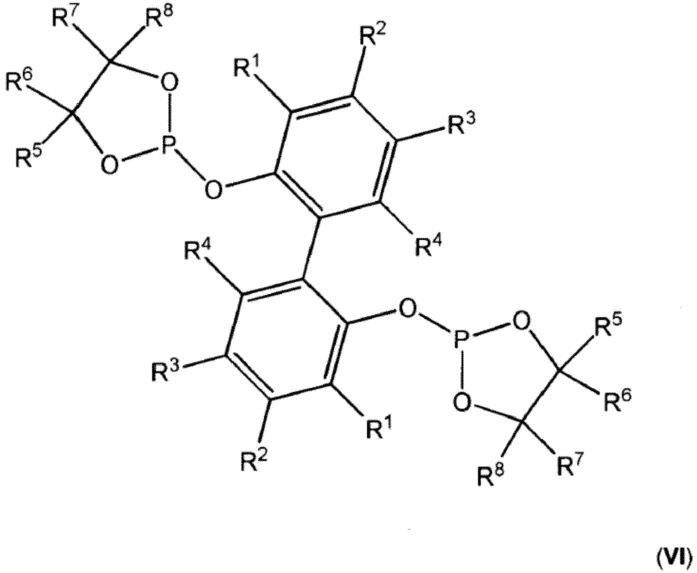

14. Procédé selon l'une quelconque des revendications 1 à 11, dans lequel l'organobisphosphite présente une des formules générales I, II ou VI : 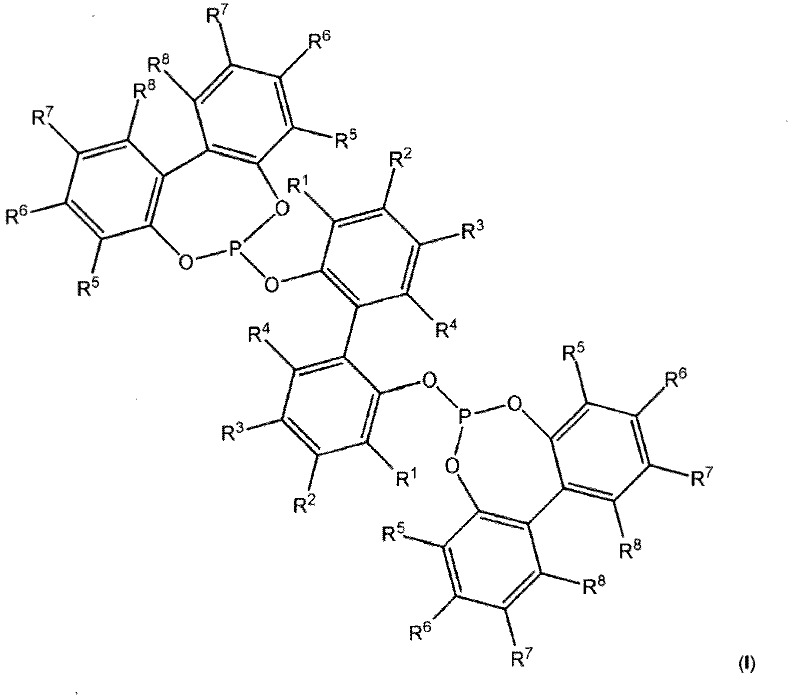 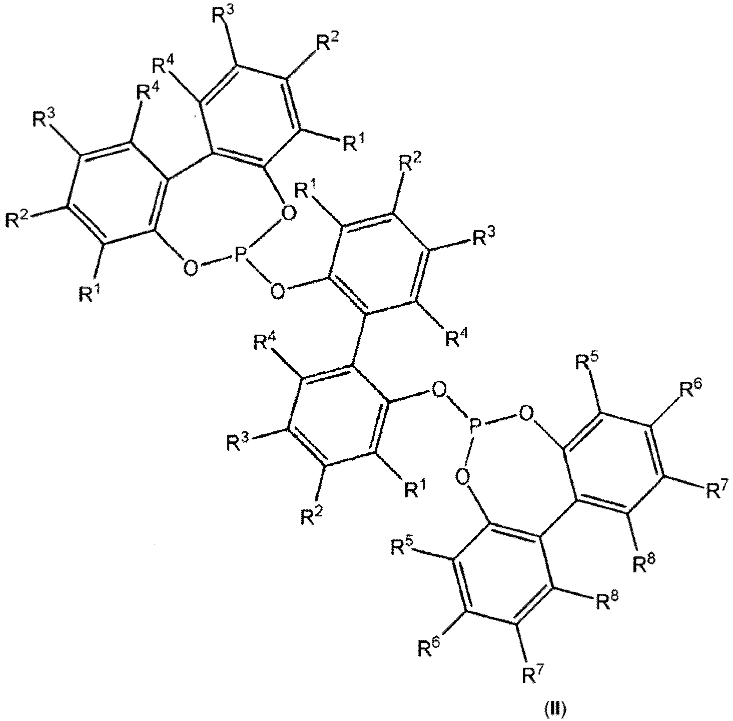 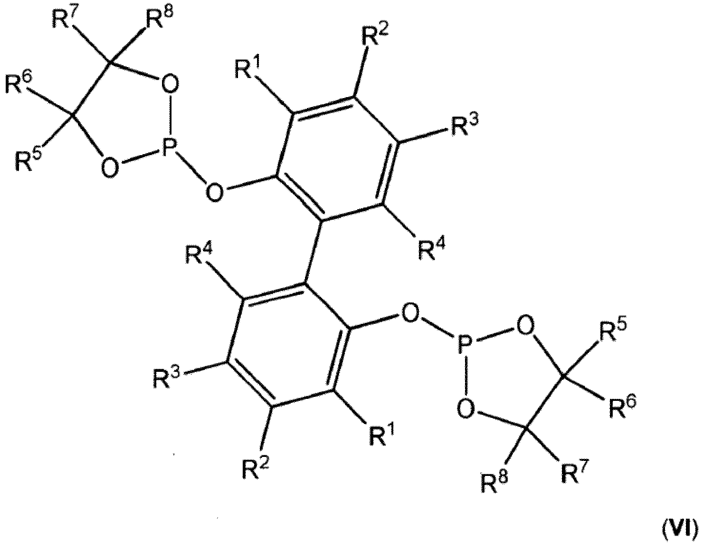 dans lesquelles R¹, R², R³, R⁴, R⁵, R⁶, R⁷, R⁸ sont chacun choisis indépendamment les uns des autres parmi : -H, alkyle en (C₁-C₁₂), -O-alkyle en (C₁-C₁₂), -O-aryle en (C₆-C₂₀), aryle en (C₆-C₂₀).
